(19)

Europäisches
Patentamt
European
Patent Office
Office européen
des brevets

(11) **EP 3 823 157 A1**

(12) **EUROPEAN PATENT APPLICATION**
published in accordance with Art. 153(4) EPC

(43) Date of publication:
**19.05.2021 Bulletin 2021/20**

(51) Int Cl.:
***H02P 6/185*** (2016.01)

(21) Application number: **19833021.9**

(22) Date of filing: **04.07.2019**

(86) International application number:
**PCT/JP2019/026739**

(87) International publication number:
**WO 2020/013084 (16.01.2020 Gazette 2020/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **13.07.2018   JP 2018133734**

(71) Applicant: **Hitachi, Ltd.**
**Tokyo 100-8280 (JP)**

(72) Inventors:
• **SAKAI, Toshifumi**
**Tokyo 100-8280 (JP)**

• **IWAJI, Yoshitaka**
**Tokyo 100-8280 (JP)**
• **KUNIHIRO, Naoki**
**Tokyo 100-8280 (JP)**
• **OTSUKA, Kuniaki**
**Tokyo 100-8280 (JP)**
• **SHINOMIYA, Takeshi**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **PERMANENT MAGNET SYNCHRONOUS MACHINE CONTROL DEVICE, ELECTRIC VEHICLE, AND METHOD OF DETERMINING MAGNETIC POLE POLARITY OF PERMANENT MAGNET SYNCHRONOUS MACHINE**

(57)    The purpose of the present invention is to make it possible to determine the polarity of a magnetic pole of a permanent magnet synchronous machine, irrespective of a decreasing or increasing characteristic of inductance due to a magnetic saturation phenomenon when a current is passed in a magnetic pole direction of the permanent magnet synchronous machine. This permanent magnet synchronous machine control device comprises a power converter which controls a permanent magnet synchronous machine, and a controller which controls the power converter. The controller is provided with: a voltage command generation unit which generates a voltage command for causing a desired current to flow through the permanent magnet synchronous machine; a current detection unit which detects a current that flows through the permanent magnet synchronous machine when the voltage command has been applied; and a magnetic pole position estimation unit which, on the basis of the current detected by the current detection unit, estimates the magnetic pole position of the permanent magnet synchronous machine. The magnetic pole position estimation unit is provided with a polarity determination unit which determines the polarity of a magnetic pole of the permanent magnet synchronous machine on the basis of the absolute value of an amount of change in the inductance value of the permanent magnet synchronous machine relative to an amount of change in the current detected by the current detection unit.

Fig. 1

**Description**

Technical Field

The present invention relates to a permanent magnet synchronous machine control device, an electric vehicle, and a method of determining the magnetic pole polarity of a permanent magnet synchronous machine.

Background Art

For example, a driving device for a permanent magnet synchronous machine which does not use a sensor that detects the rotor magnetic pole position of the permanent magnet synchronous machine uses the saliency of the inductance of the permanent magnet synchronous machine to estimate the rotor magnetic pole position when the driving device is started from the state where the permanent magnet synchronous machine stops or from the extremely low speed operation state where the counter electromotive voltage information of the permanent magnet synchronous machine becomes very small, thereby requiring the determination of the polarity of a magnetic pole.

Regarding a method of determining the polarity of the magnetic pole for estimating a magnetic pole direction of the permanent magnet synchronous machine, a polarity determination method using a magnetic saturation phenomenon of the permanent magnet synchronous machine has typically been known, and is disclosed in, for example, Patent Literatures 1 and 2.

Patent Literature 1 discloses a technique in which a DC bias current having a constant waveform alternately switched to be positive/negative symmetric is superimposed with respect to the magnetic pole direction of the permanent magnet synchronous machine, and the magnetic pole direction of an N-pole or an S-pole of a permanent magnet is determined from the relationship between the application voltage and the current change rate in the magnetic pole direction at the positive/negative switching timing of the DC bias current.

Patent Literature 2 discloses a technique in which when a current is made to flow at the same predetermined current value in a positive direction and a negative direction, with the positive direction being a current direction in which the relationship between the inductance and the current in the magnetic pole direction intensifies the magnetic flux of a magnet, it is determined that the side in which the inductance in the magnetic pole direction increases is an N-pole side.

Citation List

Patent Literature

Patent Literature 1: Japanese Unexamined Patent Application Publication No. 2008-79489
Patent Literature 2: Patent No. 5976421

Summary of Invention

Technical Problem

However, the technique disclosed in Patent Literature 1 determines the polarity of the magnetic pole of the permanent magnet synchronous machine from the application voltage and the current change rate of the DC bias current superimposed in the magnetic pole direction, and its method of determining the polarity of the magnetic pole estimates the magnetic pole direction by using the fact that the inductance in a magnet magnetic flux direction monotonically decreases relative to the increase in current in an N-pole direction of the magnetic pole of the permanent magnet synchronous machine. That is, the technique determines that the side in which the inductance relative to the change in current in the magnetic pole direction decreases is the N-pole side. Thus, when the permanent magnet synchronous machine has an inductance characteristic such that the inductance in the magnet magnetic flux direction does not monotonically decrease, but has a maximum point, relative to the increase in current in the N-pole direction, the driving system for the permanent magnet synchronous machine fails in the determination of the polarity of the magnetic pole and cannot be started, or the current which is made to flow at determining the polarity is required to be increased further in the N-pole direction with respect to the maximum point, to the point at which the inductance characteristic in the magnet magnetic flux direction monotonically decreases, with the result that there is a problem that the loss and noise of the driving system for the permanent magnet synchronous machine are increased.

Also, the technique disclosed in Patent Literature 2 determines the polarity of the magnetic pole of the permanent magnet synchronous machine from the magnitude of the inductance and the current amplitude when the current is made to flow at the same predetermined current value in the magnetic pole direction, and its method of determining the polarity of the magnetic pole estimates the magnetic pole direction by using the fact that the inductance in the magnet magnetic flux direction has the maximum point relative to the increase in current in the N-pole direction of the magnetic pole of the permanent magnet synchronous machine. That is, the technique determines that the side in which the inductance relative to the change in current in the magnetic pole direction increases is the N-pole side. Consequently, the technique is not applicable when the permanent magnet synchronous machine has a characteristic in which the inductance in the magnet magnetic flux direction does not have the maximum point relative to the increase in current in the N-pole direction, with the result that it is necessary to previously grasp whether or not the inductance characteristic of the permanent magnet synchronous machine to be driven has the maximum point of the inductance enough to perform the determination of the polarity of the magnetic pole.

Therefore, the method of determining the polarity of the magnetic pole of the conventional art can cause the problem that the loss and noise of the driving system for the permanent magnet synchronous machine are increased, or that the driving system for the permanent magnet synchronous machine fails in starting to reversely rotate the permanent magnet synchronous machine, for example, when like a general-purpose power conversion device, the inductance characteristic of the permanent magnet synchronous machine to be driven is unknown, when the large-and-small determination value of the inductance of the device for determining the polarity of the magnetic pole is incorrectly set, and when the different permanent magnet synchronous machine is incorrectly connected.

Also, the magnetic saturation characteristic of the permanent magnet synchronous machine used for determining the polarity can be greatly changed when the temperature of the permanent magnet is changed or irreversible demagnetization occurs in the magnet, and even in the same permanent magnet synchronous machine, these change factors can reverse, on the basis of the large-and-small relationship, the change in current in the N-pole direction (magnetic pole direction) and the change in current in the S-pole direction, and can reverse, on the basis of the large-and-small relationship, the inductance in the N-pole direction (magnetic pole direction) and the inductance in the S-pole direction, with the result that the polarity of the magnetic pole can be incorrectly determined.

In view of the above problems, an object of the present invention is to provide a permanent magnet synchronous machine control device, an electric vehicle, and a method of determining the magnetic pole polarity of a permanent magnet synchronous machine, which make it possible to determine the polarity of a magnetic pole of the permanent magnet synchronous machine, irrespective of a decreasing or increasing characteristic of inductance due to a magnetic saturation phenomenon when a current is passed in a magnetic pole direction of the permanent magnet synchronous machine.

Solution to Problem

To solve such problems, in the present invention, the polarity of a magnetic pole of a permanent magnet synchronous machine is determined on the basis of the absolute value of an amount of change in the inductance value of the permanent magnet synchronous machine relative to an amount of change in a current detected by a current detection unit.

Advantageous Effects of Invention

According to the present invention, the polarity of the magnetic pole of the permanent magnet synchronous machine can be determined, irrespective of the decreasing or increasing characteristic of the inductance on the N-pole side due to the magnetic saturation phenomenon of the permanent magnet synchronous machine, since the amount of change in the inductance value on the N-pole side of the permanent magnet synchronous machine is larger than the amount of change in the inductance value on the S-pole side of the permanent magnet synchronous machine, when the current is passed in the magnetic pole direction of the permanent magnet synchronous machine.

Brief Description of Drawings

Fig. 1 is a block diagram illustrating the configuration example of a permanent magnet synchronous machine driving system of a first embodiment;
Fig. 2 is a diagram illustrating the definitions of coordinate systems and symbols used in the control of a permanent magnet synchronous machine of the first embodiment;
Fig. 3 is a block diagram illustrating the configuration example of a position and speed estimation calculation unit of the first embodiment;
Fig. 4 is a block diagram illustrating the configuration example of a magnetic pole polarity determination unit of the first embodiment;

Fig. 5 is a block diagram illustrating the configuration example of a superimposition voltage calculation unit of the first embodiment;

Fig. 6 is a block diagram illustrating the configuration example of an AC voltage component application unit of the first embodiment;

Figs. 7(a) to 7(h) are graphs illustrating the relationships between the SW operations and the output voltage waveforms of the superimposition voltage calculation unit of the first embodiment;

Figs. 8(a) to 8(f) are graphs illustrating the input signals and the current detection points of a d-axis current of the magnetic pole polarity determination unit of the first embodiment;

Fig. 9 is a graph illustrating inductance values outputted by an inductance calculation unit of the first embodiment in the permanent magnet synchronous machine which has a characteristic such that inductance in a magnet magnetic flux direction monotonically decreases relative to the increase in current in an N-pole direction;

Fig. 10 is a graph illustrating the inductance values outputted by the inductance calculation unit of the first embodiment in the permanent magnet synchronous machine which has a characteristic such that inductance in the magnet magnetic flux direction has a maximum point to monotonically decrease, relative to the increase in current in the N-pole direction;

Figs. 11(a) to 11(f) are graphs illustrating the initial magnetic pole position estimation flow of the permanent magnet synchronous machine;

Figs. 12(a) to 12(e) are graphs illustrating the simulation results of the initial magnetic pole position estimation using a polarity determination method of a conventional art;

Figs. 13(a) to 13(e) are graphs illustrating the simulation results of the initial magnetic pole position estimation using a polarity determination method of the first embodiment;

Fig. 14 is a block diagram illustrating the configuration example of the AC voltage component application unit of a second embodiment;

Figs. 15(a) to 15(h) are graphs illustrating the relationships between the SW operations and the output voltage waveforms of the superimposition voltage calculation unit of the second embodiment;

Figs. 16(a) to 16(f) are graphs illustrating the input signals and the current detection points of the d-axis current of the magnetic pole polarity determination unit of the second embodiment;

Fig. 17 is a block diagram illustrating the configuration example of the magnetic pole polarity determination unit of a third embodiment;

Figs. 18(a) to 18(f) are graphs illustrating the input signals and the current detection points of the d-axis current of the magnetic pole polarity determination unit of the third embodiment;

Fig. 19 is a graph illustrating inductance values outputted by the inductance calculation unit of the third embodiment in the permanent magnet synchronous machine which has the characteristic such that the inductance in the magnet magnetic flux direction has the maximum point to monotonically decrease, relative to the increase in current in the N-pole direction;

Fig. 20 is a block diagram illustrating the configuration example of the superimposition voltage calculation unit of a fourth embodiment;

Fig. 21 is a block diagram illustrating the configuration example of a DC voltage component application unit of the fourth embodiment;

Figs. 22(a) to 22(i) are graphs illustrating the relationships between the SW operations and the output voltage waveforms of the superimposition voltage calculation unit of the fourth embodiment;

Figs. 23(a) to 23(h) are graphs illustrating the input signals and the current detection points of the d-axis current of the magnetic pole polarity determination unit of the fourth embodiment;

Fig. 24 is a block diagram illustrating the configuration example of the superimposition voltage calculation unit of a fifth embodiment;

Fig. 25 is a block diagram illustrating the configuration example of the magnetic pole polarity determination unit of the fifth embodiment;

Fig. 26 is a block diagram illustrating the configuration example of the DC voltage component application unit of the fifth embodiment;

Figs. 27(a) to 27(i) are graphs illustrating the relationships between the SW operations and the output voltage waveforms of the superimposition voltage calculation unit of the fifth embodiment;

Figs. 28(a) to 28(h) are graphs illustrating the input signals and the current detection points of the d-axis current of the magnetic pole polarity determination unit of the fifth embodiment;

Figs. 29(a) to 29(i) are graphs illustrating the input signals and the current detection points of the d-axis current of the magnetic pole polarity determination unit of the fifth embodiment when as a reference inductance, the previous identification value or the motor design value of the reference inductance is used;

Fig. 30 is a block diagram illustrating the configuration example of the permanent magnet synchronous machine driving system of a sixth embodiment;

Fig. 31 is a block diagram illustrating the configuration example of the position and speed estimation calculation unit of the sixth embodiment;

Fig. 32 is a block diagram illustrating the configuration example of the magnetic pole polarity determination unit of the sixth embodiment;

Fig. 33 is a block diagram illustrating the configuration example of a magnetic pole polarity determination amount calculator of the sixth embodiment;

Fig. 34 is a block diagram illustrating the configuration example of the superimposition voltage calculation unit of the sixth embodiment;

Fig. 35 is a block diagram illustrating the configuration example of the AC voltage component application unit of the sixth embodiment;

Figs. 36(a) to 36(h) are graphs illustrating the relationships between the SW operations and the output voltage waveforms of the superimposition voltage calculation unit and an amplitude command determination amount $\Delta$Pamp outputted by the magnetic pole polarity determination amount calculator of the sixth embodiment;

Figs. 37(a) to 37(d) are graphs illustrating inductance values outputted by the inductance calculation unit of the sixth embodiment in the permanent magnet synchronous machine which has the characteristic such that the inductance in the magnet magnetic flux direction has the maximum point to monotonically decrease, relative to the increase in current in the N-pole direction;

Fig. 38 is a block diagram illustrating the configuration example of the superimposition voltage calculation unit of a seventh embodiment;

Fig. 39 is a block diagram illustrating the configuration example of the DC voltage component application unit of the seventh embodiment;

Figs. 40(a) to 40(j) are graphs illustrating the relationships between the SW operations and the output voltage waveforms of the superimposition voltage calculation unit and the amplitude command determination amount $\Delta$Pamp outputted by the magnetic pole polarity determination amount calculator of the seventh embodiment; and

Fig. 41 is a diagram illustrating the configuration example of the outline of part of a railway vehicle of an eighth embodiment on which a driving device for the permanent magnet synchronous machine of any one of the first to seventh embodiments is mounted. Description of Embodiments

First to eighth embodiments of the present invention will be described below in detail with reference to the drawings. It should be noted that as a rule, the same elements are indicted by the same reference numerals in all the drawings. Also, the overlapped description of portions having the same functions is omitted. Portions or all of the following embodiments and modification examples may be combined in the extent which is not contradictory.

First Embodiment

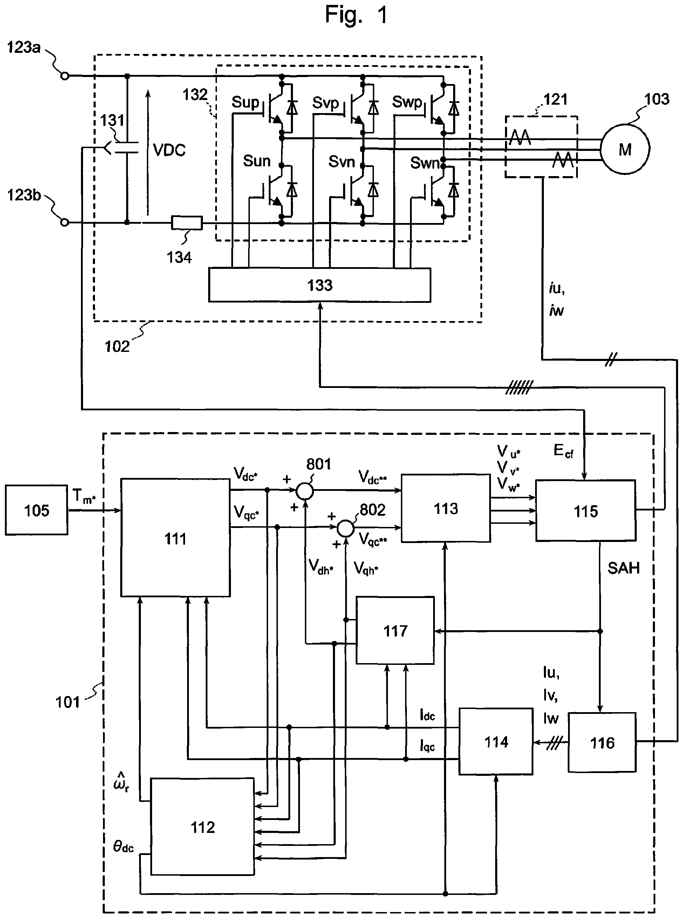

Fig. 1 is a block diagram illustrating the configuration example of a permanent magnet synchronous machine driving system of a first embodiment. The permanent magnet synchronous machine driving system of the first embodiment is provided with a permanent magnet synchronous machine 103 to be controlled, a power converter 102 which drives the permanent magnet synchronous machine 103, a controller 101 which controls the power converter 102, a command generator 105 which generates a torque command value Tm* for the permanent magnet synchronous machine 103, and a phase current detection unit 121 which detects a current which flows through the permanent magnet synchronous machine 103.

The power converter 102 is provided with input terminals 123a and 123b which supply power to the power converter 102, a main circuit 132 including six switching elements Sup to Swn, a gate driver 133 which directly drives the main circuit 132, a DC resistor 134 which is mounted for overcurrent protection for the power converter 102, and a smoothing capacitor 131. The power converter 102 converts DC power supplied from the input terminals 123a and 123b to three-phase AC power on the basis of a gate command signal generated by the controller 101, and supplies the three-phase AC power to the permanent magnet synchronous machine 103.

The phase current detection unit 121 detects AC currents iu and iw which flow from the power converter 102 to the permanent magnet synchronous machine 103. The phase current detection unit 121 is achieved by, for example, a current sensor using a Hall element. It should be noted that the AC current detection configuration of the phase current detection unit 121 in Fig. 1 which uses two-phase detection may use three-phase detection. Also, without using the phase current sensor, an AC current value estimated from the value of the current which flows through the DC resistor 134 mounted for overcurrent protection for the power converter 102 may be used.

The command generator 105 is a controller which is located to be higher in order than the controller 101 and generates the torque command value Tm* inputted to the permanent magnet synchronous machine 103. The controller 101 controls the generated torque of the permanent magnet synchronous machine 103 on the basis of the torque command value Tm* of the command generator 105. As the controller which is higher in order, for example, a current controller is used for controlling the current which flows through the permanent magnet synchronous machine 103, a speed controller is used for controlling a rotational speed, or a position controller is used for controlling a position. The controller in this embodiment is intended to control a torque, and is thus operated as a torque controller.

The controller 101 is provided with a vector control unit 111, a position and speed estimation calculation unit 112, a three-phase coordinate conversion unit 113, a dq coordinate conversion unit 114, a PWM signal controller 115, a current detection unit 116, and a superimposition voltage calculation unit 117. The controller 101 generates the gate command signal for driving each switching element of the power converter 102 from the calculation results of a current control system and a phase control system on the basis of an AC current detection value Iu which is the detection value of the AC current iu flowing through the permanent magnet synchronous machine 103, an AC current detection value Iw which is the detection value of the AC current iw flowing through the permanent magnet synchronous machine 103, and the torque command value Tm* from the command generator 105, and supplies the gate command signal to the gate driver 133 of the power converter 102.

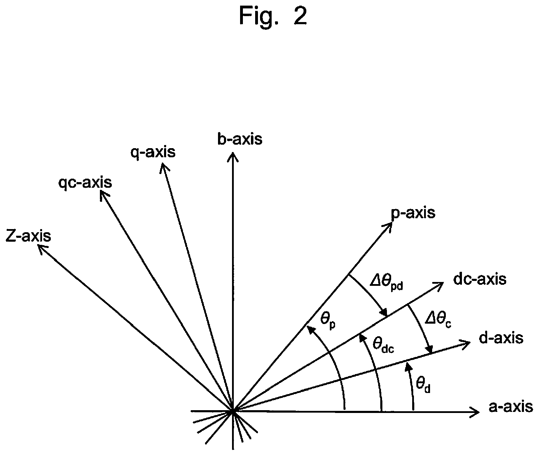

Fig. 2 is a diagram illustrating the definitions of coordinate systems and symbols used in the control of the permanent magnet synchronous machine of the first embodiment. In Fig. 2, an ab-axis coordinate system defined by an a-axis and a b-axis is a stator coordinate system which represents the phase of a stator winding of the permanent magnet synchronous machine 103, and the a-axis is typically based on the u-phase winding phase of the permanent magnet synchronous machine 103. A dq-axis coordinate system defined by a d-axis and a q-axis is a rotor coordinate system which represents the magnetic pole position of a rotor of the permanent magnet synchronous machine 103, and rotates in synchronization with the rotor magnetic pole position of the permanent magnet synchronous machine 103. In the case of the permanent magnet synchronous machine, the d-axis is typically based on an N-pole direction of a magnetic pole of a permanent magnet mounted on the rotor, and is also called a magnetic pole axis.

A dc-qc-axis coordinate system defined by a dc-axis and a qc-axis represents the estimation phase of the rotor magnetic pole position of the permanent magnet synchronous machine 103, that is, is a coordinate system assumed to be a d-axis direction and a q-axis direction by the controller 101, and is also called a control axis. A pz-axis coordinate system defined by a p-axis and a z-axis is a coordinate system which represents a phase on which a high frequency voltage command is superimposed. It should be noted that the coordinate axes combined in each coordinate system are all orthogonal to each other.

In the respective coordinate systems described above, as illustrated in Fig. 2, the phases of the respective axes of the d-axis, the dc-axis, and the p-axis relative to the a-axis are represented as $\theta d$, $\theta dc$, and $\theta p$, respectively. Also, the deviation of the dc-axis relative to the d-axis is represented as $\Delta \theta c$, and the deviation of the p-axis relative to the dc-axis is represented as $\Delta \theta pd$.

In Fig. 1, the vector control unit 111 performs the current control to match a current command value Idc* on the dc-qc-axis coordinate system calculated on the basis of the torque command value Tm* of the command generator 105 and a dc-axis current detection value Idc outputted by the dq coordinate conversion unit 114, and outputs, as the calculation result, a dc-axis voltage command value Vdc*. The vector control unit 111 performs the current control to match a current command value Iqc* on the dc-qc-axis coordinate system calculated on the basis of the torque command value Tm* of the command generator 105 and a qc-axis current detection value Iqc outputted by the dq coordinate conversion unit 114, and outputs, as the calculation result, a qc-axis voltage command value Vqc*.

The position and speed estimation calculation unit 112 calculates a driving frequency estimation value $\omega r^\wedge$ of the permanent magnet synchronous machine 103 and the control phase $\theta dc$ on the basis of the dc-axis voltage command value Vdc* and the qc-axis voltage command value Vqc* outputted by the vector control unit 111, a dc-axis superimposition voltage command value Vdh* and a qc-axis superimposition voltage command value Vqh* outputted by the superimposition voltage calculation unit 117, and the dc-axis current detection value Idc and the qc-axis current detection value Iqc outputted by the dq coordinate conversion unit 114, and outputs the driving frequency estimation value $\omega r^\wedge$ of the permanent magnet synchronous machine 103 and the control phase $\theta dc$.

The three-phase coordinate conversion unit 113 converts a dc-axis voltage command value Vdc** obtained by adding the dc-axis superimposition voltage command value Vdh* outputted by the superimposition voltage calculation unit 117 to the dc-axis voltage command value Vdc* outputted by the vector control unit 111 and a qc-axis voltage command value Vqc** obtained by adding the qc-axis superimposition voltage command value Vqh* outputted by the superimposition voltage calculation unit 117 to the qc-axis current command value Vqc* outputted by the vector control unit 111, to three-phase voltage commands Vu*, Vv*, and Vw* on the basis of the control phase $\theta dc$ outputted by the position and speed estimation calculation unit 112, and outputs the three-phase voltage commands Vu*, Vv*, and Vw* to the PWM signal controller 115.

The dq coordinate conversion unit 114 converts three-phase current detection values Iu, Iv, and Iw outputted by the current detection unit 116, to the dc-axis current detection value Idc and the qc-axis current detection value Iqc on the basis of the control phase $\theta dc$ outputted by the position and speed estimation calculation unit 112, and outputs the dc-axis current detection value Idc and the qc-axis current detection value Iqc.

The PWM signal controller 115 generates a triangle wave carrier on the basis of a given carrier frequency fc and a voltage detection value Ecf of the smoothing capacitor 131, performs the large-and-small comparison of the triangle wave carrier and the modulation wave on the basis of the three-phase AC voltage commands Vu*, Vv*, and Vw*, and executes the pulse width modulation. By the gate command signal generated by the calculation result of the pulse width modulation, each switching element of the power converter 102 is on/off controlled. Also, the PWM signal controller 115 outputs a current detection timing setting signal SAH which decides the current detection timing of the current detection unit 116. The current detection timing setting signal SAH is, for example, the triangle wave carrier.

The current detection unit 116 calculates the three-phase current detection values Iu, Iv, and Iw from the AC currents iu and iw detected by the phase current detection unit 121 on the basis of the current detection timing setting signal SAH outputted by the PWM signal controller 115, and outputs the three-phase current detection values Iu, Iv, and Iw to the dq coordinate conversion unit 114.

The superimposition voltage calculation unit 117 calculates the dc-axis superimposition voltage command value Vdh* for generating a high frequency current (pulsation current) in the permanent magnet synchronous machine 103 on the basis of the dc-axis current detection value Idc outputted by the dq coordinate conversion unit 114 and the current detection timing setting signal SAH outputted by the PWM signal controller 115, and outputs the dc-axis superimposition voltage command value Vdh*. The superimposition voltage calculation unit 117 calculates the qc-axis superimposition voltage command value Vqh* for generating the high frequency current (pulsation current) in the permanent magnet synchronous machine 103 on the basis of the qc-axis current detection value Iqc outputted by the dq coordinate conversion unit 114 and the current detection timing setting signal SAH outputted by the PWM signal controller 115, and outputs the qc-axis superimposition voltage command value Vqh*.

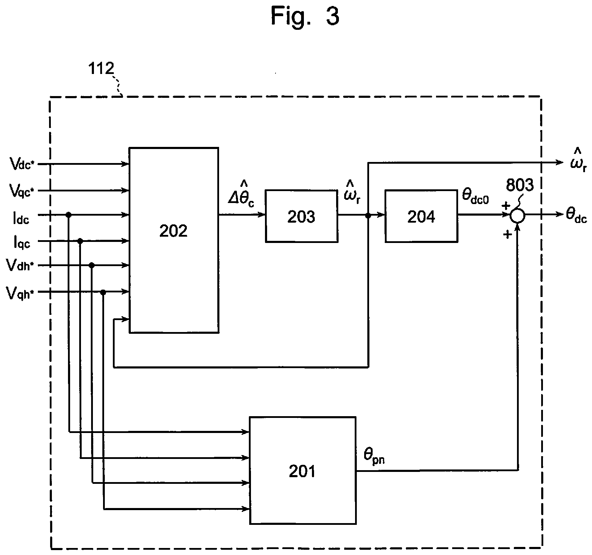

Fig. 3 is a block diagram illustrating the configuration example of the position and speed estimation calculation unit of the first embodiment. As illustrated in Fig. 3, the position and speed estimation calculation unit 112 is provided with a magnetic pole polarity determination unit 201, an axis error estimation calculation unit 202, a speed estimation calculation unit 203, and a position estimation calculation unit 204. The position and speed estimation calculation unit 112 performs the phase control to match (synchronize) the d-axis which is the rotor magnetic pole phase of the permanent magnet synchronous machine 103 and the dc-axis which is the control phase.

The axis error estimation calculation unit 202 calculates an axis error estimation value Δθc^ which is the deviation between the d-axis and the dc-axis, on the basis of the dc-axis voltage command value Vdc* and the qc-axis voltage command value Vqc* outputted by the vector control unit 111, the dc-axis superimposition voltage command value Vdh* and the qc-axis superimposition voltage command value Vqh* outputted by the superimposition voltage calculation unit 117, the dc-axis current detection value Idc and the qc-axis current detection value Iqc outputted by the dq coordinate conversion unit 114, and the driving frequency estimation value ωr^ outputted by the speed estimation calculation unit 203, and outputs the axis error estimation value Δθc^ to the speed estimation calculation unit 203.

The speed estimation calculation unit 203 calculates the driving frequency estimation value ωr^ of the permanent magnet synchronous machine 103 on the basis of the axis error estimation value Δθc^ outputted by the axis error estimation calculation unit 202, and outputs the driving frequency estimation value ωr^ of the permanent magnet synchronous machine 103.

The position estimation calculation unit 204 calculates a reference control phase θdc0 which is the estimation phase of the rotor magnetic pole position of the permanent magnet synchronous machine 103, on the basis of the driving frequency estimation value ωr^ outputted by the speed estimation calculation unit 203, and outputs the reference control phase θdc0. Further, the position and speed estimation calculation unit 112 adds a magnetic pole polarity correction phase θpn outputted by the magnetic pole polarity determination unit 201, to the reference control phase θdc0, and outputs the control phase θdc.

For the method in which the phase control system of the controller 101 synchronizes the d-axis and the dc-axis without using a position sensor and the like, there is magnetic pole position estimation means which uses the speed electromotive force of the permanent magnet synchronous machine, as described in "The transactions of the Institute of Electrical Engineers of Japan. D, Vol, 124, No. 11, "A Simplified Vector Control of Position Sensorless Permanent Magnet Synchronous Motor for Electrical Household Appliances" (hereinafter, referred to as a conventional art literature 1).

Also, in the state where the permanent magnet synchronous machine stops, or in the state where the rotational speed which is low to the extent that the speed electromotive force cannot be observed is low, there is magnetic pole position estimation means which superimposes a high frequency voltage and uses the saliency of the rotor of the permanent magnet synchronous machine to synchronize the d-axis and the dc-axis, as described in Patent No. 5351859 (hereinafter, referred to as a conventional art literature 2).

Since, of these magnetic pole position estimation means, the magnetic pole position estimation which uses the saliency of the rotor of the permanent magnet synchronous machine cannot determine the direction of the polarity of the magnetic pole, the direction in which the d-axis and the dc-axis are shifted by 180 degrees can be incorrectly estimated as the magnetic pole phase, so that the means for determining the polarity of the magnetic pole of the permanent magnet synchronous machine is required.

The means for determining the polarity of the magnetic pole of the conventional art large-and-small compares the positive value and the negative value of the d-axis current which is made to flow by applying the AC voltage in the d-axis direction of the permanent magnet synchronous machine, or large-and-small compares the d-axis inductance relative to the increase in the d-axis current in a positive direction and the d-axis inductance relative to the increase in the d-axis current in a negative direction, thereby determining, from the large-and-small comparison result, the N-pole direction of the magnetic pole.

The typical buried magnet type permanent magnet synchronous machine has a magnetic saturation characteristic in which a d-axis inductance value Ld monotonically decreases relative to the increase in the d-axis current. On the other hand, in the permanent magnet synchronous machine as described in the conventional art literature 2, the d-axis inductance has a maximum point Ldp in the positive direction relative to the d-axis current, and when the d-axis current is increased with respect to the maximum point Ldp, the permanent magnet synchronous machine can have the magnetic saturation characteristic such that the d-axis inductance value Ld monotonically decreases. That is, it has been known that the large-and-small relationship between the value on the positive side of the d-axis current which flows when the AC voltage has been applied in the d-axis direction and the value on the negative side of the d-axis current which flows when the AC voltage has been applied in the d-axis direction, and the large-and-small relationship between the value on the positive side of the d-axis inductance and the value on the negative side of the d-axis inductance are not uniquely decided, since the magnetic path in which the magnetic saturation characteristic becomes apparent is different according to the configuration of the permanent magnet synchronous machine.

Therefore, in the polarity determination means of the conventional art, it is necessary to previously grasp whether the d-axis inductance characteristic monotonically decreases or has the maximum point, relative to the increase in current in the N-pole direction of the d-axis current, and when the permanent magnet synchronous machine in which like a general-purpose inverter, the d-axis inductance characteristic is unknown is connected to be controlled, the permanent magnet synchronous machine driving system can fail in the determination of the polarity depending on the presence or absence of the maximum point to reversely rotate the permanent magnet synchronous machine.

The first embodiment relates to the determination of the polarity of the magnetic pole of the permanent magnet synchronous machine, and provides the polarity determination means which does not incorrectly determine the N-pole direction of the magnetic pole, even in the permanent magnet synchronous machine in which the d-axis inductance characteristic of the permanent magnet synchronous machine has the Ld characteristic which monotonically decreases relative to the increase in current in the N-pole direction of the d-axis current, or even in the permanent magnet synchronous machine in which the d-axis inductance characteristic of the permanent magnet synchronous machine has the Ld characteristic which has the maximum point relative to the increase in current in the N-pole direction of the d-axis current.

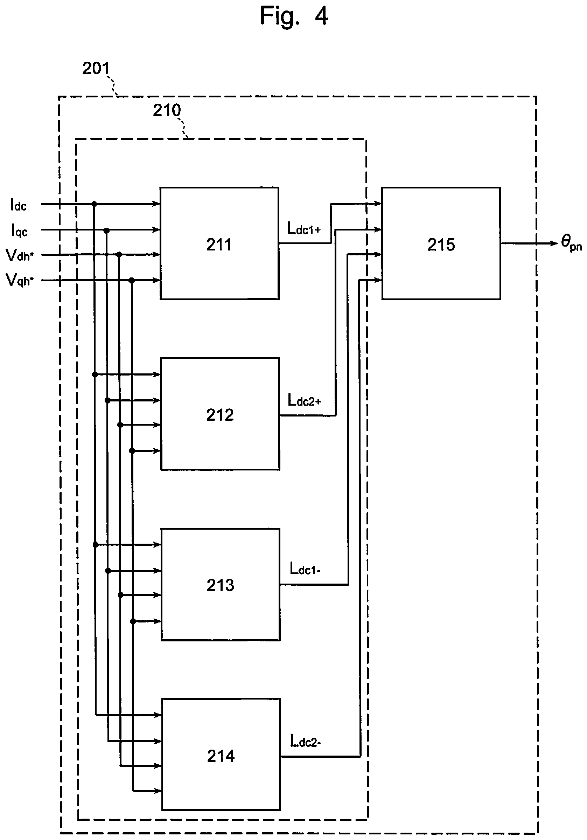

Fig. 4 is a block diagram illustrating the configuration example of the magnetic pole polarity determination unit of the first embodiment. As illustrated in Fig. 4, the magnetic pole polarity determination unit 201 is provided with an inductance calculation unit 210, and a polarity determination and inversion processing unit 215, the inductance calculation unit 210 being provided with a first inductance calculation unit 211, a second inductance calculation unit 212, a third inductance calculation unit 213, and a fourth inductance calculation unit 214.

In the magnetic pole polarity determination unit 201, the first inductance calculation unit 211 calculates a first inductance value Ldc1+ relative to the change in current of positive value on the dc-qc-axis coordinate system on the basis of the positive current values of the dc-axis current detection value Idc and the qc-axis current detection value Iqc of the pulsation current flowing through the permanent magnet synchronous machine 103 and the dc-axis superimposition voltage command value Vdh* and the qc-axis superimposition voltage command value Vqh* which generate the pulsation current, and outputs the first inductance value Ldc1+ to the polarity determination and inversion processing unit 215.

Also, the second inductance calculation unit 212 calculates a second inductance value Ldc2+ relative to the change in current of positive value on the dc-qc-axis coordinate system on the basis of the positive current values of the dc-axis current detection value Idc and the qc-axis current detection value Iqc of the pulsation current flowing through the permanent magnet synchronous machine 103 which are different from those of the first inductance value Ld1+ and the dc-axis superimposition voltage command value Vdh* and the qc-axis superimposition voltage command value Vqh* which generate the pulsation current, and outputs the second inductance value Ldc2+ to the polarity determination and inversion processing unit 215.

Further, the third inductance calculation unit 213 calculates a third inductance value Ldc1- relative to the change in current of negative value on the dc-qc-axis coordinate system on the basis of the negative current values of the dc-axis current detection value Idc and the qc-axis current detection value Iqc of the pulsation current flowing through the permanent magnet synchronous machine 103 and the dc-axis superimposition voltage command value Vdh* and the qc-axis superimposition voltage command value Vqh* which generate the pulsation current, and outputs the third inductance value Ldc1-to the polarity determination and inversion processing unit 215.

Further, the fourth inductance calculation unit 214 calculates a fourth inductance value Ldc2- relative to the change in current of negative value on the dc-qc-axis coordinate system on the basis of the negative current values of the dc-axis current detection value Idc and the qc-axis current detection value Iqc of the pulsation current flowing through the permanent magnet synchronous machine 103 which are different from those of the third inductance value Ld1- and the dc-axis superimposition voltage command value Vdh* and the qc-axis superimposition voltage command value Vqh* which generate the pulsation current, and outputs the fourth inductance value Ldc2-to the polarity determination and inversion processing unit 215.

And, the polarity determination and inversion processing unit 215 calculates a deviation amount ΔLdc+ between the first inductance value Ldc1+ and the second inductance value Ldc2 relative to the change in current of positive value on the dc-qc-axis coordinate system, and a deviation amount ΔLdc- between the third inductance value Ldc1- and the fourth inductance value Ldc2- relative to the change in current of negative value on the dc-qc-axis coordinate system. Further, the polarity determination and inversion processing unit 215 calculates the absolute value of the deviation amount ΔLdc+ and the absolute value of the deviation amount ΔLdc-, and determines that the side in which the absolute value of the deviation amount in the inductance is larger is the N-pole direction (d-axis direction) of the permanent magnet synchronous machine 103. The polarity determination and inversion processing unit 215 uses the magnetic saturation characteristic of an iron core of the rotor to determine the N-pole direction of the rotor magnetic pole of the permanent magnet synchronous machine 103, and as a result, when the rotor magnetic pole position estimated by the position estimation calculation unit 204 is shifted by 180 degrees, the polarity determination and inversion processing unit 215 outputs the magnetic pole polarity correction phase θpn of 180 degrees to invert the control phase θdc. As the result of the polarity determination, when the N-pole direction of the magnetic pole of the rotor is not shifted from the control phase θdc, the polarity determination and inversion processing unit 215 outputs the magnetic pole polarity correction phase θpn of 0 degrees.

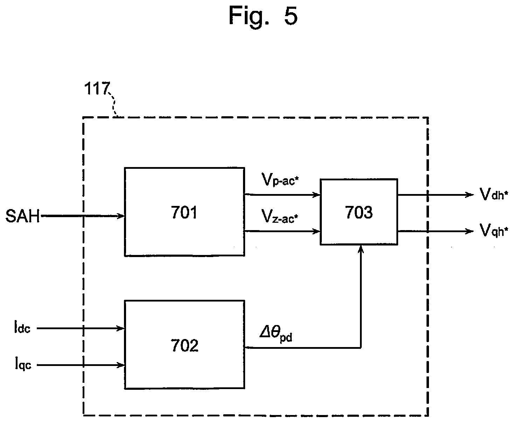

Fig. 5 is a block diagram illustrating the configuration example of the superimposition voltage calculation unit of the first embodiment. As illustrated in Fig. 5, the superimposition voltage calculation unit 117 is provided with an AC voltage component application unit 701, a superimposition voltage phase correction table 702, and a dq coordinate conversion unit 703.

The AC voltage component application unit 701 calculates a p-axis superimposition AC voltage command Vp-ac* and a z-axis superimposition AC voltage command Vz-ac* on the basis of the current detection timing setting signal SAH outputted by the PWM signal controller 115, and outputs the p-axis superimposition AC voltage command Vp-ac* and the z-axis superimposition AC voltage command Vz-ac* to the dq coordinate conversion unit 703.

The superimposition voltage phase correction table 702 calculates the deviation amount Δθpd between the p-axis which is the coordinate system that superimposes the voltage command for generating the pulsation current in the permanent magnet synchronous machine 103 and the dc-axis of the control coordinate system, on the basis of the dc-axis current detection value Idc and the qc-axis current detection value Iqc outputted by the dq coordinate conversion unit 114, and outputs the deviation amount Δθpd to the dq coordinate conversion unit 703.

The dq coordinate conversion unit 703 converts the p-axis superimposition AC voltage command Vp-ac* outputted by the AC voltage component application unit 701, to the dc-axis superimposition voltage command value Vdh* on the basis of the deviation amount Δθpd between the p-axis and the dc-axis outputted by the superimposition voltage phase correction table 702, and outputs the dc-axis superimposition voltage command value Vdh*. The dq coordinate conversion unit 703 converts the z-axis superimposition AC voltage command Vz-ac* outputted by the AC voltage component application unit 701, to the dc-axis superimposition voltage command value Vqh* on the basis of the deviation amount Δθpd between the p-axis and the dc-axis outputted by the superimposition voltage phase correction table 702, and outputs the dc-axis superimposition voltage command value Vqh*.

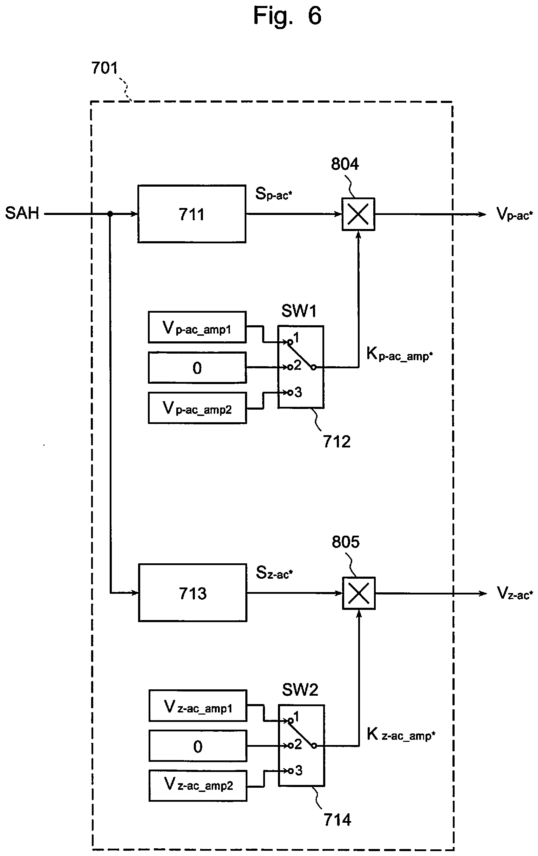

Fig. 6 is a block diagram illustrating the configuration example of the AC voltage component application unit of the first embodiment. As illustrated in Fig. 6, the AC voltage component application unit 701 is provided with AC waveform generators 711 and 713, a switching device 712 which switches the magnitude of the amplitude of the AC voltage waveform, a switching device 714 which switches the magnitude of the amplitude of the AC voltage waveform, a multiplier 804 which multiplies the output value of the AC waveform generator 711 and the output value of the switching device 712 and outputs the multiplication result, and a multiplier 805 which multiplies the output value of the AC waveform generator 713 and the output value of the switching device 714 and outputs the multiplication result.

In the AC voltage component application unit 701, the AC waveform generator 711 outputs a p-axis AC voltage waveform Sp-ac* for generating the pulsation current in the permanent magnet synchronous machine 103 on the basis of the current detection timing setting signal SAH. In the AC voltage component application unit 701, the AC waveform generator 713 outputs a z-axis AC voltage waveform Sz-ac* for generating the pulsation current in the permanent magnet synchronous machine 103 on the basis of the current detection timing setting signal SAH. Also, the switching device 712 is a switching device which controls the amplitude of the p-axis AC voltage waveform Sp-ac* superimposed on the pz-axis coordinate system. The switching device 714 is a switching device which controls the amplitude of the z-axis AC voltage waveform Sz-ac* superimposed on the pz-axis coordinate system. The multiplier 804 multiplies the p-axis AC voltage waveform Sp-ac* outputted by the AC waveform generator 711 and a p-axis AC voltage component amplitude command Kp-ac_amp* outputted by the switching device 712, and outputs the p-axis superimposition AC voltage command Vp-ac*. The multiplier 805 multiplies the z-axis AC voltage waveform Sz-ac* outputted by the AC waveform generator 713 and a z-axis AC voltage component amplitude command Kz-ac_amp* outputted by the switching device 714, and outputs the z-axis superimposition AC voltage command Vz-ac*.

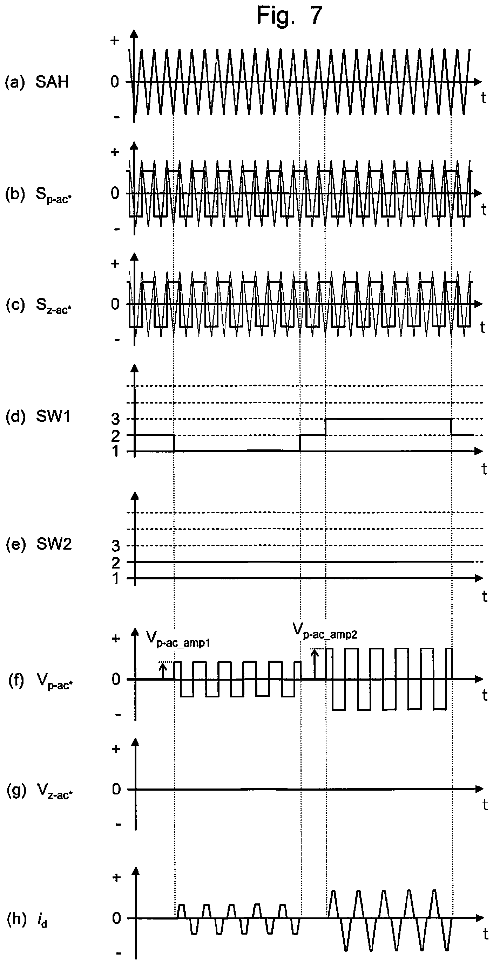

Next, the specific operation of the magnetic pole polarity determination of the first embodiment will be described. Figs. 7(a) to 7(h) are graphs illustrating the relationships between the SW operations and the output voltage waveforms of the superimposition voltage calculation unit of the first embodiment. In Figs. 7(a) to 7(h), Fig. 7(a) illustrates the waveform example of the current detection timing setting signal SAH which decides the cycle of the rectangular wave signal generated by the AC waveform generators 711 and 713 in the AC voltage component application unit 701. Fig. 7(b) illustrates the waveform example of the p-axis AC voltage waveform Sp-ac* outputted from the AC waveform generator 711. Fig. 7(c) illustrates the waveform example of the z-axis AC voltage waveform Sz-ac* outputted from the AC waveform generator 713. Fig. 7(d) illustrates the switching example of a switching command SW1 of the switching device 712. Fig. 7(e) illustrates the switching example of a switching command SW2 of the switching device 714. Fig. 7(f) illustrates the waveform example of the p-axis superimposition AC voltage command Vp-ac* which is the calculation result of the multiplier 804. Fig. 7(g) illustrates the waveform example of the z-axis superimposition AC voltage command Vz-ac* which is the calculation result of the multiplier 805. Fig. 7(h) illustrates the waveform example of a d-axis current id flowing through the permanent magnet synchronous machine 103 at determining the polarity of the magnetic pole of the first embodiment. It should be noted that in this embodiment, the p-axis AC voltage waveform Sp-ac* outputted from the AC waveform generator 711 and the z-axis AC voltage waveform Sz-ac* outputted from the AC waveform generator 713 are the rectangular waves, but sine waves may be used.

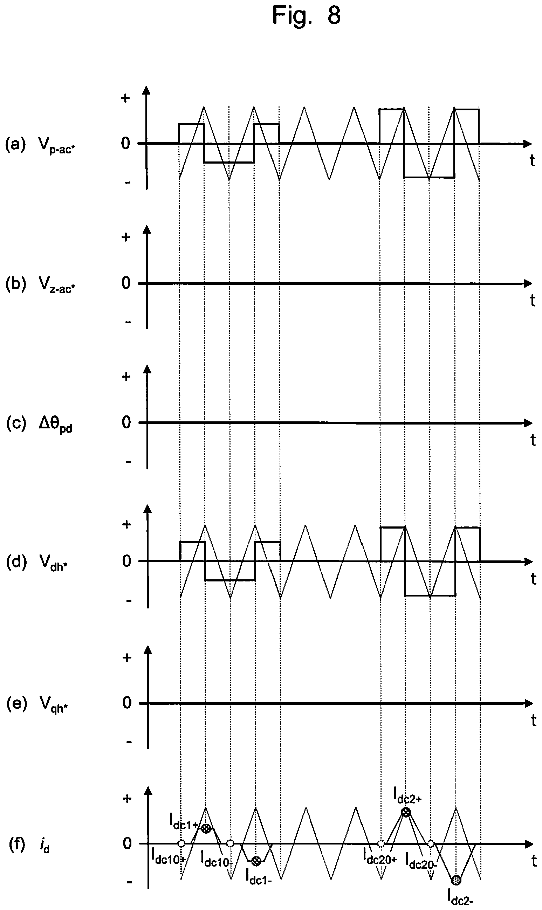

Figs. 8(a) to 8(f) are graphs illustrating the input signals and the current detection points of the d-axis current of the magnetic pole polarity determination unit of the first embodiment. In Figs. 8(a) to 8(f), Fig. 8 (a) illustrates the waveform example of the p-axis superimposition AC voltage command Vp-ac* outputted from the AC voltage component application unit 701. Fig. 8(b) illustrates the waveform example of the z-axis superimposition AC voltage command Vz-ac* outputted from the AC voltage component application unit 701. Fig. 8(c) illustrates the waveform example of the deviation amount $\Delta\theta$pd between the p-axis and the dc-axis outputted from the superimposition voltage phase correction table 702. Fig. 8(d) illustrates the waveform example of the dc-axis superimposition voltage command value Vdh* outputted from the superimposition voltage calculation unit 117. Fig. 8(e) illustrates the waveform example of the qc-axis superimposition voltage command value Vqh* outputted from the superimposition voltage calculation unit 117. Fig. 8(f) illustrates the example of the waveform of the d-axis current id flowing through the permanent magnet synchronous machine 103 at determining the polarity of the magnetic pole and the sample points of the current detection values used for calculating the d-axis inductances of the first embodiment.

Referring to Figs. 7(a) to 7(h) and Figs. 8(a) to 8(f), the operations of the superimposition voltage calculation unit 117 and the magnetic pole polarity determination unit 201 and the method of determining the polarity of the magnetic pole of the first embodiment will be described. It should be noted that in the waveform examples in Figs. 7(a) to 7(h) and Figs. 8(a) to 8(f), the deviation amount $\Delta\theta$pd between the p-axis and the dc-axis and the deviation amount $\Delta\theta$c between the d-axis and the dc-axis are in the state of 0.

In the superimposition voltage calculation unit 117, the AC waveform generator 711 calculates the p-axis AC voltage waveform Sp-ac* on the basis of the current detection timing setting signal SAH outputted by the PWM signal controller 115, and operates the switching state of the switching device 712, thereby controlling the p-axis superimposition AC voltage command Vp-ac*. In the superimposition voltage calculation unit 117, the AC waveform generator 713 calculates the z-axis AC voltage waveform Sz-ac* on the basis of the current detection timing setting signal SAH outputted by the PWM signal controller 115, and operates the switching state of the switching device 714, thereby controlling the z-axis superimposition AC voltage command Vz-ac*.

In Figs. 7(a) to 7(h), the switching command SW1 of the switching device 712 in Fig. 7(d) is switched from the state 2 where 0 is set to the amplitude command, to the state 1 where a first p-axis AC voltage amplitude command Vp-ac_amp1 is set to the amplitude command, so that the rectangular wave voltage command in which the voltage amplitude is the Vp-ac_amp1 is outputted to the p-axis superimposition AC voltage command Vp-ac* in Fig. 7(f). After the given time has elapsed, the switching command SW1 is switched from the state 1 to the state 2, and the output of the p-axis superimposition AC voltage command Vp-ac* in Fig. 7(f) is brought to 0 once.

Further, the switching command SW1 is switched from the state 2 to the state 3 where a second p-axis AC voltage amplitude command Vp-ac_amp2 different from the first p-axis AC voltage amplitude command Vp-ac_amp1 is set to the amplitude command, so that the rectangular wave voltage command in which the voltage amplitude is the Vp-ac_amp2 is outputted to the p-axis superimposition AC voltage command Vp-ac* in Fig. 7(f). And, after the given time has elapsed, the switching command SW1 is switched from the state 3 to the state 2, and the output of the p-axis superimposition AC voltage command Vp-ac* in Fig. 7(f) is brought to 0.

It should be noted that in this embodiment, the switching command SW2 in Fig. 7(e) is always in the state 2 where 0 is set to the amplitude command, so that the output of the z-axis superimposition AC voltage command Vz-ac* (z-axis) in Fig. 7(g) is brought to 0. Also, in this embodiment, since the deviation amount $\Delta\theta pd$ between the p-axis and the dc-axis and the deviation amount $\Delta\theta c$ between the d-axis and the dc-axis are in the state of 0, the p-axis and the dc-axis match, so that the p-axis superimposition AC voltage command Vp-ac* and the dc-axis superimposition voltage command value Vdh* have the same waveform, and the z-axis superimposition AC voltage command Vz-ac* and the qc-axis superimposition voltage command value Vqh* have the same waveform. By the dc-axis superimposition voltage command value Vdh* and the qc-axis superimposition voltage command value Vqh* outputted by the superimposition voltage calculation unit 117, the pulsation current having different amplitudes as illustrated in Fig. 7(h) can be made to flow through the permanent magnet synchronous machine.

The magnetic pole polarity determination unit 201 estimation calculates the d-axis inductance from the pulsation current of the d-axis which has flowed through the permanent magnet synchronous machine 103 by the voltage application of the dc-axis superimposition voltage command value Vdh* and the qc-axis superimposition voltage command value Vqh* outputted by the superimposition voltage calculation unit 117, determines, from the calculation result, the polarity of the magnetic pole of the permanent magnet synchronous machine 103, and outputs the magnetic pole polarity correction phase $\theta pn$.

In Figs. 8(a) to 8(f), as described above, by the voltage application of the dc-axis superimposition voltage command value Vdh* illustrated in Fig. 8(d) and the qc-axis superimposition voltage command value Vqh* illustrated in Fig. 8(e), the pulsation current having different amplitudes is generated in the d-axis current id in the permanent magnet synchronous machine 103, as illustrated in Fig. 8(f).

The inductance calculation unit 210 of the magnetic pole polarity determination unit 201 calculates the d-axis inductance value from the dc-axis current detection value Idc sampled at the predetermined timing by the current detection unit 116. Fig. 8(f) illustrates the sampling points of the dc-axis current detection values Idc necessary for determining the polarity of the magnetic pole of the first embodiment. In this embodiment, for example, the sampling of the dc-axis current detection value Idc for calculating the d-axis inductance value uses the current detection timing setting signal SAH as the triangle wave carrier to have the peak/valley cycle of the triangle wave carrier.

First, the first inductance calculation unit 211 calculates the first inductance value Ldc1+ relative to the change in current of positive value on the dc-qc-axis coordinate system from the current values Idc10+ and Idc1+ at the sampling points of the dc-axis current detection values Idc illustrated in Fig. 8(f). The first inductance value Ldc1+ is calculated by, for example, the following equation (1).
Equation 1

$$L_{dc1+} = \frac{\Delta\Phi_{dc1+}}{\Delta I_{dc1+}} = \frac{\Delta\Phi_{dc1+}}{I_{dc1+} - I_{dc10+}} \cdots (1)$$

It should be noted that to calculate an amount of change $\Delta Idc1+$ in the dc-axis current in Equation (1), the deviation between the current values Idc10+ and Idc1+ at the sampling points of the dc-axis current detection values Idc illustrated in Fig. 8(f) is used, but only the current value of the Idc1+ may be sampled to be substituted for the amount of change $\Delta Idc1+$ in the dc-axis current. It should be noted that this is ditto for an amount of change $\Delta Idc1-$, an amount of change $\Delta Idc2+$, and an amount of change $\Delta Idc2-$ in the dc-axis current described later.

Also, an amount of change $\Delta\Phi dc1+$ in the magnetic flux in Equation (1) is an amount of change in the magnetic flux when the amount of change $\Delta Idc1+$ in current is given, and can be calculated by the following Equation (2).
Equation 2

$$\Delta\Phi_{dc1+} = \int_0^{\Delta t} V \, dt \cdots (2)$$

It should be noted that when the PWM control type power converter is used, an amount of change $\Delta\Phi d$ in the magnetic flux is proportional to application time $\Delta t$ of a voltage V applied by converting the DC voltage supplied to the input terminals 123a and 123b of the power converter to the three-phase AC voltage at giving the amount of change $\Delta Idc1+$ in current, so that at the same magnitude of the DC voltage, the amount of change $\Delta\Phi d$ in the magnetic flux can be estimation calculated from the dc-axis superimposition voltage command value Vdh*.

More specifically, for example, considering that the dc-axis voltage command value Vdc** and the qc-axis voltage command value Vqc** are PWM modulated, Edc which is the DC voltage of the PWM control type power converter and DC voltage application time $\Delta Tvh$ of the power converter on the basis of the dc-axis superimposition voltage command value Vdh* and the qc-axis superimposition voltage command value Vqh* are calculated, so that an amount of change $\Delta\Phi dc$ in the magnetic flux can be estimation calculated by the following equation (3).

Equation 3

$$\Delta\Phi_{dc} = K_{conv} \cdot E_{dc} \cdot \Delta T_{vh} \cdots (3)$$

Here, a conversion coefficient Kconv in Equation (3) is a conversion coefficient with the coordinate conversion of the PWM voltage outputted from the power converter, from the three-phase stationary coordinate system to the dq-axis rotation coordinate system. For example, when the PWM control type power converter is a two-level inverter, and relative conversion is used for the coordinate conversion from the three-phase stationary coordinate system to the dq-axis rotation coordinate system, 2/3 is used for the coefficient Kconv. Therefore, the set value of the conversion coefficient Kconv is required to be changed according to the configuration of the power converter, the switching method of the power converter when the high frequency voltage is applied, and the conversion method of the coordinate conversion used for controlling the power converter. However, the conversion coefficient Kconv is the set value important for precisely calculating the value of the inductance, but since the polarity determination means of the first embodiment large-and-small compares the absolute value of the amount of change in the inductance in the N-pole direction and the absolute value of the amount of change in the inductance in the S-pole direction, the conversion coefficient Kconv is finally cancelled, so that a value larger than 0 may be used for the conversion coefficient Kconv.

Next, the third inductance calculation unit 213 calculates the third inductance value Ldc1- relative to the change in current of negative value on the dc-qc-axis coordinate system from the current values Idc10- and Idc1- at the sampling points of the dc-axis current detection values Idc illustrated in Fig. 8(f). The third inductance value Ldc1- is calculated by, for example, the following equation (4).

Equation 4

$$L_{dc1-} = \frac{\Delta\Phi_{dc1-}}{\Delta I_{dc1-}} = \frac{\Delta\Phi_{dc1-}}{I_{dc1-} - I_{dc10-}} \cdots (4)$$

Next, the second inductance calculation unit 212 calculates the second inductance value Ldc2+ relative to the change in current of positive value on the dc-qc-axis coordinate system from the current values Idc20+ and Idc2+ at the sampling points of the dc-axis current detection values Idc illustrated in Fig. 8 (f). The second inductance value Ldc2+ is calculated by, for example, the following equation (5).

Equation 5

$$L_{dc2+} = \frac{\Delta\Phi_{dc2+}}{\Delta I_{dc2+}} = \frac{\Delta\Phi_{dc2+}}{I_{dc2+} - I_{dc20+}} \cdots (5)$$

Next, the fourth inductance calculation unit 214 calculates the fourth inductance value Ldc2- relative to the change in current of negative value on the dc-qc-axis coordinate system from the current values Idc20- and Idc2- at the sampling points of the dc-axis current detection values Idc illustrated in Fig. 8 (f). The fourth inductance value Ldc2- is calculated by, for example, the following equation (6).

Equation 6

$$L_{dc2-} = \frac{\Delta\Phi_{dc2-}}{\Delta I_{dc2-}} = \frac{\Delta\Phi_{dc2-}}{I_{dc2-} - I_{dc20-}} \cdots (6)$$

The inductance calculation unit 210 outputs the Ldc1+, the Ldc2+, the Ldc1-, and the Ldc2- which are the calculation results of the first to fourth inductances, respectively, to the polarity determination and inversion processing unit 215.

The polarity determination and inversion processing unit 215 calculates the deviation amount ΔLdc+ between the first inductance value Ldc1+ and the second inductance value Ldc2+. The deviation amount ΔLdc+ is calculated by, for example, the following equation (7).

Equation 7

$$\Delta L_{dc+} = L_{dc2+} - L_{dc1+} \cdots (7)$$

Further, the polarity determination and inversion processing unit 215 calculates the deviation amount ΔLdc- between the third inductance value Ldc1- and the fourth inductance value Ldc2-. The deviation amount ΔLdc- is calculated by, for example, the following equation (8).
Equation 8

$$\Delta L_{dc-} = L_{dc2-} - L_{dc1-} \cdots (8)$$

The polarity determination and inversion processing unit 215 respectively calculates the absolute value |ΔLdc+| of the deviation amount ΔLdc+ in the inductance relative to the change in current of positive value and the absolute value |ΔLdc-| of the deviation amount ΔLdc- in the inductance relative to the change in current of negative value, compares the absolute values |ΔLdc+| and |ΔLdc-| on the basis of the large-and-small relationship, and determines that the side in which the absolute value of the deviation amount in the inductance is larger is the N-pole direction (d-axis direction) of the permanent magnet synchronous machine 103.

For example, when as the result of the polarity determination calculation, the large-and-small relationship in which the absolute value |ΔLdc+| of the deviation amount in the inductance > the absolute value |ΔLdc-| of the deviation amount in the inductance is obtained, the N-pole direction (d-axis direction) of the rotor magnetic pole of the permanent magnet synchronous machine and the control phase θdc (dc-axis) are not shifted by 180 degrees, so that 0 degrees is outputted for the magnetic pole polarity correction phase θpn of the magnetic pole polarity determination unit 201. On the contrary, when the large-and-small relationship in which the absolute value |ΔLdc+| of the deviation amount in the inductance < the absolute value |ΔLdc-| of the deviation amount in the inductance is obtained, the N-pole direction (d-axis direction) of the rotor magnetic pole of the permanent magnet synchronous machine and the control phase θdc (dc-axis) are shifted by 180 degrees, so that 180 degrees is outputted for the magnetic pole polarity correction phase θpn of the magnetic pole polarity determination unit 201.

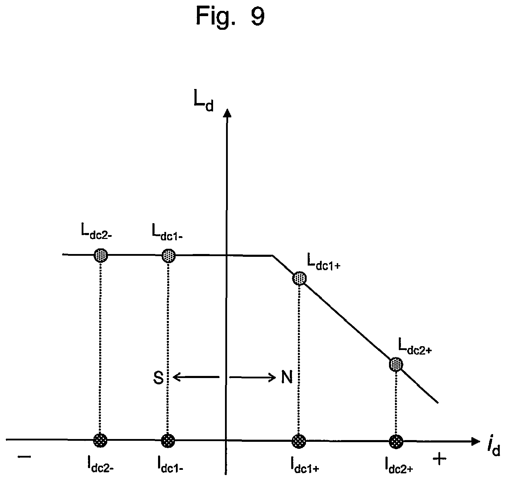

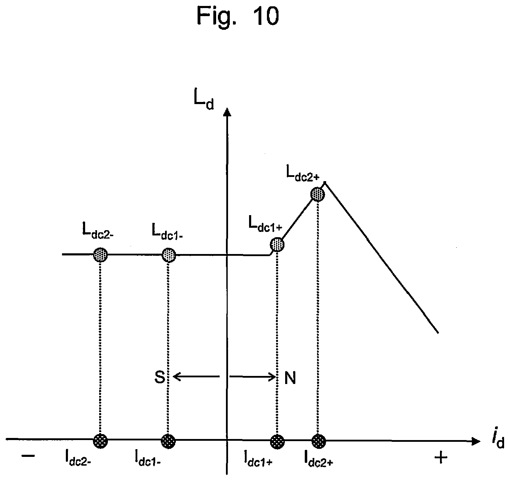

Next, the effect of the first embodiment will be described with reference to Figs. 9 and 10. Fig. 9 is a graph illustrating the inductance values outputted by the inductance calculation unit 210 of the first embodiment in the permanent magnet synchronous machine which has a characteristic such that the inductance in a magnet magnetic flux direction monotonically decreases relative to the increase in current in the N-pole direction. As illustrated in Fig. 9, when the absolute value |ΔLdc+| of the deviation amount in the inductance and the absolute value |ΔLdc-| of the deviation amount in the inductance are compared on the basis of the large-and-small relationship, it is found that the absolute value |ΔLdc+| of the deviation amount in the inductance in the N-pole direction is larger.

Also, Fig. 10 is a graph illustrating the inductance values outputted by the inductance calculation unit 210 of the first embodiment in the permanent magnet synchronous machine which has a characteristic such that the inductance in the magnet magnetic flux direction has the maximum point to monotonically decrease, relative to the increase in current in the N-pole direction. As illustrated in Fig. 10, even in the case of the permanent magnet synchronous machine which has the maximum point in the magnetic saturation characteristic of the d-axis inductance, when the absolute value |ΔLdc+| of the deviation amount in the inductance and the absolute value |ΔLdc-| of the deviation amount in the inductance are compared on the basis of the large-and-small relationship, it is found that the absolute value |ΔLdc+| of the deviation amount in the inductance in the N-pole direction is larger.

Therefore, like this embodiment, the absolute value |ΔLdc+| of the deviation amount ΔLdc+ in the inductance relative to the change in current of positive value and the absolute value |ΔLdc-| of the deviation amount ΔLdc- in the inductance relative to the change in current of negative value are respectively calculated, and when the absolute values |ΔLdc+| and |ΔLdc-| are compared on the basis of the large-and-small relationship, the N-pole direction (d-axis direction) of the permanent magnet synchronous machine is present on the side in which the absolute value is larger, so that the permanent magnet synchronous machine driving system cannot fail in the determination of the polarity of the magnetic pole due to the difference in the magnetic saturation characteristic of the d-axis inductance of the permanent magnet synchronous machine, as illustrated in Figs. 9 and 10 described above. Also, both of the monotonical decrease in the d-axis inductance relative to the change in the d-axis current and the magnetic saturation characteristic in which the current is increased with respect to the maximum point can be used, so that the polarity determination can be executed by the minimum d-axis current.

Finally, the simulation operation waveform examples of the initial magnetic pole position estimation of the permanent magnet synchronous machine according to the first embodiment are illustrated, and the specific effect of the first embodiment will be described.

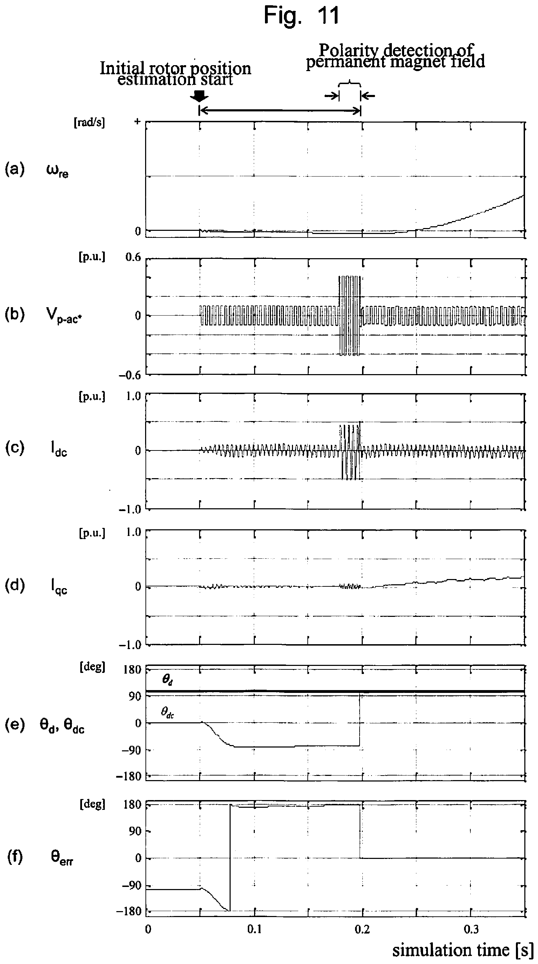

Figs. 11(a) to 11(f) are graphs illustrating the initial magnetic pole position estimation flow of the permanent magnet synchronous machine. In Figs. 11(a) to 11(f), Fig. 11(a) illustrates the waveform example of a driving frequency ωr of the permanent magnet synchronous machine 103, Fig. 11(b) illustrates the waveform example of the p-axis superimposition AC voltage command Vp-ac* outputted from the AC voltage component application unit 701, Fig. 11(c) illustrates the waveform example of the dc-axis current detection value Idc outputted from the dq coordinate conversion unit 114, Fig. 11(d) illustrates the waveform example of the qc-axis current detection value Iqc outputted from the dq coordinate conversion unit 114, Fig. 11(e) illustrates the waveform example of the rotor magnetic pole position $\theta$d of the permanent magnet synchronous machine 103 and the control phase $\theta$dc which has estimated the rotor magnetic pole position of the permanent magnet synchronous machine 103, and Fig. 11(f) illustrates the waveform example of a deviation amount $\Delta\theta$err between the rotor magnetic pole position $\theta$d of the permanent magnet synchronous machine 103 and the control phase $\theta$dc. It should be noted that in the simulation operation waveform examples in Figs. 11(a) to 11(f), the z-axis superimposition AC voltage command Vz-ac* outputted from the AC voltage component application unit 701 is 0, and the deviation amount $\Delta\theta$pd between the p-axis and the dc-axis outputted from the superimposition voltage phase correction table 702 is 0, so that the illustration of the operation waveforms are omitted. Also, for the amplitude value of the p-axis superimposition AC voltage command Vp-ac* applied, the value adjusted such that the magnitude of the current ripple is approximately 0.1 p.u. of the rated current of the permanent maanet synchronous machine is used in using the saliency and the value adjusted such that the magnitude of the current ripple is approximately 0.9 p.u. of the rated current of the permanent magnet synchronous machine is used in using the magnetic saturation, but the current ripple superimposed can be adjusted to any magnitude. Also, in the simulation operation waveform examples in Figs. 11(a) to 11(f), the time required to estimate the initial magnetic pole position until the permanent magnet synchronous machine 103 is started is set to approximately 150 ms, but in practical use, the estimation time can be further shortened.

In the initial magnetic pole position estimation of the permanent magnet synchronous machine, first, the high frequency voltage is applied to the permanent magnet synchronous machine to generate the current ripple, and the change in current due to the saliency of the permanent magnet synchronous machine is used to estimation calculate the axis error estimation value $\Delta\theta$c^, which is PLL (Phase Locked Loop) controlled to be 0, thereby estimating the magnetic pole position. And, since the saliency use type cannot determine the polarity of the magnetic pole of the permanent magnet synchronous machine, the polarity determination using the magnetic saturation characteristic is finally executed to estimate the initial magnetic pole position. It should be noted that in Figs. 11(a) to 11(f), the amplitude of the high frequency voltage applied is changed according to the magnetic pole position estimation using the saliency and the period in which the polarity determination using the magnetic saturation phenomenon is executed. This can calculate the axis error estimation value $\Delta\theta$c^ by the superimposition of the smaller current ripple than the case where the magnetic saturation characteristic is used, since the saliency ratio is larger than the case where the permanent magnet synchronous machine is driven, before the permanent magnet synchronous machine is started and when the load current does not flow. On the other hand, the magnitude of the current ripple superimposed for determining the polarity is increased to extract the magnetic saturation characteristic with high accuracy at determining the polarity. Also, Figs. 11(a) to 11(f) illustrate the simulation operation waveform examples of the start of the permanent magnet synchronous machine by the initial magnetic pole position estimation from the state where the permanent magnet synchronous machine stops, but the initial magnetic pole position estimation from the state where the permanent magnet synchronous machine rotates (coasting operation state) can be executed by the same procedure.

Further, in the initial magnetic pole position estimation of the permanent magnet synchronous machine, the simulation operation waveform examples when the conventional polarity determination method is used and when the polarity determination method of the first embodiment is used are illustrated, and the difference between the initial magnetic pole position estimation results will be described in detail. It should be noted that the magnetic saturation characteristic of the permanent magnet synchronous machine here will be described by taking, as an example, the case where the magnetic saturation characteristic has the characteristic such that the inductance in the magnet magnetic flux direction has the maximum point to monotonically decrease, relative to the increase in current in the N-pole direction as illustrated in Fig. 10.

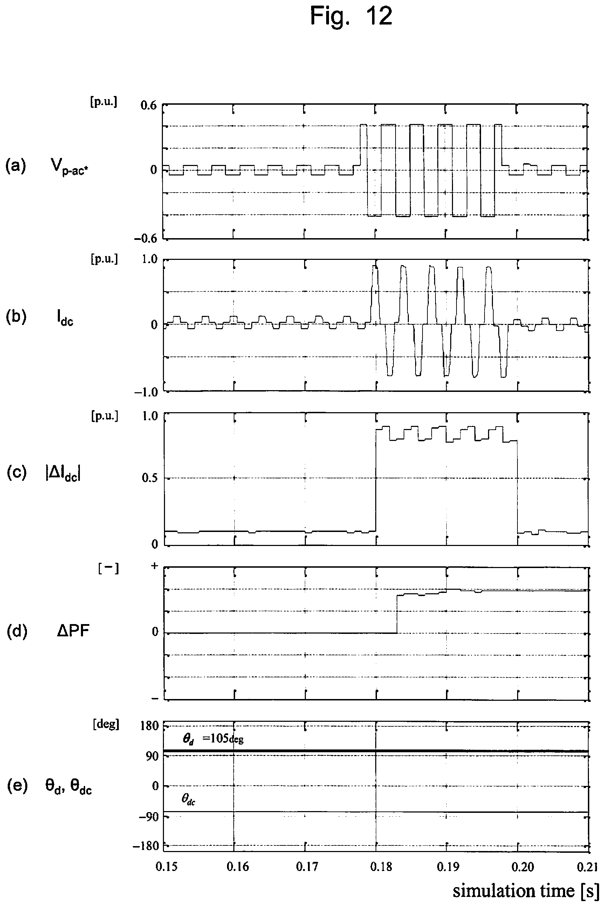

Figs. 12(a) to 12(e) are graphs illustrating the simulation operation waveforms of the initial magnetic pole position estimation of the permanent magnet synchronous machine when the conventional polarity determination method is used. It should be noted that the simulation operation waveform examples in Figs. 12(a) to 12(e) illustrate the operation waveforms in which the portion in which the polarity determination is executed is extracted in the initial magnetic pole position estimation flow of the permanent magnet synchronous machine described above. In Figs. 12(a) to 12(e), Fig. 12 (a) illustrates the waveform example of the p-axis superimposition AC voltage command Vp-ac* outputted from the AC voltage component application unit 701, Fig. 12(b) illustrates the waveform example of the dc-axis current detection value Idc outputted from the dq coordinate conversion unit 114, Fig. 12(c) illustrates the waveform example of an absolute value |$\Delta$Idc| taken by calculating an amount of change in the dc-axis current detection value Idc, Fig. 12(d) illustrates the waveform example of a polarity determination value $\Delta$PF in the conventional polarity determination method, and Fig. 12 (e) illustrates the waveform example of the rotor magnetic pole position $\theta$d of the permanent magnet synchronous machine 103 and the control phase $\theta$dc which has estimated the rotor magnetic pole position of the permanent magnet synchronous machine 103. Here, for example, the conventional polarity determination method calculates an amount of change in current on the positive side of the dc-axis current detection value Idc and an amount of change in current on the negative side of the dc-axis current detection value Idc, compares the magnitudes of those changes in current, and determines the polarity of the magnetic pole such that the side in which the change in current is larger is the N-pole direction. The polarity determination value ΔPF in Fig. 12(d) is obtained by taking the difference between the amount of change in current on the positive side of the dc-axis current detection value Idc and the amount of change in current on the negative side of the dc-axis current detection value Idc, thereby representing that when the polarity determination value ΔPF is positive, the dc-axis and the d-axis match, and that when the polarity determination value ΔPF is negative, the dc-axis is inverted (the phase difference of 180 degrees) .

In the simulation operation waveform examples of the initial magnetic pole position estimation of the permanent magnet synchronous machine in the case of using the conventional polarity determination method in Figs. 12(a) to 12(e), it is seen that when the simulation timu on the horizontal axis is at the point of time of 0.15 s, the magnetic pole position θd of the permanent magnet synchronous machine 103 is 105 degrees, whereas the control phase θdc is converged to approximately -75 degrees by the magnetic pole position estimation using the saliency. From there, the determination of the polarity of the magnetic pole by the conventional method is executed, but as illustrated in Fig. 12(d), the polarity determination value ΔPF obtained by taking the difference between the amounts of change in current due to the magnetic saturation phenomenon used for determining the polarity of the magnetic pole is positive, so that it is determined that the converged control phase θdc is in the N-pole direction, which is found to fail in the polarity determination.

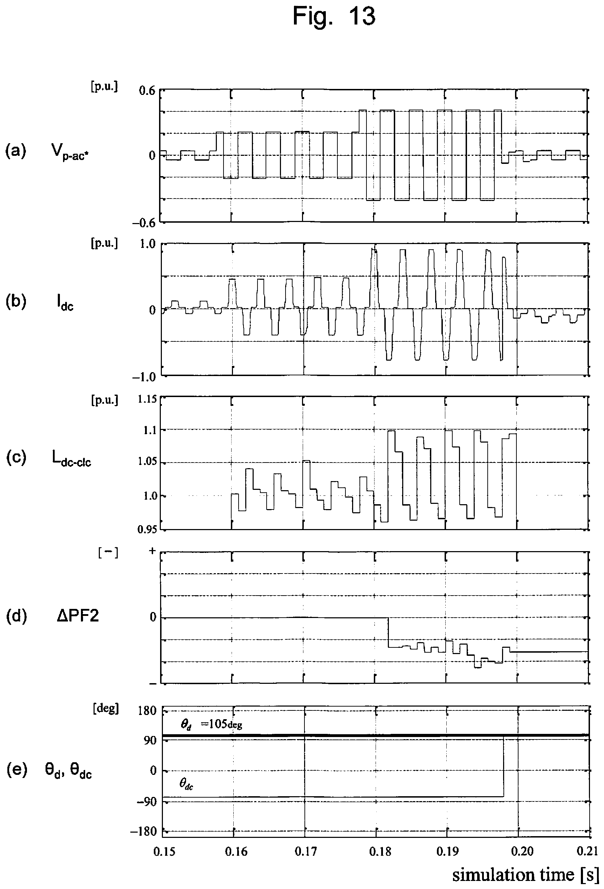

Next, Figs. 13(a) to 13(e) are graphs illustrating the simulation operation waveforms of the initial magnetic pole position estimation of the permanent magnet synchronous machine when the polarity determination method of the first embodiment is used. It should be noted that the simulation operation waveform examples in Figs. 13(a) to 13(e) illustrate the operation waveforms in which the portion in which the polarity determination is executed is extracted in the initial magnetic pole position estimation flow of the permanent magnet synchronous machine described above. In Figs. 13(a) to 13(e), Fig. 13(a) illustrates the waveform example of the p-axis superimposition AC voltage command Vp-ac* outputted from the AC voltage component application unit 701, Fig. 13(b) illustrates the waveform example of the dc-axis current detection value Idc outputted from the dq coordinate conversion unit 114, Fig. 13(c) illustrates the waveform example of an inductance calculation value Ldc-clc relative to the change in current of the dc-axis current detection value Idc, Fig. 13 (d) illustrates the waveform example of a polarity determination value ΔPF2 in the polarity determination method of the first embodiment, and Fig. 13(e) illustrates the waveform example of the rotor magnetic pole position θd of the permanent magnet synchronous machine 103 and the control phase θdc which has estimated the rotor magnetic pole position of the permanent magnet synchronous machine 103. Here, the polarity determination value ΔPF2 in Fig. 13 (d) is obtained by taking the difference between the absolute value | ΔLdc+ | of the deviation amount ΔLdc+ in the inductance relative to the change in current of positive value and the absolute value | ΔLdc- | of the deviation amount ΔLdc- in the inductance relative to the change in current of negative value according to the first embodiment, thereby representing that when the polarity determination value ΔPF2 is positive, the dc-axis and the d-axis match, and that when the polarity determination value ΔPF2 is negative, the dc-axis is inverted (the phase difference of 180 degrees).

In the simulation operation waveform examples of the initial magnetic pole position estimation of the permanent magnet synchronous machine in the case of using the polarity determination method of the first embodiment in Figs. 13(a) to 13(e), when the simulation time on the horizontal axis is at the point of time of 0.15 s, the control phase θdc is converged to approximately -75 degrees by the magnetic pole position estimation using the saliency, which is the same as Figs. 12(a) to 12(e), but when from there, the determination of the polarity of the magnetic pole according to the first embodiment is executed, the polarity determination value ΔPF2 obtained by taking the difference between the amounts of change in inductance due to the magnetic saturation phenomenon used for determining the polarity of the magnetic pole is negative, so that it is determined that the converged control phase θdc is in the S-pole direction, and 180 degrees is added to the control phase θdc at the point of time of 0.198 s. As the result of the polarity determination according to the first embodiment, the rotor magnetic pole position θd of the permanent magnet synchronous machine 103 and the control phase θdc match, which is found to be successful in the initial magnetic pole position estimation.

As described above, according to this embodiment, the polarity of the magnetic pole is determined from the absolute value of the amount of change in the inductance value when the change in current is given to the permanent magnet synchronous machine. From this, the determination values of the polarity determination cannot be reversed on the basis of the large-and-small relationship due to the magnetic saturation characteristic of the inductance of the permanent magnet synchronous machine, so that it is possible to achieve a driving device for the permanent magnet synchronous machine that does not fail in the determination of the polarity of the magnetic pole, even in the permanent magnet synchronous machine in which the magnetic saturation characteristic of the inductance is unknown.

Also, the magnetic saturation characteristic of the inductance of the permanent magnet synchronous machine can be greatly changed, for example, when the temperature of the permanent magnet is changed or irreversible demagnetization occurs in the magnet, and even in the same permanent magnet synchronous machine, these change factors can reverse, on the basis of the large-and-small relationship, the change in current in the N-pole direction (magnetic pole direction) and the change in current in the S-pole direction, and can reverse, on the basis of the large-and-small relationship, the inductance in the N-pole direction (magnetic pole direction) and the inductance in the S-pole direction, thereby incorrectly determining the polarity of the magnetic pole. For example, even the permanent magnet synchronous machine which has the magnetic saturation characteristic as illustrated in Fig. 9 can be changed to have the magnetic saturation characteristic as illustrated in Fig. 10 due to the change in the temperature of the permanent magnet and the occurrence of the irreversible demagnetization in the magnet. According to this embodiment, by using the characteristic in which the inductance when the current is made to flow in the N-pole direction of the permanent magnet always involves some change due to the magnetic saturation phenomenon, but as compared with that, the inductance on the S-pole side is hardly changed, the polarity of the magnetic pole is determined on the basis of the large-and-small relationship between the amounts of change in inductance, thereby making it possible to determine the polarity of the magnetic pole, irrespective of the change in current in the N-pole direction due to the magnetic saturation phenomenon and the decreasing or increasing characteristic of the inductance, so that even when the temperature of the magnet is changed or the irreversible demagnetization occurs, it is possible to achieve the driving device for the permanent magnet synchronous machine which does not fail in the determination of the polarity of the magnetic pole of the permanent magnet synchronous machine.

Second Embodiment

In a second embodiment, by devising the sampling points of the dc-axis current detection values Idc for calculating the first to fourth inductance values, the application time of the high frequency voltage superimposed at determining the polarity of the magnetic pole is shorter than the first embodiment, and as a result, the pulsation current at determining the polarity is reduced, so that it is possible to achieve the driving device for the permanent magnet synchronous machine which has higher efficiency and is less noisy.

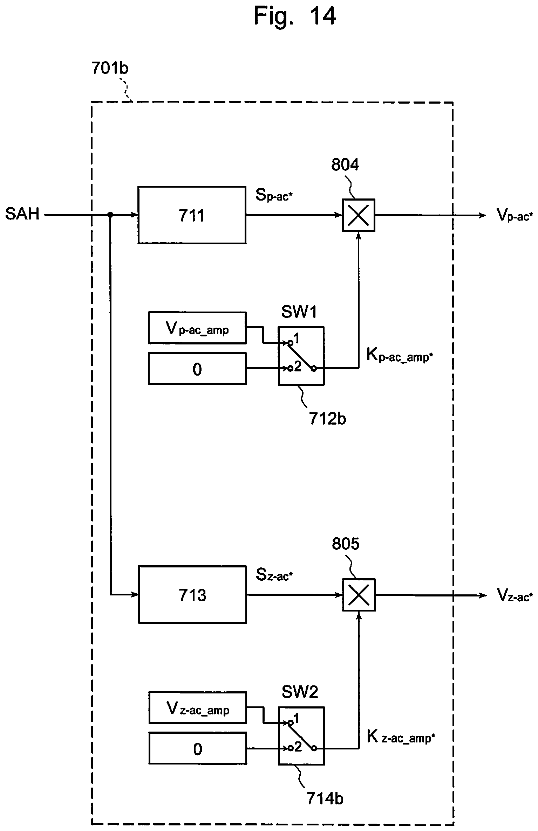

Fig. 14 is a block diagram illustrating the configuration example of the AC voltage component application unit of the second embodiment. The second embodiment can be achieved by using an AC voltage component application unit 701b in place of the AC voltage component application unit 701 of the first embodiment.

In Fig. 14, the AC voltage component application unit 701b is provided with the AC waveform generators 711 and 713, a switching device 712b which switches the magnitude of the amplitude of the AC voltage waveform, a switching device 714b which switches the magnitude of the amplitude of the AC voltage waveform, a multiplier 804b which multiplies the output value of the AC waveform generator 711 and the output value of the switching device 712b and outputs the multiplication result, and a multiplier 805b which multiplies the output value of the AC waveform generator 713 and the output value of the switching device 714b and outputs the multiplication result. In the AC voltage component application unit 701b, the AC waveform generator 711 outputs the p-axis AC voltage waveform Sp-ac* for generating the pulsation current in the permanent magnet synchronous machine 103 on the basis of the current detection timing setting signal SAH. In the AC voltage component application unit 701b, the AC waveform generator 713 outputs the z-axis AC voltage waveform Sz-ac* for generating the pulsation current in the permanent magnet synchronous machine 103 on the basis of the current detection timing setting signal SAH.

Also, the switching device 712b is a switching device which controls the amplitude of the p-axis AC voltage waveform Sp-ac* outputted by the AC waveform generator 711 and superimposed on the pz-axis coordinate system, and the switching device 714b is a switching device which controls the amplitude of the z-axis AC voltage waveform Sz-ac* outputted by the AC waveform generator 713 and superimposed on the pz-axis coordinate system. To the first embodiment, in the second embodiment, the number of output states of the amplitude command value of the AC voltage waveform taken by each of the switching devices 712b and 714b is two. The multiplier 804b multiplies the p-axis AC voltage waveform Sp-ac* outputted by the AC waveform generator 711 and the p-axis AC voltage component amplitude command Kp-ac_amp* outputted by the switching device 712b, and calculates and outputs the p-axis superimposition AC voltage command Vp-ac* . The multiplier 805b multiplies the z-axis AC voltage waveform Sz-ac* outputted by the AC waveform generator 713 and the z-axis AC voltage component amplitude command Kz-ac_amp* outputted by the switching device 714b, and calculates and outputs the z-axis superimposition AC voltage command Vz-ac*.

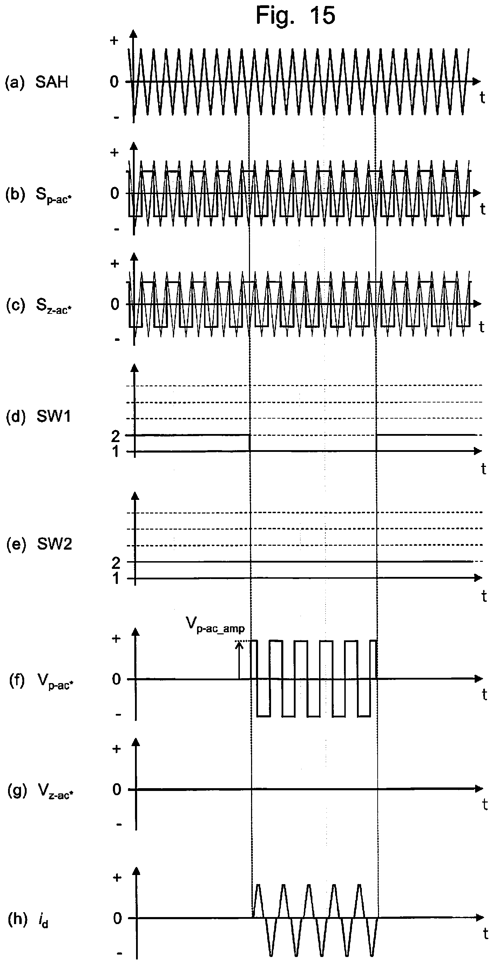

Next, the specific operation of the magnetic pole polarity determination of the second embodiment will be described. Figs. 15(a) to 15(h) are graphs illustrating the relationships between the SW operations and the output voltage waveforms of the superimposition voltage calculation unit of the second embodiment. In Figs. 15(a) to 15(h), Fig. 15 (a) illustrates the waveform example of the current detection timing setting signal SAH which decides the cycle of the rectangular wave signal generated by the AC waveform generators 711 and 713 in the AC voltage component application unit 701b. Fig. 15 (b) illustrates the waveform example of the p-axis AC voltage waveform Sp-ac* outputted from the AC waveform generator 711. Fig. 15(c) illustrates the waveform example of the z-axis AC voltage waveform Sz-ac* outputted from the AC waveform generator 713. Fig. 15(d) illustrates the switching example of the switching command SW1 of the switching device 712b. Fig. 15(e) illustrates the switching example of the switching command SW2 of the switching device 714b. Fig. 15(f) illustrates the waveform example of the p-axis superimposition AC voltage command Vp-ac* which is the calculation result of the multiplier 804b. Fig. 15(g) illustrates the waveform example of the z-axis superimposition AC voltage command Vz-ac* which is the calculation result of the multiplier 805b. Fig. 15(h) illustrates the waveform example of the d-axis current id flowing through the permanent magnet synchronous machine 103 at determining the polarity of the magnetic pole of the second embodiment. It should be noted that in this embodiment, the p-axis AC voltage waveform Sp-ac* outputted from the AC waveform generator 711 and the z-axis AC voltage waveform Sz-ac* outputted from the AC waveform generator 713 are the rectangular waves, but sine waves may be used.

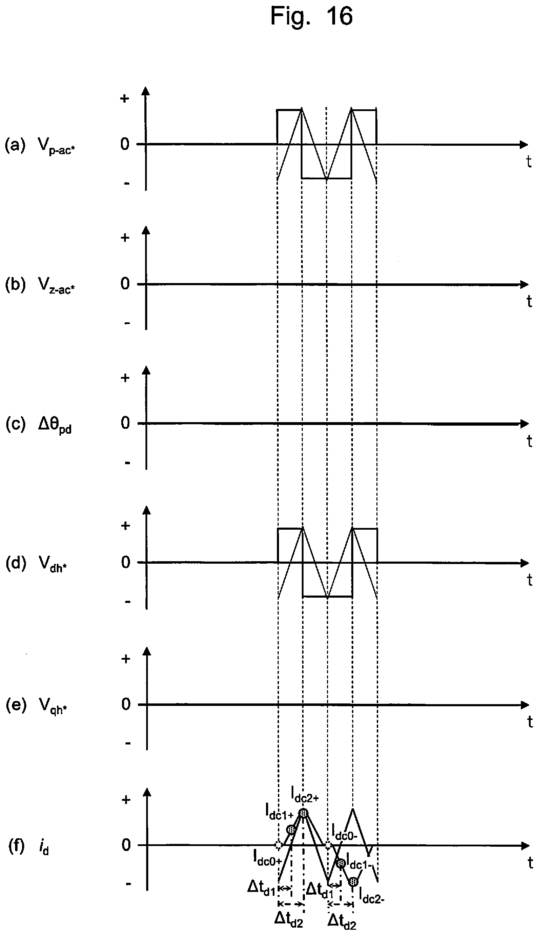

Figs. 16(a) to 16(f) are graphs illustrating the input signals and the current detection points of the d-axis current of the magnetic pole polarity determination unit of the second embodiment. In Figs. 16(a) to 16(f), Fig. 16(a) illustrates the waveform example of the p-axis superimposition AC voltage command Vp-ac* outputted from the AC voltage component application unit 701b. Fig. 16(b) illustrates the waveform example of the z-axis superimposition AC voltage command Vz-ac* outputted from the AC voltage component application unit 701b. Fig. 16(c) illustrates the waveform example of the deviation amount Δθpd between the p-axis and the dc-axis outputted from the superimposition voltage phase correction table 702. Fig. 16(d) illustrates the waveform example of the dc-axis superimposition voltage command value Vdh* outputted from the superimposition voltage calculation unit 117. Fig. 16(e) illustrates the waveform example of the qc-axis superimposition voltage command value Vqh* outputted from the superimposition voltage calculation unit 117. Fig. 16(f) illustrates the example of the waveform of the d-axis current id flowing through the permanent magnet synchronous machine 103 at determining the polarity of the magnetic pole and the sample points of the current detection values used for calculating the d-axis inductances of the second embodiment.

Referring to Figs. 15(a) to 15(h) and Figs.16(a) to 16(f), the operations of the superimposition voltage calculation unit 117 and the magnetic pole polarity determination unit 201 and the method of determining the polarity of the magnetic pole of the second embodiment will be described. It should be noted that in the waveform examples in Figs. 15(a) to 15(h) and Figs. 16(a) to 16(f), the deviation amount Δθpd between the p-axis and the dc-axis and the deviation amount Δθc between the d-axis and the dc-axis are in the state of 0.

In the superimposition voltage calculation unit 117, the AC waveform generator 711 calculates the p-axis AC voltage waveform Sp-ac* on the basis of the current detection timing setting signal SAH outputted by the PWM signal controller 115, and operates the switching state of the switching device 712b, thereby controlling the p-axis superimposition AC voltage command Vp-ac*. In the superimposition voltage calculation unit 117, the AC waveform generator 713 calculates the z-axis AC voltage waveform Sz-ac* on the basis of the current detection timing setting signal SAH outputted by the PWM signal controller 115, and operates the switching state of the switching device 714b, thereby controlling the z-axis superimposition AC voltage command Vz-ac*.

In Figs. 15(a) to 15(h), the switching command SW1 of the switching device 712b in Fig. 15 (d) is switched from the state 2 where 0 is set to the amplitude command, to the state 1 where the p-axis AC voltage amplitude command Vp-ac_amp is set to the amplitude command, so that the rectangular wave voltage command in which the voltage amplitude is the Vp-ac_amp is outputted to the p-axis superimposition AC voltage command Vp-ac* in Fig. 15(f). After the given time has elapsed, the switching command SW1 is switched from the state 1 to the state 2, and the output of the p-axis superimposition AC voltage command Vp-ac* in Fig. 15(f) is brought to 0.

It should be noted that in this embodiment, the switching command SW2 in Fig. 15(e) is always in the state 2 where 0 is set to the amplitude command, so that the output of the z-axis superimposition AC voltage command Vz-ac* in Fig. 15(g) is brought to 0. Also, in this embodiment, since the deviation amount Δθpd between the p-axis and the dc-axis and the deviation amount Δθc between the d-axis and the dc-axis are in the state of 0, the p-axis and the dc-axis match, so that the p-axis superimposition AC voltage command Vp-ac* and the dc-axis superimposition voltage command value Vdh* have the same waveform, and the z-axis superimposition AC voltage command Vz-ac* and the qc-axis superimposition voltage command value Vqh* have the same waveform. By the dc-axis superimposition voltage command value Vdh* and the qc-axis superimposition voltage command value Vqh* outputted by the superimposition voltage calculation unit 117, the pulsation current as illustrated in Fig. 15 (h) can be made to flow through the permanent magnet synchronous machine.

The magnetic pole polarity determination unit 201 estimation calculates the d-axis inductance value from the pulsation current of the d-axis which has flowed through the permanent magnet synchronous machine 103 by the voltage application of the dc-axis superimposition voltage command value Vdh* and the qc-axis superimposition voltage command value Vqh* outputted by the superimposition voltage calculation unit 117, determines, from the calculation result, the polarity of the magnetic pole of the permanent magnet synchronous machine 103, and outputs the magnetic pole polarity correction phase θpn.

In Figs. 16(a) to 16(f), as described above, by the voltage application of the dc-axis superimposition voltage command value Vdh* illustrated in Fig. 16(d) and the qc-axis superimposition voltage command value Vqh* illustrated in Fig. 16(e), the pulsation current as illustrated in Fig. 16(f) is generated in the permanent magnet synchronous machine 103.

The inductance calculation unit 210 of the magnetic pole polarity determination unit 201 calculates the d-axis inductance value from the dc-axis current detection value Idc sampled at the predetermined timing by the current detection unit 116. Fig. 16(f) illustrates the sampling points of the dc-axis current detection values Idc necessary for determining the polarity of the magnetic pole of the second embodiment. In this embodiment, for example, the sampling of the dc-axis current detection value Idc for calculating the d-axis inductance value uses the current detection timing setting signal SAH as the triangle wave carrier to have the peak/valley timing of the triangle wave carrier, and besides, has a detection timing to perform the sampling even at the middle point between the peak and the valley.

First, the first inductance calculation unit 211 calculates the first inductance value Ldc1+ relative to the change in current of positive value on the dc-qc-axis coordinate system from the current values Idc0+ and Idc1+ at the sampling points of the dc-axis current detection values Idc illustrated in Fig. 16(f). The first inductance value Ldc1+ is calculated by, for example, the following equation (9).

Equation 9

$$L_{dc1+} = \frac{\Delta \Phi_{dc1+}}{\Delta I_{dc1+}} = \frac{\Delta \Phi_{dc1+}}{I_{dc1+} - I_{dc0+}} \cdots (9)$$

Next, the second inductance calculation unit 212 calculates the second inductance value Ldc2+ relative to the change in current of positive value on the dc-qc-axis coordinate system from the current values Idc2+ and Idc1+ at the sampling points of the dc-axis current detection values Idc illustrated in Fig. 16(f). The second inductance value Ldc2+ is calculated by, for example, the following equation (10).

Equation 10

$$L_{dc2+} = \frac{\Delta \Phi_{dc2+}}{\Delta I_{dc2+}} = \frac{\Delta \Phi_{dc2+}}{I_{dc2+} - I_{dc1+}} \cdots (10)$$

Next, the third inductance calculation unit 213 calculates the third inductance value Ldc1- relative to the change in current of negative value on the dc-qc-axis coordinate system from the current values Idc0- and Idc1- at the sampling points of the dc-axis current detection values Idc illustrated in Fig. 16 (f). The third inductance value Ldc1- is calculated by, for example, the following equation (11).

Equation 11

$$L_{dc1-} = \frac{\Delta \Phi_{dc1-}}{\Delta I_{dc1-}} = \frac{\Delta \Phi_{dc1-}}{I_{dc1-} - I_{dc0-}} \cdots (11)$$

Next, the fourth inductance calculation unit 214 calculates the fourth inductance value Ldc2- relative to the change in current of negative value on the dc-qc-axis coordinate system from the current values Idc1- and Idc2- at the sampling points of the dc-axis current detection values Idc illustrated in Fig. 16(f). The fourth inductance value Ldc2- is calculated by, for example, the following equation (12).

Equation 12

$$L_{dc2-} = \frac{\Delta \Phi_{dc2-}}{\Delta I_{dc2-}} = \frac{\Delta \Phi_{dc2-}}{I_{dc2-} - I_{dc1-}} \cdots (12)$$

The inductance calculation unit 210 outputs the Ldc1+, the Ldc2+, the Ldc1-, and the Ldc2- which are the calculation results of the first to fourth inductances, respectively, to the polarity determination and inversion processing unit 215, and like the first embodiment, the polarity determination and inversion processing unit 215 large-and-small compares the absolute value of the deviation amount in the inductance relative to the change in current of positive value and the absolute value of the deviation amount in the inductance relative to the change in current of negative value, and determines that the side in which the absolute value of the deviation amount in the inductance is larger is the N-pole direction (d-axis direction) of the permanent magnet synchronous machine 103.

Therefore, unlike the first embodiment, in the second embodiment, without superimposing the AC voltage having different amplitudes on the permanent magnet synchronous machine to generate the pulsation current having different amplitudes, the first to fourth inductances can be calculated by using the dc-axis current detection values at the current detection timings described in Figs. 16(a) to 16(f). As a result, the time to generate the pulsation current at determining the polarity of the magnetic pole is shorter than the first embodiment, so that the higher efficiency and the noise reduction of the driving device for the permanent magnet synchronous machine can be made.

It should be noted that in this embodiment, the sampling of the dc-axis current detection value Idc for calculating the d-axis inductance value has the detection cycle such that the current detection timing setting signal SAH is used as the triangle wave carrier, and the peak, the valley, and the middle between the peak and the valley of the triangle wave carrier are the sampling points, but the dc-axis current detection value Idc at the timing at which each of given times Δtd1 and Δtd2 has elapsed from the the peak/valley timing of the triangle wave carrier may be used for calculating the inductance.

Third Embodiment

In a third embodiment, a predetermined d-axis inductance value is used for the first inductance value and the third inductance value of the second embodiment, so that the sampling point of the dc-axis current detection value Idc is further less likely to be affected by the switching surge of the power converter, and it is thus possible to achieve the driving device for the permanent magnet synchronous machine which is more resistance to noise than the second embodiment.

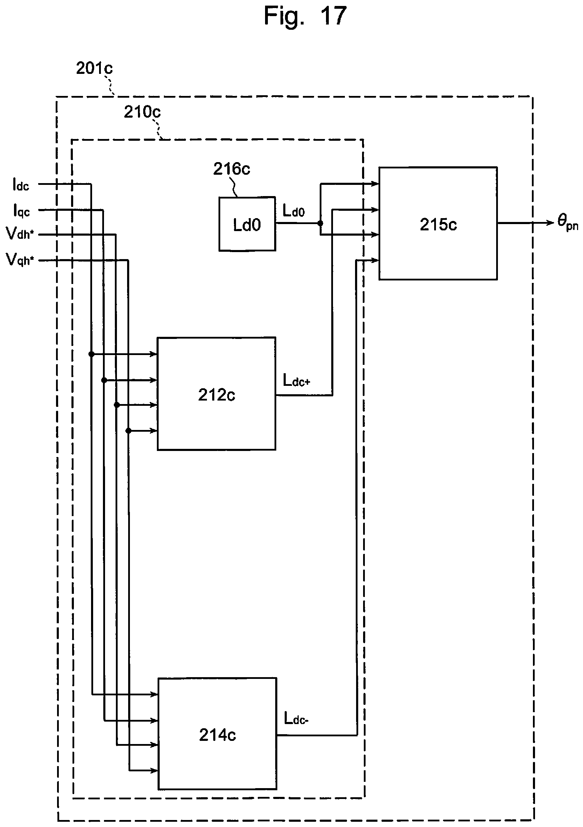

Fig. 17 is a block diagram illustrating the configuration example of the magnetic pole polarity determination unit of the third embodiment. The third embodiment can be achieved by using a magnetic pole polarity determination unit 201c in place of the magnetic pole polarity determination unit 201 of the second embodiment.

In Fig. 17, the magnetic pole polarity determination unit 201c is provided with an inductance calculation unit 210c, and a polarity determination and inversion processing unit 215c, the inductance calculation unit 210c being provided with a reference inductance output unit 216c which outputs a predetermined d-axis inductance value Ld0, an inductance calculation unit on current positive side 212c, and an inductance calculation unit on current negative side 214c.

In the magnetic pole polarity determination unit 201c, the inductance calculation unit on current positive side 212c calculates an inductance value Ldc+ relative to the change in current of positive value on the dc-qc-axis coordinate system on the basis of the positive current values of the dc-axis current detection value Idc and the qc-axis current detection value Iqc of the pulsation current flowing through the permanent magnet synchronous machine 103 and the dc-axis superimposition voltage command value Vdh* and the qc-axis superimposition voltage command value Vqh* which generate the pulsation current, and outputs the inductance value Ldc+ to the polarity determination and inversion processing unit 215c.

Also, the inductance calculation unit on current negative side 214c calculates an inductance value Ldc- relative to the change in current of negative value on the dc-qc-axis coordinate system on the basis of the negative current values of the dc-axis current detection value Idc and the qc-axis current detection value Iqc of the pulsation current flowing through the permanent magnet synchronous machine 103 and the dc-axis superimposition voltage command value Vdh* and the qc-axis superimposition voltage command value Vqh* which generate the pulsation current, and outputs the inductance value Ldc- to the polarity determination and inversion processing unit 215c.

Further, the reference inductance output unit 216c outputs the predetermined d-axis inductance value Ld0 to the polarity determination and inversion processing unit 215c. It should be noted that for the predetermined d-axis inductance value Ld0, for example, the design value of the d-axis inductance at no load in the permanent magnet synchronous machine is used.

And, the polarity determination and inversion processing unit 215c calculates a deviation amount ΔLdc+ between the predetermined d-axis inductance value Ld0 and the inductance value Ldc+ relative to the change in current of positive value on the dc-qc-axis coordinate system, and a deviation amount ΔLdc- between the predetermined d-axis inductance value Ld0 and the inductance value Ldc- relative to the change in current of negative value on the dc-qc-axis coordinate system. Hereafter, like the first and second embodiments, the polarity determination and inversion processing unit 215c calculates the absolute value of the deviation amount ΔLdc+ and the absolute value of the deviation amount ΔLdc-, and determines that the side in which the absolute value of the deviation amount in the inductance is larger is the N-pole direction (d-axis direction) of the permanent magnet synchronous machine 103. The polarity determination and inversion processing unit 215 uses the magnetic saturation characteristic of the iron core of the rotor to determine the N-pole direction of the rotor magnetic pole of the permanent magnet synchronous machine 103, and as a result, when the rotor magnetic pole position estimated by the position estimation calculation unit 204 is shifted by 180 degrees, the polarity determination and inversion processing unit 215c outputs the magnetic pole polarity correction phase θpn of 180 degrees to invert the control phase θdc. As the result of the polarity determination, when the N-pole direction of the magnetic pole of the rotor is not shifted from the control phase θdc, the polarity determination and inversion processing unit 215c outputs the magnetic pole polarity correction phase θpn of 0 degrees.

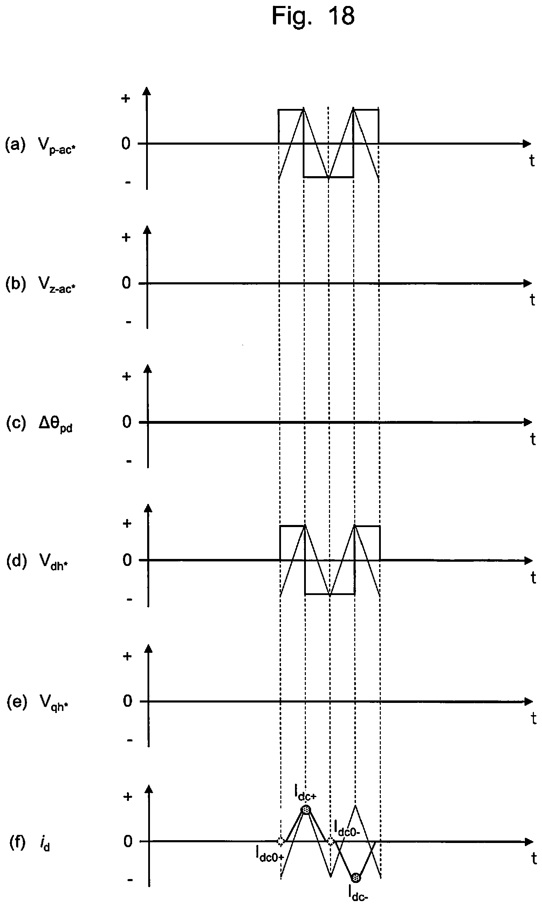

Next, the specific operation of the magnetic pole polarity determination of the third embodiment will be described. Figs. 18(a) to 18(f) are graphs illustrating the input signals and the current detection points of the d-axis current of the magnetic pole polarity determination unit of the third embodiment. It should be noted that the operation of the superimposition voltage calculation unit 117 of the third embodiment is the same as the operation of the superimposition voltage calculation unit 117 of the second embodiment, and the description thereof is thus omitted.

In Figs. 18(a) to 18(f), Fig. 18(a) illustrates the waveform example of the p-axis superimposition AC voltage command Vp-ac* outputted from the AC voltage component application unit 701b. Fig. 18 (b) illustrates the waveform example of the z-axis superimposition AC voltage command Vz-ac* outputted from the AC voltage component application unit 701b. Fig. 18(c) illustrates the waveform example of the deviation amount Δθpd between the p-axis and the dc-axis outputted from the superimposition voltage phase correction table 702. Fig. 18(d) illustrates the waveform example of the dc-axis superimposition voltage command value Vdh* outputted from the superimposition voltage calculation unit 117. Fig. 18(e) illustrates the waveform example of the qc-axis superimposition voltage command value Vqh* outputted from the superimposition voltage calculation unit 117. Fig. 18(f) illustrates the example of the waveform of the d-axis current id flowing through the permanent magnet synchronous machine 103 at determining the polarity of the magnetic pole and the sample points of the current detection values used for calculating the d-axis inductances of the second embodiment.

Referring to Figs. 18(a) to 18(f), the method of determining the polarity of the magnetic pole by the magnetic pole polarity determination unit 201c of the third embodiment will be described. The magnetic pole polarity determination unit 201c estimation calculates the d-axis inductance from the pulsation current of the d-axis which has flowed through the permanent magnet synchronous machine 103 by the voltage application of the dc-axis superimposition voltage command value Vdh* and the qc-axis superimposition voltage command value Vqh* outputted by the superimposition voltage calculation unit 117, determines, from the calculation result, the polarity of the magnetic pole of the permanent magnet synchronous machine 103, and outputs the magnetic pole polarity correction phase θpn. In Figs. 18(a) to 18(f), as described above, by the voltage application of the dc-axis superimposition voltage command value Vdh* illustrated in Fig. 18(d) and the qc-axis superimposition voltage command value Vqh* illustrated in Fig. 18(e), the pulsation current as illustrated in Fig. 18(f) is generated in the permanent magnet synchronous machine 103.

The inductance calculation unit 210c of the magnetic pole polarity determination unit 201c calculates the d-axis inductance value from the dc-axis current detection value Idc sampled at the predetermined timing by the current detection unit 116. Fig. 16(f) illustrates the sampling points of the dc-axis current detection values Idc necessary for determining the polarity of the magnetic pole of the third embodiment. In this embodiment, for example, the sampling of the dc-axis current detection value Idc for calculating the d-axis inductance value uses the current detection timing setting signal SAH as the triangle wave carrier to have the peak/valley timing of the triangle wave carrier.

First, the inductance calculation unit on current positive side 212c calculates the inductance value Ldc+ relative to the change in current of positive value on the dc-qc-axis coordinate system from the current values Idc0+ and Idc+ at the sampling points of the dc-axis current detection values Idc illustrated in Fig. 18(f). The inductance value Ldc+ is calculated by, for example, the following equation (13).

Equation 13

$$L_{dc+} = \frac{\Delta\Phi_{dc+}}{\Delta I_{dc+}} = \frac{\Delta\Phi_{dc+}}{I_{dc+} - I_{dc0+}} \cdots (13)$$

It should be noted that to calculate an amount of change ΔIdc+ in the dc-axis current in Equation 13, the deviation between the current values Idc0+ and Idc+ at the sampling points of the dc-axis current detection values Idc illustrated in Fig. 18(f) is used, but only the current value of the Idc+ may be sampled to be substituted for the amount of change ΔIdc+ in the dc-axis current. This is ditto for an amount of change ΔIdc- described later.

Next, the inductance calculation unit on current negative side 214c calculates the inductance value Ldc- relative to the change in current of negative value on the dc-qc-axis coordinate system from the current values Idc0- and Idc- at the sampling points of the dc-axis current detection values Idc illustrated in Fig. 18(f). The inductance value Ldc- is calculated by, for example, the following equation (14).

Equation 14

$$L_{dc-} = \frac{\Delta\Phi_{dc-}}{\Delta I_{dc-}} = \frac{\Delta\Phi_{dc-}}{I_{dc-} - I_{dc0-}} \cdots (14)$$

It should be noted that to calculate the amount of change ΔIdc- in the dc-axis current in Equation (14), the deviation between the current values Idc0- and Idc- at the sampling points of the dc-axis current detection values Idc illustrated in Fig. 18 (f) is used, but only the current value of the Idc- may be sampled to be substituted for the amount of change ΔIdc- in the dc-axis current.

The inductance calculation unit 210c outputs the Ldc+ and the Ldc- which are the calculation results of the d-axis inductances, and the predetermined d-axis inductance value Ld0 which is the reference, to the polarity determination and inversion processing unit 215c.

The polarity determination and inversion processing unit 215c calculates the deviation amount ΔLdc+ between the inductance value Ldc+ relative to the change in current of positive value and the predetermined d-axis inductance value Ld0. The d-axis inductance value Ld0 is calculated by, for example, the following equation (15) .
Equation 15

$$\Delta L_{dc+} = L_{dc+} - L_{d0} \cdots (15)$$

Further, the polarity determination and inversion processing unit 215c calculates the deviation amount ΔLdc-between the inductance value Ldc- relative to the change in current of negative value and the predetermined inductance value Ld0. The deviation amount ΔLdc- is calculated by, for example, the following equation (16).
Equation 16

$$\Delta L_{dc-} = L_{dc-} - L_{d0} \cdots (16)$$

In this way, by using the predetermined d-axis inductance value Ld0, two inductance values relative to the change in the positive current value and to the change in the negative current value are calculated, so that the sampling point of the dc-axis current detection value Idc uses the current detection timing setting signal SAH as the triangle wave carrier to have the detection cycle at the peak/valley timing of the triangle wave carrier. As a result, the lowering of the inductance calculation accuracy affected by the switching surge of the power converter, which is a concern in the current detection other than at the peak/valley timing of the triangle wave carrier of the second embodiment is improved.

And, the polarity determination and inversion processing unit 215c respectively calculates the absolute value |ΔLdc+| of the deviation amount ΔLdc+ in the inductance relative to the change in current of positive value and the absolute value |ΔLdc-| of the deviation amount ΔLdc- in the inductance relative to the change in current of negative value, compares the absolute values |ΔLdc+| and |ΔLdc-| on the basis of the large-and-small relationship, determines that the side in which the absolute value of the deviation amount in the inductance is larger is the N-pole direction (d-axis direction) of the permanent magnet synchronous machine 103, and outputs the magnetic pole polarity correction phase θpn with a value corresponding to the magnetic pole determination result.

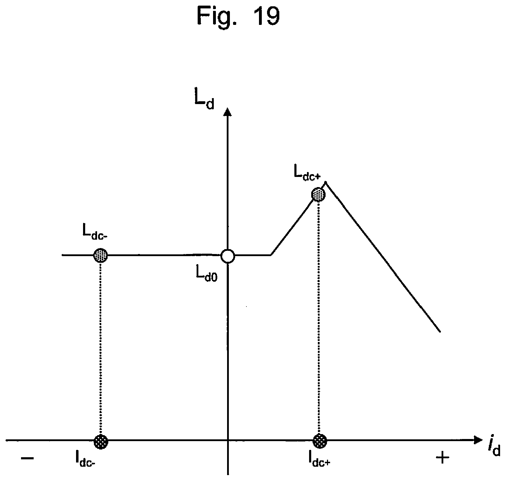

Fig. 19 is a graph illustrating the inductance values outputted by the inductance calculation unit of the third embodiment in the permanent magnet synchronous machine which has the characteristic such that the inductance in the magnet magnetic flux direction has the maximum point to monotonically decrease, relative to the increase in current in the N-pole direction. As illustrated in Fig. 19, even in the case of using the predetermined d-axis inductance value Ld0, when the absolute value |ΔLdc+| of the deviation amount in the inductance and the absolute value |ΔLdc-| of the deviation amount in the inductance are compared on the basis of the large-and-small relationship, it is found that the absolute value |ΔLdc+| of the deviation amount in the inductance in the N-pole direction is larger.

Therefore, unlike the second embodiment, in the third embodiment, without using the current detection value other than at the peak/valley timing of the triangle wave carrier, the predetermined d-axis inductance is used as the reference value, so that the deviation amount in the inductance relative to the change in current of positive value and the deviation amount in the inductance relative to the change in current of negative value can be calculated only by the current detection values at the peak/valley timing of the triangle wave carrier. As a result, the polarity determination is less likely to be affected by noise, as compared with the second embodiment.

Fourth Embodiment

In the first to third embodiments, the absolute value of the amount of change in the inductance of the permanent magnet synchronous machine due to the magnetic saturation characteristic is calculated from the pulsation current which is made to flow by applying only the AC voltage command to execute the determination of the polarity of the magnetic pole, whereas in a fourth embodiment, the determination of the polarity of the magnetic pole is executed from the pulsation current which is made to flow by applying the superimposition voltage command including the AC voltage component and the DC voltage component, so that it is possible to achieve the driving device for the permanent magnet synchronous machine in which noise due to the pulsation current generation with the determination of the polarity of the magnetic pole is less than the first to third embodiments.

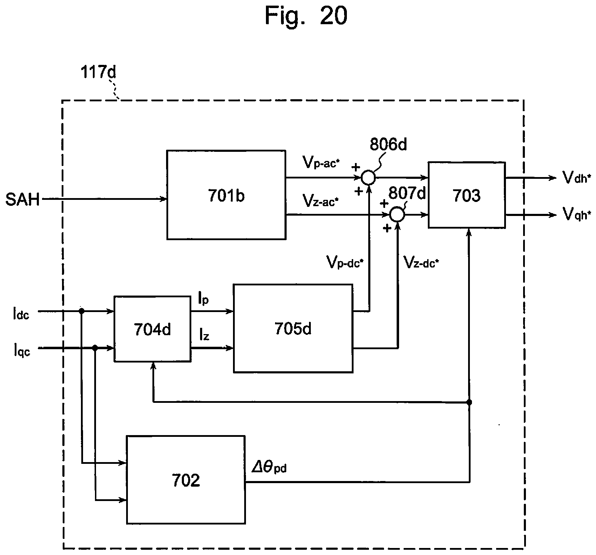

As compared with the first embodiment in Fig. 1, only the different portions of the components will be described below. Fig. 20 is a block diagram illustrating the configuration example of the superimposition voltage calculation unit of the fourth embodiment. The fourth embodiment can be achieved by using a superimposition voltage calculation unit 117d in place of the superimposition voltage calculation unit 117 of the first embodiment.

In Fig. 20, the superimposition voltage calculation unit 117d is provided with the AC voltage component application unit 701b, the superimposition voltage phase correction table 702, the dq coordinate conversion unit 703, a pz coordinate conversion unit 704d, a DC voltage component application unit 705d, and adders 806d and 807d.

The pz coordinate conversion unit 704d converts the dc-axis current detection value Idc outputted by the dq coordinate conversion unit 114, to a p-axis current detection value Ip on the basis of the deviation amount $\Delta\theta pd$ between the p-axis and the dc-axis outputted by the superimposition voltage phase correction table 702, and outputs the p-axis current detection value Ip to the DC voltage component application unit 705d. The pz coordinate conversion unit 704d converts the qc-axis current detection value Iqc outputted by the dq coordinate conversion unit 114, to a z-axis current detection value Iz on the basis of the deviation amount $\Delta\theta pd$ between the p-axis and the dc-axis outputted by the superimposition voltage phase correction table 702, and outputs the z-axis current detection value Iz to the DC voltage component application unit 705d.

The DC voltage component application unit 705d calculates a p-axis superimposition DC voltage command Vp-dc* on the basis of the p-axis current detection value Ip outputted by the pz coordinate conversion unit 704d, and outputs the p-axis superimposition DC voltage command Vp-dc* to the adder 806d. The DC voltage component application unit 705d calculates a z-axis superimposition DC voltage command Vz-dc* on the basis of the z-axis current detection value Iz outputted by the pz coordinate conversion unit 704d, and outputs the z-axis superimposition DC voltage command Vz-dc* to the adder 807d.

The AC voltage component application unit 701b calculates the p-axis superimposition AC voltage command Vp-ac* on the basis of the current detection timing setting signal SAH outputted by the PWM signal controller 115, and outputs the p-axis superimposition AC voltage command Vp-ac* to the adder 806d. The AC voltage component application unit 701b calculates the z-axis superimposition AC voltage command Vz-ac* on the basis of the current detection timing setting signal SAH outputted by the PWM signal controller 115, and outputs the z-axis superimposition AC voltage command Vz-ac* to the adder 807d.

The adder 806d adds the p-axis superimposition DC voltage command Vp-dc* and the p-axis superimposition AC voltage command Vp-ac*, and outputs the addition result to the dq coordinate conversion unit 703. The adder 807d adds the z-axis superimposition DC voltage command Vz-dc* and the z-axis superimposition AC voltage command Vz-ac*, and outputs the addition result to the dq coordinate conversion unit 703.

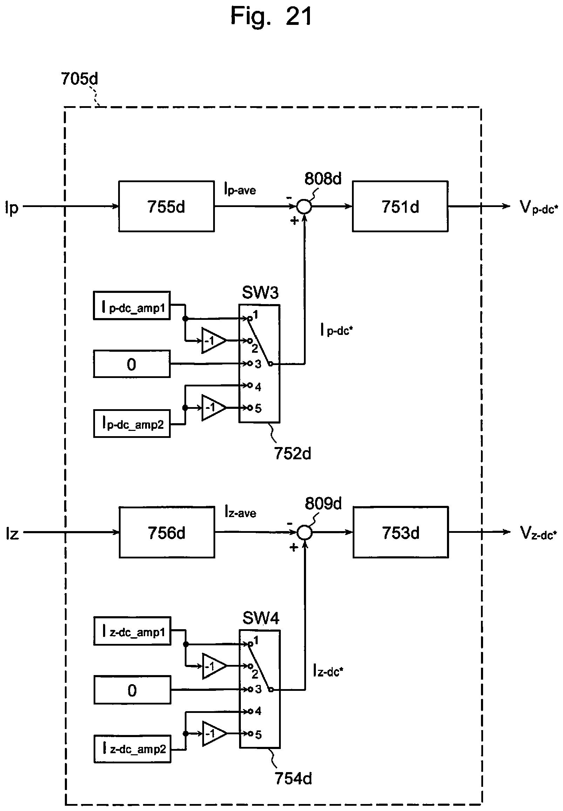

Fig. 21 is a block diagram illustrating the configuration example of the DC voltage component application unit of the fourth embodiment. As illustrated in Fig. 21, the DC voltage component application unit 705d is provided with current controllers 751d and 753d, a switching device 752d which switches the target current command value of the current control, a switching device 754d which switches the target current command value of the current control, a moving average calculator 755d for removing the high frequency ripple component of the p-axis current detection value Ip, a moving average calculator 756d for removing the high frequency ripple component of the z-axis current detection value Iz, a subtractor 808d which outputs the deviation between the output value of the switching device 752d and the output value of the moving average calculator 755d, and a subtractor 809d which outputs the deviation between the output value of the switching device 754d and the output value of the moving average calculator 756d.

The DC voltage component application unit 705d, receives, as an input, the deviation between a p-axis target current command value Ip-dc* of the current control outputted by the switching device 752d and a p-axis current detection moving average value Ip-ave outputted by the moving average calculator 755d, and outputs, as the p-axis superimposition DC voltage command Vp-dc*, the calculation result current-controlled by the current controller 751d. Also, the DC voltage component application unit 705d receives, as an input, the deviation between a z-axis target current command value Iz-dc* of the current control outputted by the switching device 754d and a z-axis current detection moving average value Iz-ave outputted by the moving average calculator 756d, and outputs, as the z-axis superimposition DC voltage command Vz-dc*, the calculation result current-controlled by the current controller 753d. It should be noted that in this embodiment, the moving average calculation is performed for removing the high frequency ripple component of each of the p-axis current detection value Ip and the z-axis current detection value Iz, but the calculation process using a first order delay filter, a band pass filter, and the like may be performed.

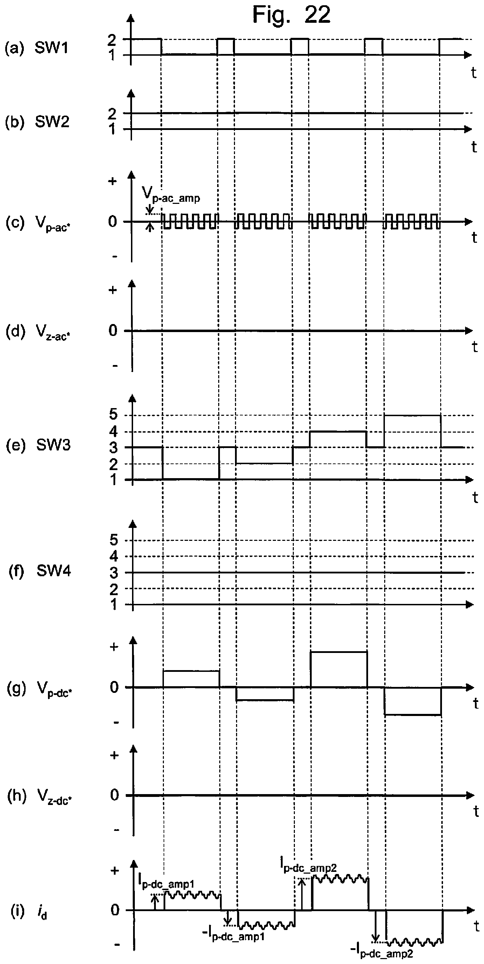

Next, the specific operation of the magnetic pole polarity determination of the fourth embodiment will be described. Figs. 22(a) to 22(i) are graphs illustrating the relationships between the SW operations and the output voltage waveforms of the superimposition voltage calculation unit of the fourth embodiment. Fig. 22(a) illustrates the switching example of the switching command SW1 of the switching device 712b of the AC voltage component application unit 701b. Fig. 22 (b) illustrates the switching example of the switching command SW2 of the switching device 714b of the AC voltage component application unit 701b. Fig. 22 (c) illustrates the waveform example of the p-axis superimposition AC voltage command Vp-ac* outputted by the AC voltage component application unit 701b. Fig. 22 (d) illustrates the waveform example of the z-axis superimposition AC voltage command Vz-ac* outputted by the AC voltage component application unit 701b. Fig. 22 (e) illustrates the switching example of a switching command SW3 of the switching device 752d of the DC voltage component application unit 705d. Fig. 22 (f) illustrates the switching example of a switching command SW4 of the switching device 754d of the DC voltage component application unit 705d. Fig. 22(g) illustrates the waveform example of the p-axis superimposition DC voltage command Vp-dc* outputted by the DC voltage component application unit 705d. Fig. 22(h) illustrates the waveform example of the z-axis superimposition DC voltage command Vz-dc* outputted by the DC voltage component application unit 705d. Fig. 22 (i) illustrates the waveform example of the d-axis current id flowing through the permanent magnet synchronous machine 103 at determining the polarity of the magnetic pole of the fourth embodiment. It should be noted that in this embodiment, the p-axis AC voltage waveform Sp-ac* outputted from the AC waveform generator 711 and the z-axis AC voltage waveform Sz-ac* outputted from the AC waveform generator 713 are the rectangular waves, but sine waves may be used.

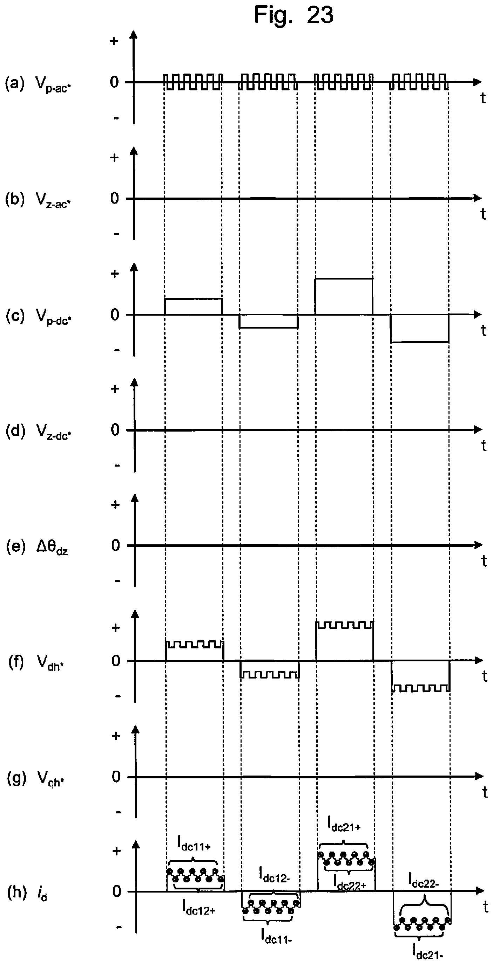

Figs. 23(a) to 23(h) are graphs illustrating the input signals and the current detection points of the d-axis current of the magnetic pole polarity determination unit of the fourth embodiment. Fig. 23 (a) illustrates the waveform example of the p-axis superimposition AC voltage command Vp-ac* outputted from the AC voltage component application unit 701b. Fig. 23(b) illustrates the waveform example of the z-axis superimposition AC voltage command Vz-ac* outputted from the AC voltage component application unit 701b. Fig. 23(c) illustrates the waveform example of the p-axis superimposition DC voltage command Vp-dc* outputted from the DC voltage component application unit 705d. Fig. 23(d) illustrates the waveform example of the z-axis superimposition DC voltage command Vz-dc* outputted from the DC voltage component application unit 705d. Fig. 23(e) illustrates the waveform example of the deviation amount Δθpd between the p-axis and the dc-axis outputted from the superimposition voltage phase correction table 702. Fig. 23(f) illustrates the waveform example of the dc-axis superimposition voltage command value Vdh* outputted from the superimposition voltage calculation unit 117d. Fig. 23(g) illustrates the waveform example of the qc-axis superimposition voltage command value Vqh* outputted from the superimposition voltage calculation unit 117d. Fig. 23(h) illustrates the example of the waveform of the d-axis current id flowing through the permanent magnet synchronous machine 103 at determining the polarity of the magnetic pole and the sample points of the current detection values used for calculating the d-axis inductances of the fourth embodiment.

Referring to Figs. 22(a) to 22(i) and Figs. 23(a) to 23(h), the operations of the superimposition voltage calculation unit 117d and the magnetic pole polarity determination unit 201 and the method of determining the polarity of the magnetic pole of the fourth embodiment will be described. It should be noted that in the waveform examples in Figs. 22(a) to 22(i) and Figs. 23(a) to 23(h), the deviation amount Δθpd between the p-axis and the dc-axis and the deviation amount Δθc between the d-axis and the dc-axis are in the state of 0.

In the superimposition voltage calculation unit 117d, the AC waveform generator 711 of the AC voltage component application unit 701b calculates the p-axis AC voltage waveform Sp-ac* on the basis of the current detection timing setting signal SAH outputted by the PWM signal controller 115, and operates the switching state of the switching device 712b, thereby controlling the p-axis superimposition AC voltage command Vp-ac*. In the superimposition voltage calculation unit 117d, the AC waveform generator 713 of the AC voltage component application unit 701b calculates the z-axis AC voltage waveform Sz-ac* on the basis of the current detection timing setting signal SAH outputted by the PWM signal controller 115, and operates the switching state of the switching device 714b, thereby controlling the z-axis superimposition AC voltage command Vz-ac*.

In Figs. 22(a) to 22(i), the switching command SW1 of the switching device 712b in Fig. 22(a) is switched from the state 2 where 0 is set to the amplitude command, to the state 1 where the p-axis AC voltage amplitude command Vp-ac_amp is set to the amplitude command, so that the rectangular wave voltage command in which the voltage amplitude is the Vp-ac_amp is outputted to the p-axis superimposition AC voltage command Vp-ac* in Fig. 22(c). After the given time has elapsed, the switching command SW1 is switched from the state 1 to the state 2, and the output of the p-axis superimposition AC voltage command Vp-ac* in Fig. 22(c) is brought to 0.

It should be noted that in this embodiment, the switching command SW2 of the switching device 714b in Fig. 22(b) is always in the state 2 where 0 is set to the amplitude command, so that the output of the z-axis superimposition AC voltage command Vz-ac* in Fig. 22 (d) is brought to 0. Also, the DC voltage component application unit 705d operates the switching states of the switching devices 752d and 754d, and changes the output of at least one of the p-axis target current command value Ip-dc* and the z-axis target current command value Iz-dc* of the current control, thereby controlling the p-axis superimposition DC voltage command Vp-dc* outputted from the current controller 751d and the z-axis superimposition DC voltage command Vz-dc* outputted from the current controller 753d.

In Figs. 22(a) to 22(i), the switching command SW3 of the switching device 752d in Fig. 22 (e) is switched from the state 3 where 0 is set to the target current command value, to the state 1 where a first p-axis DC current amplitude command Ip-dc_amp1 is set to the target current command, so that the calculation result of the p-axis current control in which the target current command is the Ip-dc_amp1 is outputted to the p-axis superimposition DC voltage command Vp-dc* in Fig. 22 (g). After the given time has elapsed, the switching command SW3 is switched from the state 1 to the state 3, and the calculation result of the p-axis current control in which the target current command is 0 is outputted to the p-axis superimposition DC voltage command Vp-dc* in Fig. 22(g).

Further, the switching command SW3 is switched from the state 3 to the state 2 where the value obtained by inverting the sign of the first p-axis DC current amplitude command Ip-dc_amp1 is set to the target current command, so that the calculation result of the p-axis current control in which the target current command is -1×Ip-dc_amp1 is outputted to the p-axis superimposition DC voltage command Vp-dc* in Fig. 22 (g). After the given time has elapsed, the switching command SW3 is switched from the state 2 to the state 3, and the calculation result of the p-axis current control in which the target current command is 0 is outputted to the p-axis superimposition DC voltage command Vp-dc* in Fig. 22(g).

Further, the switching command SW3 is switched from the state 3 to the state 4 where a second p-axis DC current amplitude command Ip-dc_amp2 different from the first p-axis DC current amplitude command is set to the target current command, so that the calculation result of the p-axis current control in which the target current command is the Ip-dc_amp2 is outputted to the p-axis superimposition DC voltage command Vp-dc* in Fig. 22(g). After the given time has elapsed, the switching command SW3 is switched from the state 1 to the state 3, and the calculation result of the p-axis current control in which the target current command is 0 is outputted to the p-axis superimposition DC voltage command Vp-dc* in Fig. 22(g).

Further, the switching command SW3 is switched from the state 3 to the state 5 where the value obtained by inverting the sign of the second p-axis DC current amplitude command Ip-dc_amp2 is set to the target current command, so that the calculation result of the p-axis current control in which the target current command is -1×Ip-dc_amp2 is outputted to the p-axis superimposition DC voltage command Vp-dc* in Fig. 22 (g) . After the given time has elapsed, the switching command SW3 is switched from the state 5 to the state 3, and the calculation result of the p-axis current control in which the target current command is 0 is outputted to the p-axis superimposition DC voltage command Vp-dc* in Fig. 22(g).

It should be noted that in this embodiment, the switching command SW4 of the switching device 754b in Fig. 22(f) is always in the state 3 where 0 is set to the target current command of the current control, so that the calculation result of the z-axis current control in which the target current command is 0 is outputted to the z-axis superimposition DC voltage command Vz-dc* in Fig. 22(h). The dq coordinate conversion unit 703 converts the superimposition voltage command on the pz-axis coordinate system in which the p-axis superimposition DC voltage command Vp-dc* and the p-axis superimposition AC voltage command Vp-ac* are synthesized, to the dc-axis superimposition voltage command value Vdh* on the basis of the deviation amount $\Delta\theta pd$ between the p-axis and the dc-axis outputted by the superimposition voltage phase correction table 702, and outputs the dc-axis superimposition voltage command value Vdh*. The dq coordinate conversion unit 703 converts the superimposition voltage command on the pz-axis coordinate system in which the z-axis superimposition DC voltage command Vz-dc* and the z-axis superimposition AC voltage command Vz-ac* are synthesized, to the qc-axis superimposition voltage command value Vqh* on the basis of the deviation amount $\Delta\theta pd$ between the p-axis and the dc-axis outputted by the superimposition voltage phase correction table 702, and outputs the qc-axis superimposition voltage command value Vqh*.

It should be noted that in this embodiment, since the deviation amount $\Delta\theta pd$ between the p-axis and the dc-axis and the deviation amount $\Delta\theta c$ between the d-axis and the dc-axis are in the state of 0, the p-axis and the dc-axis match. By the superimposition voltage command values Vdh* and Vqh* outputted by the superimposition voltage calculation unit 117d, the pulsation current as illustrated in Fig. 22(h) can be made to flow through the permanent magnet synchronous machine.

The magnetic pole polarity determination unit 201 estimation calculates the d-axis inductance from the pulsation current of the d-axis which has flowed through the permanent magnet synchronous machine 103 by the voltage application of the superimposition voltage command values Vdh* and Vqh* outputted by the superimposition voltage calculation unit 117d, determines, from the calculation result, the polarity of the magnetic pole of the permanent magnet synchronous machine 103, and outputs the magnetic pole polarity correction phase $\theta pn$ according to the determination result. In Figs. 23(a) to 23(h), as described above, by the voltage application of the superimposition voltage command value Vdh* illustrated in Fig. 23 (f) and the qc-axis superimposition voltage command value Vqh* illustrated in Fig. 23(g), the d-axis current including the DC component and the AC component as illustrated in Fig. 23(h) is generated in the permanent magnet synchronous machine 103.

The inductance calculation unit 210 of the magnetic pole polarity determination unit 201 calculates the d-axis inductance value from the dc-axis current detection value Idc sampled at the predetermined timing by the current detection unit 116. Fig. 23(h) illustrates the sampling points of the dc-axis current detection values Idc necessary for determining the polarity of the magnetic pole of the fourth embodiment. In this embodiment, for example, the sampling of the dc-axis current detection value Idc for calculating the d-axis inductance value uses the current detection timing setting signal SAH as the triangle wave carrier to have the peak/valley cycle of the triangle wave carrier.

First, the first inductance calculation unit 211 calculates the first inductance value Ldc1+ relative to the change in current of positive value on the dc-qc-axis coordinate system, from the current values Idc11+ and Idc12+ at the sampling points of the dc-axis current detection values Idc illustrated in Fig. 23 (h) . It should be noted that for each of the current values Idc11+ and Idc12+, the result obtained by calculating the average value of the current detection values in a plurality of AC voltage applications may be used. The first inductance value Ldc1+ is calculated by, for example, the following equation (17).
Equation 17

$$L_{dc1+} = \frac{\Delta\Phi_{dc1+}}{\Delta I_{dc1+}} = \frac{\Delta\Phi_{dc1+}}{I_{dc11+} - I_{dc12+}} \cdot\cdot\cdot (17)$$

It should be noted that to calculate an amount of change ΔIdc1+ in the dc-axis current in Equation (17), the deviation between the current values Idc11+ and Idc12+ at the sampling points of the dc-axis current detection values Idc illustrated in Fig. 23(h) is used, but only the current value of the Idc11+ may be sampled to be substituted for the amount of change ΔIdc1+ in the dc-axis current. This is ditto for an amount of change ΔIdc1-, an amount of change ΔIdc2+, and an amount of change ΔIdc2- described later.

Next, the third inductance calculation unit 213 calculates the third inductance value Ldc1- relative to the change in current of negative value on the dc-qc-axis coordinate system, from the current values Idc11- and Idc12- at the sampling points of the dc-axis current detection values Idc illustrated in Fig. 23 (h) . It should be noted that for each of the current values Idc11- and Idc12-, the result obtained by calculating the average value of the current detection values in a plurality of AC voltage applications may be used. The third inductance value Ldc1- is calculated by, for example, the following equation (18).
Equation 18

$$L_{dc1-} = \frac{\Delta\Phi_{dc1-}}{\Delta I_{dc1-}} = \frac{\Delta\Phi_{dc1-}}{I_{dc11-} - I_{dc12-}} \cdot\cdot\cdot (18)$$

It should be noted that to calculate the amount of change ΔIdc1-in the dc-axis current in Equation (18), the deviation between the current values Idc11- and Idc12- at the sampling points of the dc-axis current detection values Idc illustrated in Fig. 23(h) is used, but only the current value of the Idc11- may be sampled to be substituted for the amount of change ΔIdc1+ in the dc-axis current.

Next, the second inductance calculation unit 212 calculates the second inductance value Ldc2+ relative to the change in current of positive value on the dc-qc-axis coordinate system, from the current values Idc21+ and Idc22+ at the sampling points of the dc-axis current detection values Idc illustrated in Fig. 23 (h) . It should be noted that for each of the current values Idc21+ and Idc22+, the result obtained by calculating the average value of the current detection values in a plurality of AC voltage applications may be used. The second inductance value Ldc2+ is calculated by, for example, the following equation (19).
Equation 19

$$L_{dc2+} = \frac{\Delta\Phi_{dc2+}}{\Delta I_{dc2+}} = \frac{\Delta\Phi_{dc2+}}{I_{dc21+} - I_{dc22+}} \cdot\cdot\cdot (19)$$

It should be noted that to calculate the amount of change ΔIdc2+ in the dc-axis current in Equation (19), the deviation between the current values Idc21+ and Idc22+ at the sampling points of the dc-axis current detection values Idc illustrated in Fig. 23(h) is used, but only the current value of the Idc21+ may be sampled to be substituted for the amount of change ΔIdc2+ in the dc-axis current.

Next, the fourth inductance calculation unit 214 calculates the fourth inductance value Ldc2- relative to the change in current of negative value on the dc-qc-axis coordinate system, from the current values Idc21- and Idc22- at the sampling points of the dc-axis current detection values Idc illustrated in Fig. 23 (h) . It should be noted that for each of the current values Idc21- and Idc22-, the result obtained by calculating the average value of the current detection values in a plurality of AC voltage applications may be used. The fourth inductance value Ldc2- is calculated by, for example, the following equation (20).
Equation 20

$$L_{dc2-} = \frac{\Delta\Phi_{dc2-}}{\Delta I_{dc2-}} = \frac{\Delta\Phi_{dc2-}}{I_{dc21-} - I_{dc22-}} \cdot\cdot\cdot (20)$$

It should be noted that to calculate the amount of change ΔIdc2-in the dc-axis current in Equation (20), the deviation between the current values Idc21- and Idc22- at the sampling points of the dc-axis current detection values Idc illustrated in Fig. 23(h) is used, but only the current value of the Idc21- may be sampled to be substituted for the amount of change ΔIdc2- in the dc-axis current.

In this way, the inductance calculation unit 210 of the fourth embodiment outputs the Ldc1+, the Ldc2+, the Ldc1-, and the Ldc2-which are the calculation results of the first to fourth inductances, respectively, to the polarity determination and inversion processing unit 215, and like the first embodiment, the polarity determination and inversion processing unit 215 large-and-small compares the absolute value of the deviation amount in the inductance relative to the change in current of positive value and the absolute value of the deviation amount in the inductance relative to the change in current of negative value, and determines that the side in which the absolute value of the deviation amount in the inductance is larger is the N-pole direction (d-axis direction) of the permanent magnet synchronous machine 103.

Therefore, in the first to third embodiments, the determination of the polarity of the magnetic pole is achieved by superimposing the AC voltage having a large amplitude on the permanent magnet synchronous machine to generate the d-axis current having a large pulsation width, whereas in the fourth embodiment, the inductance value of the permanent magnet synchronous machine can be calculated by generating the AC current having a small amplitude in the state where the DC current is made to flow through the d-axis current. As a result, the AC current component of the d-axis current flowing at determining the polarity of the magnetic pole is reduced, as compared with the first to third embodiments, so that the noise reduction of the driving device for the permanent magnet synchronous machine can be made.

Fifth Embodiment

In a fifth embodiment, the reference inductance value calculated from the pulsation current of the d-axis which is made to flow by applying the AC voltage component in the state where the DC current command is current-controlled to 0 is used for the first inductance value and the third inductance value according to the fourth embodiment, so that the application time of the high frequency voltage superimposed at determining the polarity of the magnetic pole is shorter than the fourth embodiment, and as a result, the pulsation current of the d-axis at determining the polarity of the magnetic pole is reduced, whereby it is possible to achieve the driving device for the permanent magnet synchronous machine which has higher efficiency and is less noisy.

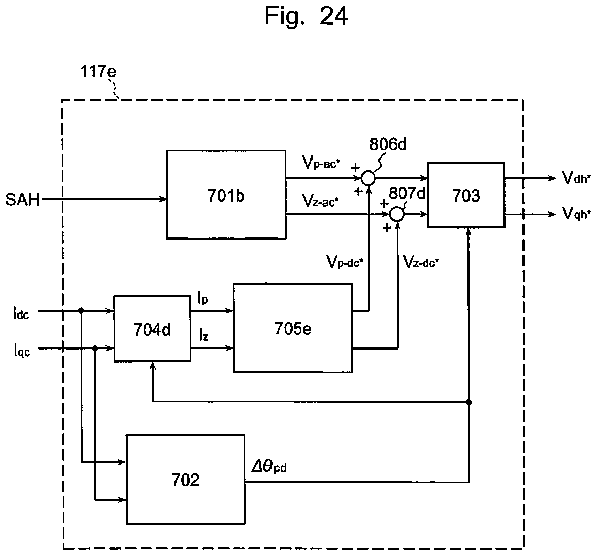

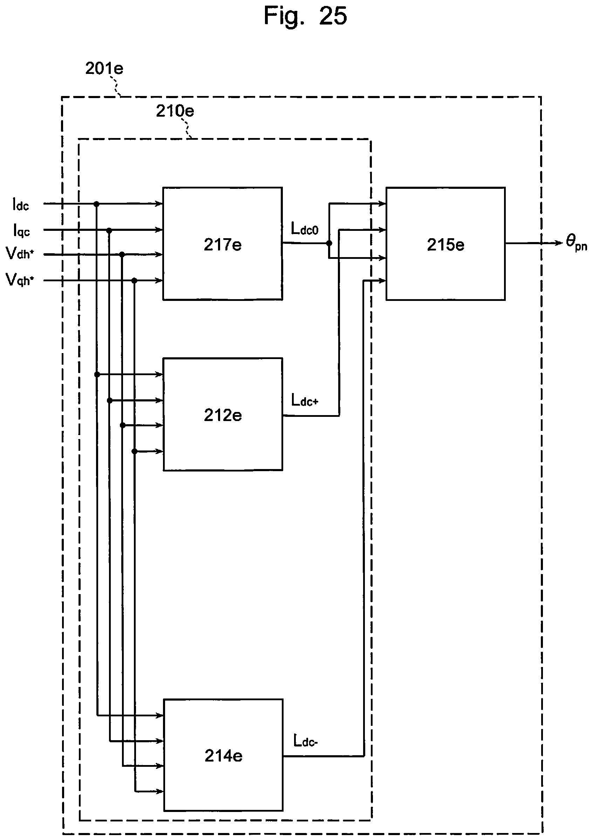

As compared with the fourth embodiment described above, only the different portions of the components will be described below. Fig. 24 is a block diagram illustrating the configuration example of the superimposition voltage calculation unit of the fifth embodiment. Also, Fig. 25 is a block diagram illustrating the configuration example of the magnetic pole polarity determination unit of the fifth embodiment. The fifth embodiment can be achieved by using a superimposition voltage calculation unit 117e in place of the superimposition voltage calculation unit 117 of the first embodiment, and further, by using a magnetic pole polarity determination unit 201e in place of the magnetic pole polarity determination unit 201 of the first embodiment.

In Fig. 24, the superimposition voltage calculation unit 117e is provided with the AC voltage component application unit 701b, the superimposition voltage phase correction table 702, the dq coordinate conversion unit 703, the pz coordinate conversion unit 704d, a DC voltage component application unit 705e, and the adders 806d and 807d.

The DC voltage component application unit 705e calculates the p-axis superimposition DC voltage command Vp-dc* on the basis of the p-axis current detection value Ip outputted by the pz coordinate conversion unit 704d, and outputs the p-axis superimposition DC voltage command Vp-dc* to the adder 806d. The DC voltage component application unit 705e calculates the z-axis superimposition DC voltage command Vz-dc* on the basis of the z-axis current detection value Iz outputted by the pz coordinate conversion unit 704d, and outputs the z-axis superimposition DC voltage command Vz-dc* to the adder 807d.

It should be noted that the superimposition voltage calculation unit 117e has the same configuration as the superimposition voltage calculation unit 117d of the fourth embodiment, except for the DC voltage component application unit 705e.

In Fig. 25, the magnetic pole polarity determination unit 201e is provided with an inductance calculation unit 210e, and a polarity determination and inversion processing unit 215e, the inductance calculation unit 210e being provided with a reference inductance calculation unit 217e, an inductance calculation unit on current positive side 212e, and an inductance calculation unit on current negative side 214e.

In the magnetic pole polarity determination unit 201e, the inductance calculation unit on current positive side 212e calculates the inductance value Ldc+ relative to the change in current of positive value on the dc-qc-axis coordinate system on the basis of the positive current values of the dc-axis current detection value Idc and the qc-axis current detection value Iqc of the pulsation current flowing through the permanent magnet synchronous machine 103 and the dc-axis superimposition voltage command value Vdh* and the qc-axis superimposition voltage command value Vqh* which generate the pulsation current, and outputs the inductance value Ldc+ to the polarity determination and inversion processing unit 215e.

Also, the inductance calculation unit on current negative side 214e calculates the inductance value Ldc- relative to the change in current of negative value on the dc-qc-axis coordinate system on the basis of the negative current values of the dc-axis current detection value Idc and the qc-axis current detection value Iqc of the pulsation current flowing through the permanent magnet synchronous machine 103 and the dc-axis superimposition voltage command value Vdh* and the qc-axis superimposition voltage command value Vqh* which generate the pulsation current, and outputs the inductance value Ldc- to the polarity determination and inversion processing unit 215e.

Further, the reference inductance calculation unit 217e calculates a reference inductance value LdcO on the dc-qc-axis coordinate system on the basis of the dc-axis current detection value Idc and the qc-axis current detection value Iqc of the pulsation current flowing through the permanent magnet synchronous machine 103 and the dc-axis superimposition voltage command value Vdh* and the qc-axis superimposition voltage command value Vqh* which generate the pulsation current, and outputs the reference inductance value LdcO to the polarity determination and inversion processing unit 215e . It should be noted that for the inductance value LdcO which is the reference, for example, the d-axis inductance value calculated from the change in current when the DC current component of the d-axis current is 0 and the AC current component is made to flow through the permanent magnet synchronous machine is used.

And, the polarity determination and inversion processing unit 215e calculates the deviation amount ΔLdc+ between the reference inductance value LdcO and the inductance value Ldc+ relative to the change in current of positive value on the dc-qc-axis coordinate system, and the deviation amount ΔLdc- between the reference inductance value LdcO and the inductance value Ldc- relative to the change in current of negative value on the dc-qc-axis coordinate system. Hereafter, like the first to fourth embodiments, the polarity determination and inversion processing unit 215e calculates the absolute value of the deviation amount ΔLdc+ and the absolute value of the deviation amount ΔLdc-, determines that the side in which the absolute value of the deviation amount in the inductance is larger is the N-pole direction (d-axis direction) of the permanent magnet synchronous machine 103, and outputs the magnetic pole polarity correction phase θpn with a value according to the magnetic pole determination result.

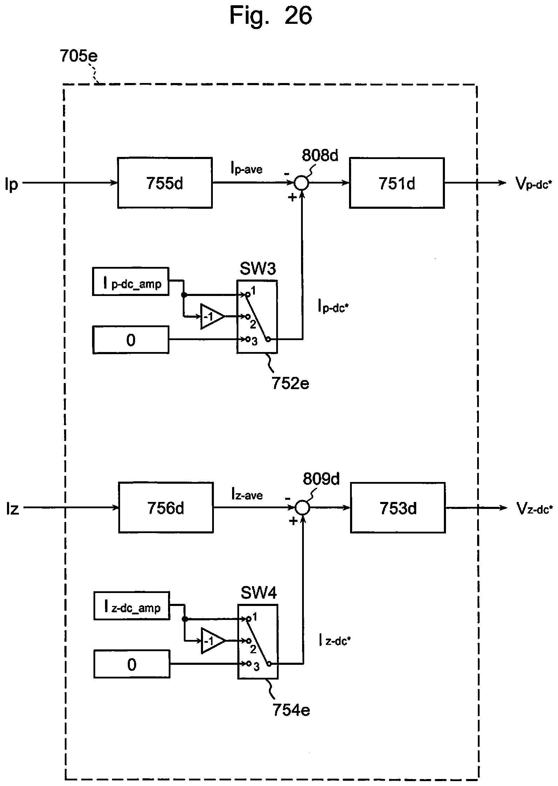

Fig. 26 is a block diagram illustrating the configuration example of the DC voltage component application unit of the fifth embodiment. As illustrated in Fig. 26, the DC voltage component application unit 705e is provided with the current controllers 751d and 753d, a switching device 752e which switches the target current command value of the current control, a switching device 754e which switches the target current command value of the current control, the moving average calculator 755d for removing the high frequency ripple component of the p-axis current detection value Ip, the moving average calculator 756d for removing the high frequency ripple component of the z-axis current detection value Iz, the subtractor 808d which outputs the deviation between the output value of the switching device 752e and the output value of the moving average calculator 755d, and the subtractor 809d which outputs the deviation between the output value of the switching device 754e and the output value of the moving average calculator 756d.

It should be noted that the DC voltage component application unit 705e has the same configuration as the DC voltage component application unit 705d of the fourth embodiment, except for the switching devices 752e and 754e.

The DC voltage component application unit 705e, receives, as an input, the deviation between the p-axis target current command value Ip-dc* of the current control outputted by the switching device 752e and the p-axis current detection moving average value Ip-ave outputted by the moving average calculator 755d, and outputs, as the p-axis superimposition DC voltage command Vp-dc*, the calculation result current-controlled by the current controller 751d. Also, the DC voltage component application unit 705e, receives, as an input, the deviation between the z-axis target current command value Iz-dc* of the current control outputted by the switching device 754e and the z-axis current detection moving average value Iz-ave outputted by the moving average calculator 756d, and outputs, as the z-axis superimposition DC voltage command Vz-dc*, the calculation result current-controlled by the current controller 753d. It should be noted that in this embodiment, the moving average calculation is performed for removing the high frequency ripple component of each of the p-axis current detection value Ip and the z-axis current detection value Iz, but the calculation process using a first order delay filter, a band pass filter, and the like may be performed.

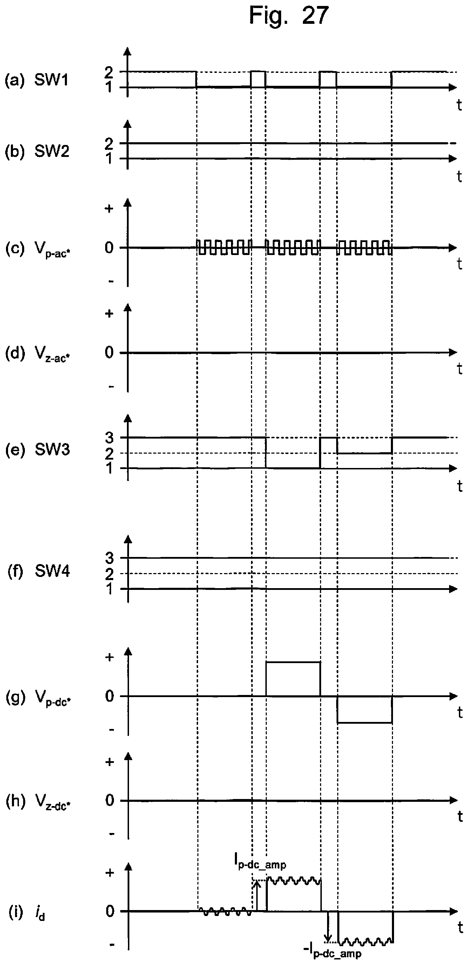

Next, the specific operation of the magnetic pole polarity determination of the fifth embodiment will be described. Figs. 27(a) to 27(i) are graphs illustrating the relationships between the SW operations and the output voltage waveforms of the superimposition voltage calculation unit of the fifth embodiment. In Figs. 27 (a) to 27(i), Fig. 27 (a) illustrates the switching example of the switching command SW1 of the switching device 712b of the AC voltage component application unit 701b. Fig. 27 (b) illustrates the switching example of the switching command SW2 of the switching device 714b of the AC voltage component application unit 701b. Fig. 27 (c) illustrates the waveform example of the p-axis superimposition AC voltage command Vp-ac* outputted by the AC voltage component application unit 701b. Fig. 27(d) illustrates the waveform example of the z-axis superimposition AC voltage command Vz-ac* outputted by the AC voltage component application unit 701b. Fig. 27(e) illustrates the switching example of the switching command SW3 of the switching device 752e of the DC voltage component application unit 705e. Fig. 27(f) illustrates the switching example of the switching command SW4 of the switching device 754e of the DC voltage component application unit 705e. Fig. 27 (g) illustrates the waveform example of the p-axis superimposition DC voltage command Vp-dc* outputted by the DC voltage component application unit 705e. Fig. 27 (h) illustrates the waveform example of the z-axis superimposition DC voltage command Vz-dc* outputted by the DC voltage component application unit 705d. Fig. 27 (i) illustrates the waveform example of the d-axis current id flowing through the permanent magnet synchronous machine 103 at determining the polarity of the magnetic pole of the fifth embodiment. It should be noted that in this embodiment, the p-axis AC voltage waveform Sp-ac* outputted from the AC waveform generator 711 and the z-axis AC voltage waveform Sz-ac* outputted from the AC waveform generator 713 are the rectangular waves, but sine waves may be used.

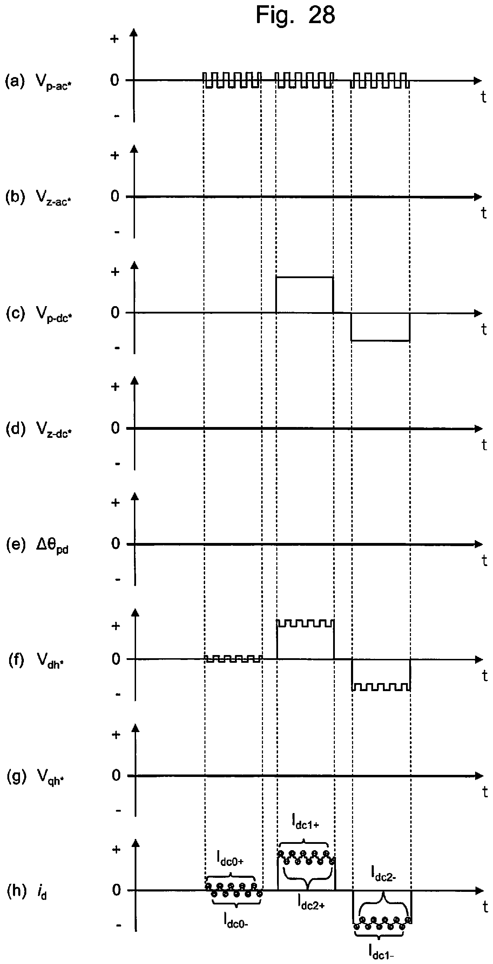

Figs. 28(a) to 28(h) are graphs illustrating the input signals and the current detection points of the d-axis current of the magnetic pole polarity determination unit of the fifth embodiment. In Figs. 28(a) to 28(h), Fig. 28(a) illustrates the waveform example of the p-axis superimposition AC voltage command Vp-ac* outputted from the AC voltage component application unit 701b. Fig. 28(b) illustrates the waveform example of the z-axis superimposition AC voltage command Vz-ac* outputted from the AC voltage component application unit 701b. Fig. 28(c) illustrates the waveform example of the p-axis superimposition DC voltage command Vp-dc* outputted from the DC voltage component application unit 705e. Fig. 28 (d) illustrates the waveform example of the z-axis superimposition DC voltage command Vz-dc* outputted from the DC voltage component application unit 705e. Fig. 28 (e) illustrates the waveform example of the deviation amount Δθpd between the p-axis and the dc-axis outputted from the superimposition voltage phase correction table 702. Fig. 28(f) illustrates the waveform example of the dc-axis superimposition voltage command value Vdh* outputted from the superimposition voltage calculation unit 117e. Fig. 28(g) illustrates the waveform example of the qc-axis superimposition voltage command value Vqh* outputted from the superimposition voltage calculation unit 117e. Fig. 28(h) illustrates the example of the waveform of the d-axis current id flowing through the permanent magnet synchronous machine 103 at determining the polarity of the magnetic pole and the sample points of the current detection values used for calculating the d-axis inductances of the fifth embodiment.

Referring to Figs. 27(a) to 27(i) and Figs. 28(a) to 28(h), the operations of the superimposition voltage calculation unit 117e and the magnetic pole polarity determination unit 201e and the method of determining the polarity of the magnetic pole will be described. It should be noted that in the waveform examples of Figs. 27(a) to 27(i) and Figs. 28(a) to 28(h), the deviation amount Δθpd between the p-axis and the dc-axis and the deviation amount Δθc between the d-axis and the dc-axis are in the state of 0.

In the superimposition voltage calculation unit 117e, the AC waveform generator 711 of the AC voltage component application unit 701b calculates the p-axis AC voltage waveform Sp-ac* on the basis of the current detection timing setting signal SAH outputted by the PWM signal controller 115, and operates the switching state of the switching device 712b, thereby controlling the p-axis superimposition AC voltage command Vp-ac*. In the superimposition voltage calculation unit 117e, the AC waveform generator 713 of the AC voltage component application unit 701b calculates the z-axis AC voltage waveform Sz-ac* on the basis of the current detection timing setting signal SAH outputted by the PWM signal controller 115, and operates the switching state of the switching device 714b, thereby controlling the z-axis superimposition AC voltage command Vz-ac*.

In Figs. 27(a) to 27(i), the switching command SW1 of the switching device 712b in Fig. 27 (a) is switched from the state 2 where 0 is set to the amplitude command, to the state 1 where the p-axis AC voltage amplitude command Vp-ac_amp is set to the amplitude command, so that the rectangular wave voltage command in which the voltage amplitude is the Vp-ac_amp is outputted to the p-axis superimposition AC voltage command Vp-ac* in Fig. 27(c). After the given time has elapsed, the switching command SW1 is switched from the state 1 to the state 2, and the output of the p-axis superimposition AC voltage command Vp-ac* in Fig. 27 (c) is brought to 0. In the fifth embodiment, since the reference inductance value LdcO, the inductance value Ldc+ relative to the change in current of positive value on the dc-qc-axis coordinate system, and the inductance value Ldc- relative to the change in current of negative value on the dc-qc-axis coordinate system are calculated, the switching command SW1 performs the switching of the p-axis AC voltage amplitude command Vp-ac_amp.

It should be noted that in this embodiment, the switching command SW2 of the switching device 714b in Fig. 27(b) is always in the state 2 where 0 is set to the amplitude command, so that the output of the z-axis superimposition AC voltage command Vz-ac* in Fig. 27 (d) is brought to 0. Also, the DC voltage component application unit 705e operates the switching states of the switching devices 752e and 754e, and changes the output of at least one of the p-axis target current command value Ip-dc* and the z-axis target current command value Iz-dc* of the current control, thereby controlling the p-axis superimposition DC voltage command Vp-dc* outputted from the current controller 751d and the z-axis superimposition DC voltage command Vz-dc* outputted from the current controller 753d.

In Figs. 27(a) to 27(i), the switching command SW3 of the switching device 752e in Fig. 27(e) is first brought into the state 3 where 0 is set to the target current command value, performs the switching of the switching command SW1 from the state 2 to the state 1 in the state where the calculation result of the p-axis current control in which the target current command is 0 is outputted to the p-axis superimposition DC voltage command Vp-dc* in Fig. 27(g), and outputs only the AC voltage component to the dc-axis superimposition voltage command value Vdh*. After the given time has elapsed, the switching command SW3 is switched from the state 3 to the state 1 where a p-axis DC current amplitude command Ip-dc_amp is set to the target current command, so that the calculation result of the p-axis current control in which the target current command is the Ip-dc_amp is outputted to the p-axis superimposition DC voltage command Vp-dc* in Fig. 27 (g). After the given time has elapsed, the switching command SW3 is switched from the state 1 to the state 3, and the calculation result of the p-axis current control in which the target current command is 0 is outputted to the p-axis superimposition DC voltage command Vp-dc* in Fig. 27(g).

Further, the switching command SW3 is switched from the state 3 to the state 2 where the value obtained by inverting the sign of the p-axis DC current amplitude command Ip-dc_amp is set to the target current command, so that the calculation result of the p-axis current control in which the target current command is the -1×Ip-dc_amp is outputted to the p-axis superimposition DC voltage command Vp-dc* in Fig. 27 (g). After the given time has elapsed, the switching command SW3 is switched from the state 2 to the state 3, and the calculation result of the p-axis current control in which the target current command is 0 is outputted to the p-axis superimposition DC voltage command Vp-dc* in Fig. 27(g).

It should be noted that in this embodiment, the switching command SW4 of the switching device 754e in Fig. 27(f) is always in the state 3 where 0 is set to the target current command of the current control, so that the calculation result of the z-axis current control in which the target current command is 0 is outputted to the z-axis superimposition DC voltage command Vz-dc* in Fig. 27(h). The dq coordinate conversion unit 703 converts the superimposition voltage command on the pz-axis coordinate system in which the p-axis superimposition DC voltage command Vp-dc* and the p-axis superimposition AC voltage command Vp-ac* are synthesized, to the dc-axis superimposition voltage command value Vdh* on the basis of the deviation amount Δθpd between the p-axis and the dc-axis outputted by the superimposition voltage phase correction table 702, and outputs the dc-axis superimposition voltage command value Vdh*. The dq coordinate conversion unit 703 converts the superimposition voltage command on the pz-axis coordinate system in which the z-axis superimposition DC voltage command Vz-dc* and the z-axis superimposition AC voltage command Vz-ac* are synthesized, to the qc-axis superimposition voltage command value Vqh* on the basis of the deviation amount Δθpd between the p-axis and the dc-axis outputted by the superimposition voltage phase correction table 702, and outputs the qc-axis superimposition voltage command value Vqh*.

It should be noted that in this embodiment, since the deviation amount Δθpd between the p-axis and the dc-axis and the deviation amount Δθc between the d-axis and the dc-axis are in the state of 0, the p-axis and the dc-axis match. By the dc-axis superimposition voltage command value Vdh* and the qc-axis superimposition voltage command value Vqh* outputted by the superimposition voltage calculation unit 117e, the d-axis current as illustrated in Fig. 27(h) can be made to flow to the permanent magnet synchronous machine.

The magnetic pole polarity determination unit 201e estimation calculates the d-axis inductance value from the pulsation current of the d-axis which has flowed through the permanent magnet synchronous machine 103 by the voltage application of the dc-axis superimposition voltage command value Vdh* and the qc-axis superimposition voltage command value Vqh* outputted by the superimposition voltage calculation unit 117e, determines, from the calculation result, the polarity of the magnetic pole of the permanent magnet synchronous machine 103, and outputs the magnetic pole polarity correction phase θpn according to the determination result. In Figs. 28(a) to 28(h), as described above, by the voltage application of the dc-axis superimposition voltage command value Vdh* illustrated in Fig. 28(f) and the qc-axis superimposition voltage command value Vqh* illustrated in Fig. 28 (g), the period in which the d-axis current including only the AC component as illustrated in Fig. 28 (h) is generated and the period in which the d-axis current including the DC component and the AC component is generated are present in the permanent magnet synchronous machine 103.

The inductance calculation unit 210e of the magnetic pole polarity determination unit 201e calculates the d-axis inductance value from the dc-axis current detection value Idc sampled at the predetermined timing by the current detection unit 116. Fig. 28(h) illustrates the sampling points of the dc-axis current detection values Idc necessary for the determination of the polarity of the magnetic pole of the fifth embodiment. In this embodiment, for example, the sampling of the dc-axis current detection value Idc for calculating the d-axis inductance value uses the current detection timing setting signal SAH as the triangle wave carrier to have the peak/valley cycle of the triangle wave carrier.

First, the reference inductance calculation unit 217e calculates the reference inductance value LdcO relative to the change in current in which the DC component of the dc current on the dc-qc-axis coordinate system is near 0, from the current values Idc0+ and Idc0- at the sampling points of the dc-axis current detection values Idc illustrated in Fig. 28(h). It should be noted that for each of the current values Idc0+ and Idc0-, the result obtained by calculating the average value of the current detection values in a plurality of AC voltage applications may be used. The reference inductance value LdcO is calculated by, for example, the following equation (21).

Equation 21

$$L_{dc0} = \frac{\Delta\Phi_{dc0}}{\Delta I_{dc0}} = \frac{\Delta\Phi_{dc0}}{I_{dc0+} - I_{dc0-}} \cdots (21)$$

It should be noted that to calculate the reference inductance value LdcO, the dynamic inductance (transient inductance) is calculated by using the deviation between the current values Idc0+ and Idc0- at the sampling points of the dc-axis current detection values Idc illustrated in Fig. 28(h) in Equation (20), but a static inductance may be calculated by using only one of the current values Idc0+ and Idc0- to be the reference inductance value LdcO. However, when the reference inductance value LdcO is the static inductance, the static inductance is also required to be calculated for each of the inductance value Ldc+ relative to the change in current of positive value and the inductance value Ldc- relative to the change in current of negative value.

Next, the inductance calculation unit on current positive side 212e calculates the inductance value Ldc+ relative to the change in current of positive value on the dc-qc-axis coordinate system, from the current values Idc1+ and Idc2+ at the sampling points of the dc-axis current detection values Idc illustrated in Fig. 28(h). It should be noted that for each of the current values Idc1+ and Idc2+, the result obtained by calculating the average value of the current detection values in a plurality of AC voltage applications may be used. The inductance value Ldc+ is calculated by, for example, the following equation (22).

Equation 22

$$L_{dc+} = \frac{\Delta\Phi_{dc+}}{\Delta I_{dc+}} = \frac{\Delta\Phi_{dc+}}{I_{dc1+} - I_{dc2+}} \cdots (22)$$

It should be noted that to calculate the inductance value Ldc+ relative to the change in current of positive value on the dc-qc-axis coordinate system, the dynamic inductance (transient inductance) is calculated by using the deviation between the current values Idc1+ and Idc2+ at the sampling points of the dc-axis current detection values Idc illustrated in Fig. 28(h) in Equation (22), but a static inductance may be calculated by using only one of the current values Idc1+ and Idc2+ to be the inductance value Ldc+ relative to the change in current of positive value. However, when the inductance value Ldc+ relative to the change in current of positive value is the static inductance, the static inductance is also required to be calculated for each of the reference inductance value LdcO and the inductance value Ldc- relative to the change in current of negative value.

Next, the inductance calculation unit on current negative side 214e calculates the inductance value Ldc- relative to the change in current of negative value on the dc-qc-axis coordinate system, from the current values Idc1- and Idc2- at the sampling points of the dc-axis current detection values Idc illustrated in Fig. 28(h). It should be noted that for each of the current values Idc1- and Idc2-, the result obtained by calculating the average value of the current detection values in a plurality of AC voltage applications may be used. The inductance value Ldc- is calculated by, for example, the following equation (23).

Equation 23

$$L_{dc-} = \frac{\Delta\Phi_{dc-}}{\Delta I_{dc-}} = \frac{\Delta\Phi_{dc-}}{I_{dc1-} - I_{dc2-}} \cdots (23)$$

It should be noted that to calculate the inductance value Ldc- relative to the change in current of negative value on the dc-qc-axis coordinate system, the dynamic inductance (transient inductance) is calculated by using the deviation between the current values Idc1- and Idc2- at the sampling points of the dc-axis current detection values Idc illustrated in Fig. 28(h) in Equation (22), but a static inductance may be calculated by using only one of the current values Idc1- and Idc2- to be the inductance value Ldc+ relative to the change in current of negative value. However, when the inductance value Ldc- relative to the change in current of negative value is the static inductance, the static inductance is also required to be calculated for each of the reference inductance value LdcO and the inductance value Ldc+ relative to the change in current of positive value.

From the above, the inductance calculation unit 210e outputs the Ldc+ and the Ldc- which are the calculation results of the d-axis inductance and the reference inductance value LdcO, to the polarity determination and inversion processing unit 215e.

The polarity determination and inversion processing unit 215e calculates the deviation amount ΔLdc+ between the inductance value Ldc+ relative to the change in current of positive value and the reference inductance value LdcO. The deviation amount ΔLdc+ is calculated by, for example, the following equation (24).

Equation 24

$$\Delta L_{dc+} = L_{dc+} - L_{dc0} \cdots (24)$$

Further, the polarity determination and inversion processing unit 215e calculates the deviation amount ΔLdc- between the inductance value Ldc- relative to the change in current of negative value and the reference inductance value LdcO. The deviation amount ΔLdc- is calculated by, for example, the following equation (25).

Equation 25

$$\Delta L_{dc-} = L_{dc-} - L_{dc0} \cdots (25)$$

And, the polarity determination and inversion processing unit 215e respectively calculates the absolute value |ΔLdc+| of the deviation amount ΔLdc+ in the inductance relative to the change in current of positive value and the absolute value |ΔLdc-| of the deviation amount ΔLdc- in the inductance relative to the change in current of negative value, compares the absolute values |ΔLdc+| and |ΔLdc-| on the basis of the large-and-small relationship, determines that the side in which the absolute value of the deviation amount in the inductance is larger is the N-pole direction (d-axis direction) of the permanent magnet synchronous machine 103, and outputs the magnetic pole polarity correction phase θpn with a value corresponding to the magnetic pole determination result.

In this way, in the fifth embodiment, when three values which are the reference inductance value LdcO, the inductance value Ldc+ relative to the change in current of positive value, and the inductance value Ldc- relative to the change in current of negative value are calculated, the polarity of the magnetic pole can be determined, so that the time to generate the pulsation current at determining the polarity of the magnetic pole is shorter than the fourth embodiment, whereby the higher efficiency and the noise reduction of the driving device for the permanent magnetic synchronous machine can be made.

Also, in the fifth embodiment, in the permanent magnetic synchronous machine to be targeted, the calculation result of the reference inductance value LdcO at the first polarity determination is held, so that in the polarity determination of the same permanent magnetic synchronous machine thereafter, the application period of the high frequency voltage for calculating the reference inductance value LdcO is not required, whereby the higher efficiency and the noise reduction of the driving device for the permanent magnetic synchronous machine can further be made.

Alternatively, the fifth embodiment can also be achieved by using the inductance calculation unit 210c in place of the inductance calculation unit 210e. In this case, the application period of the high frequency voltage for identifying the reference inductance value LdcO described above is not required, so that as above, the higher efficiency and the noise reduction of the driving device for the permanent magnetic synchronous machine can further be made.

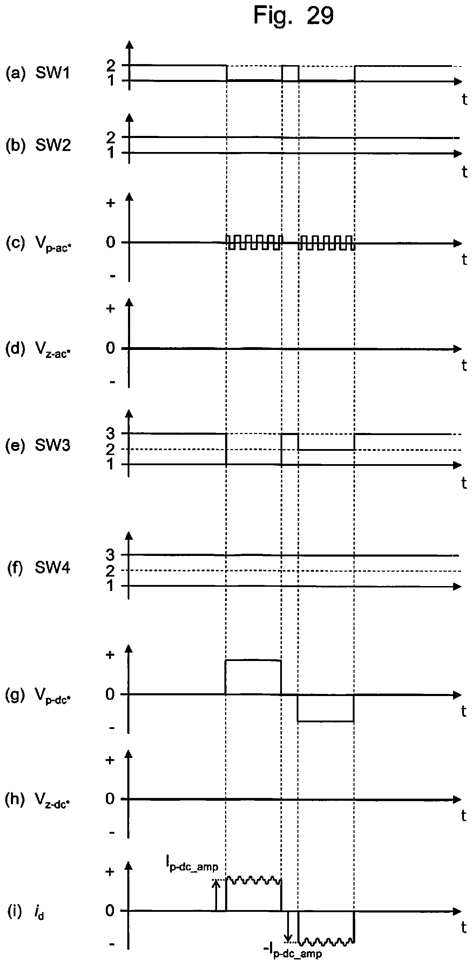

Figs. 29(a) to 29(i) are graphs illustrating the input signals and the current detection points of the d-axis current of the magnetic pole polarity determination unit according to the fifth embodiment when as the reference inductance, the previous identification value or the motor design value of the reference inductance is used. As illustrated in Figs. 29(a) to 29(i), the application period of the high frequency voltage for calculating the reference inductance value LdcO is not required.

Sixth Embodiment

In the first to third embodiments, the amplitude of the AC voltage component superimposed at determining the polarity of the magnetic pole is controlled on the basis of the previously set amplitude command value, whereas in a sixth embodiment, at determining the polarity of the magnetic pole, the amplitude command value of the AC voltage component superimposed is adjusted such that one of the absolute value of an amount of change in the inductance relative to the change in current of positive value and the absolute value of an amount of change in the inductance relative to the change in current of negative value is a predetermined value or more, so that it is possible to achieve the driving device for the permanent magnet synchronous machine which is less likely to be affected by the non-linear characteristic of the d-axis inductance, noise, and the like due to the magnetic saturation at determining the polarity of the magnetic pole, as compared with the first to third embodiments.

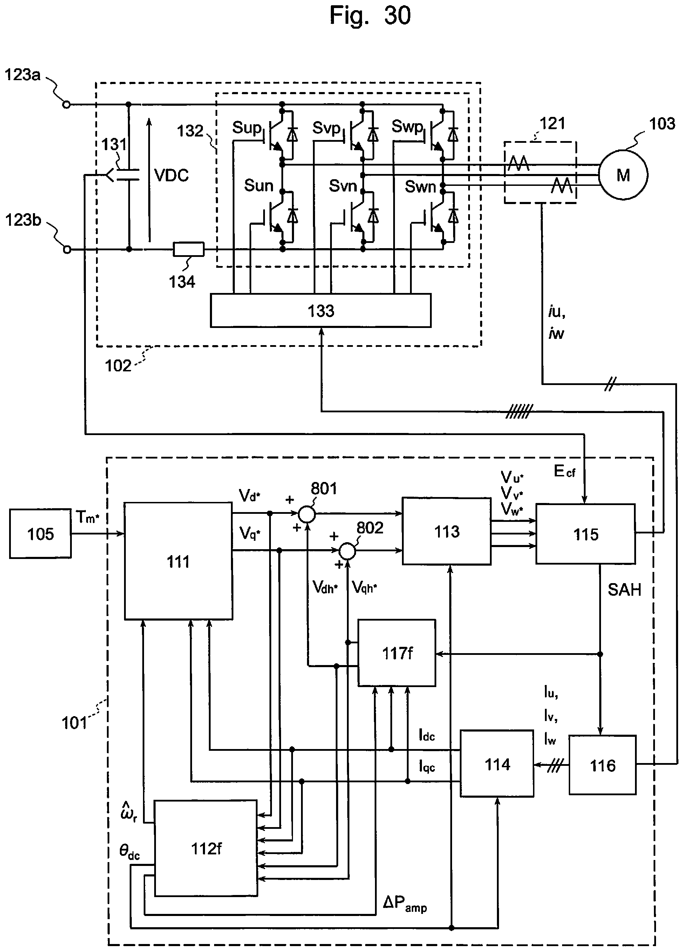

Fig. 30 is a block diagram illustrating the configuration example of the permanent magnet synchronous machine driving system of the sixth embodiment. As compared with the first embodiment illustrated in Fig. 1, only the different portions of the configuration will be described.

In Fig. 30, the permanent magnet synchronous machine driving system of the sixth embodiment can be achieved by using a position and speed estimation calculation unit 112f in place of the position and speed estimation calculation unit 112 of the first embodiment in Fig. 1, and by using a superimposition voltage calculation unit 117f in place of the superimposition voltage calculation unit 117 of the first embodiment in Fig. 1.

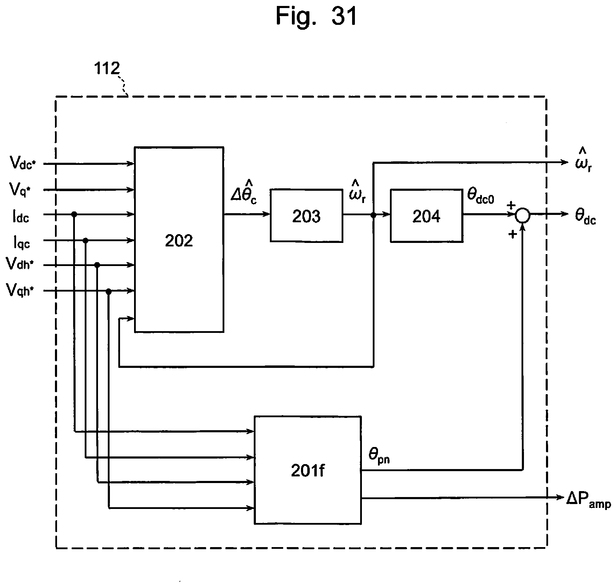

Fig. 31 is a block diagram illustrating the configuration example of the position and speed estimation calculation unit of the sixth embodiment. As illustrated in Fig. 31, the position and speed estimation calculation unit 112f is provided with a magnetic pole polarity determination unit 201f, the axis error estimation calculation unit 202, the speed estimation calculation unit 203, and the position estimation calculation unit 204.

The position and speed estimation calculation unit 112f calculates the driving frequency estimation value ωr^ of the permanent magnet synchronous machine 103, the control phase θdc, and an amplitude command determination amount ΔPamp on the basis of the dc-axis voltage command value Vdc* and the qc-axis voltage command value Vqc* outputted by the vector control unit 111, the dc-axis superimposition voltage command value Vdh* and the qc-axis superimposition voltage command value Vqh* outputted by the superimposition voltage calculation unit 117f, and the dc-axis current detection value Idc and the qc-axis current detection value Iqc outputted by the dq coordinate conversion unit 114, and outputs the driving frequency estimation value ωr^ of the permanent magnet synchronous machine 103, the control phase θdc, and the amplitude command determination amount ΔPamp. It should be noted that the position and speed estimation calculation unit 112f has the same configuration as the position and speed estimation calculation unit 112 of the first embodiment, except for the magnetic pole polarity determination unit 201f.

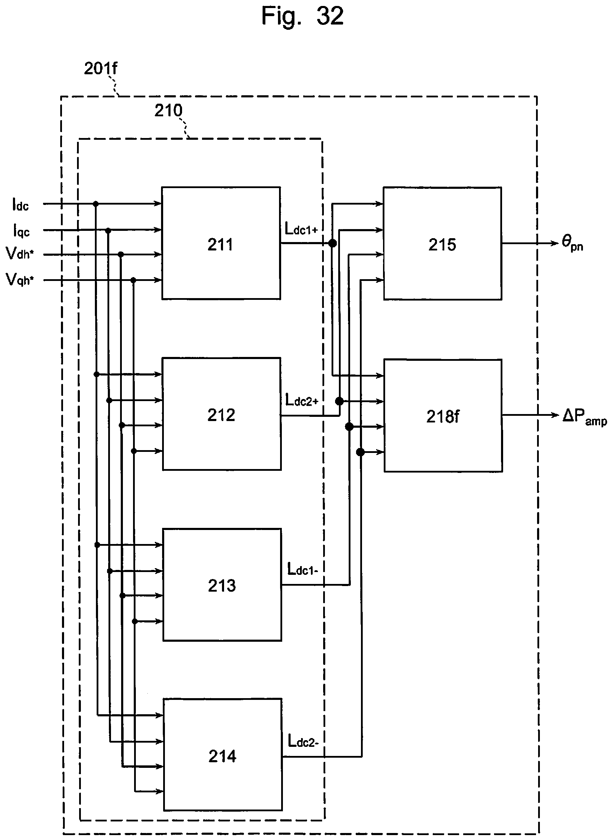

Fig. 32 is a block diagram illustrating the configuration example of the magnetic pole polarity determination unit of the sixth embodiment. As illustrated in Fig. 32, the magnetic pole polarity determination unit 201f is provided with the inductance calculation unit 210, the polarity determination and inversion processing unit 215, and a magnetic pole polarity determination amount calculator 218f, the inductance calculation unit 210 being provided with the first inductance calculation unit 211, the second inductance calculation unit 212, the third inductance calculation unit 213, and the fourth inductance calculation unit 214.

The magnetic pole polarity determination unit 201f calculates the magnetic pole polarity correction phase $\theta$pn and the amplitude command determination amount $\Delta$Pamp on the basis of the dc-axis superimposition voltage command value Vdh* and the qc-axis superimposition voltage command value Vqh* outputted by the superimposition voltage calculation unit 117f and the dc-axis current detection value Idc and the qc-axis current detection value Iqc outputted by the dq coordinate conversion unit 114, and outputs the magnetic pole polarity correction phase $\theta$pn and the amplitude command determination amount $\Delta$Pamp. It should be noted that the magnetic pole polarity determination unit 201f has the same configuration as the magnetic pole polarity determination unit 201 of the first embodiment, except for the magnetic pole polarity determination amount calculator 218f. Also, for the magnetic pole polarity determination unit 201f, the inductance calculation unit 210c as described in the third embodiment may be used in place of the inductance calculation unit 210.

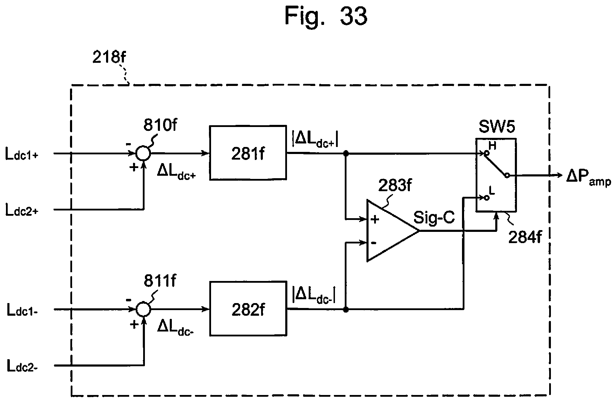

Fig. 33 is a block diagram illustrating the configuration example of the magnetic pole polarity determination amount calculator of the sixth embodiment. As illustrated in Fig. 33, the magnetic pole polarity determination amount calculator 218f is provided with subtractors 810f and 811f, absolute value calculation units 281f and 282f, a comparator 283f, and a switching device 284f.

The subtractor 810f calculates the deviation amount $\Delta$Ldc+ between the first inductance value Ldc1+ and the second inductance value Ldc2+ outputted by the inductance calculation unit 210, and outputs the deviation amount $\Delta$Ldc+ to the absolute value calculation unit 281f.

The subtractor 811f calculates the deviation amount $\Delta$Ldc- between the third inductance value Ldc1- and the fourth inductance value Ldc2- outputted by the inductance calculation unit 210, and outputs the deviation amount $\Delta$Ldc- to the absolute value calculation unit 282f.

The absolute value calculation unit 281f calculates and outputs the absolute value of the deviation amount $\Delta$Ldc+ in the inductance outputted by the subtractor 810f. The absolute value calculation unit 282f calculates and outputs the absolute value of the deviation amount $\Delta$Ldc- in the inductance outputted by the subtractor 811f.

The comparator 283f compares the absolute value |$\Delta$Ldc+ | of the deviation amount in the inductance relative to the change in current of positive value outputted by the absolute value calculation unit 281f and the absolute value |$\Delta$Ldc-| of the deviation amount in the inductance relative to the change in current of negative value outputted by the absolute value calculation unit 282f, outputs a large-and-small comparison result output signal Sig-C of 1 when the absolute value |$\Delta$Ldc+| is larger, and outputs the large-and-small comparison result output signal Sig-C of 0 when the absolute value |$\Delta$Ldc-| is larger.

The switching device 284f outputs, as the amplitude command determination amount $\Delta$Pamp, the larger one of the absolute value |$\Delta$Ldc+| of the deviation amount in the inductance relative to the change in current of positive value and the absolute value |$\Delta$Ldc-| of the deviation amount in the inductance relative to the change in current of negative value on the basis of the large-and-small comparison result output signal Sig-C outputted by the comparator 283f.

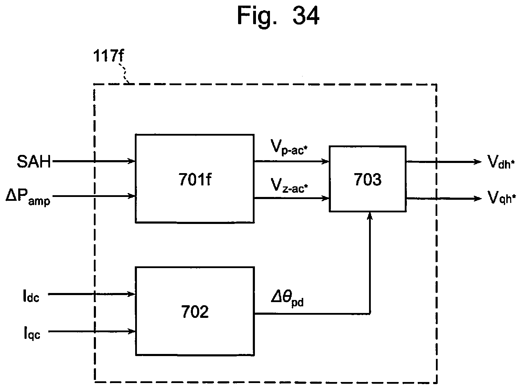

Fig. 34 is a block diagram illustrating the configuration example of the superimposition voltage calculation unit of the sixth embodiment. As illustrated in Fig. 34, the superimposition voltage calculation unit 117f is provided with an AC voltage component application unit 701f, the superimposition voltage phase correction table 702, and the dq coordinate conversion unit 703. The superimposition voltage calculation unit 117f calculates the dc-axis superimposition voltage command value Vdh* for generating the high frequency current (pulsation current) in the permanent magnet synchronous machine 103 on the basis of the dc-axis current detection value Idc outputted by the dq coordinate conversion unit 114, the current detection timing setting signal SAH outputted by the PWM signal controller 115, and the amplitude command determination amount $\Delta$Pamp outputted by the position and speed estimation calculation unit 112f, and outputs the dc-axis superimposition voltage command value Vdh*. The superimposition voltage calculation unit 117f calculates the qc-axis superimposition voltage command value Vqh* for generating the high frequency current (pulsation current) in the permanent magnet synchronous machine 103 on the basis of the qc-axis current detection value Iqc outputted by the dq coordinate conversion unit 114, the current detection timing setting signal SAH outputted by the PWM signal controller 115, and the amplitude command determination amount $\Delta$Pamp outputted by the position and speed estimation calculation unit 112f, and outputs the qc-axis superimposition voltage command value Vqh*. It should be noted that the superimposition voltage calculation unit 117f has the same configuration as the superimposition voltage calculation unit 117 of the first embodiment, except for the AC voltage component application unit 701f.

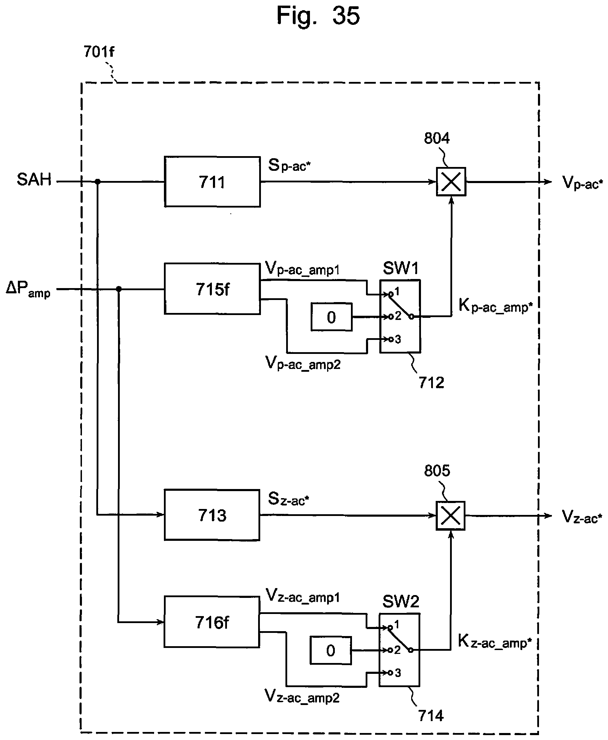

Fig. 35 is a block diagram illustrating the configuration example of the AC voltage component application unit of the sixth embodiment. As illustrated in Fig. 35, the AC voltage component application unit 701f is provided with the AC waveform generators 711 and 713, the switching device 712 which switches the amplitude command multiplied to the AC voltage waveform, the switching device 714 which switches the amplitude command multiplied to the AC voltage waveform, the multiplier 804 which multiplies the output value of the AC waveform generator 711 and the output value of the switching device 712 and outputs the multiplication result, the multiplier 805 which multiplies the output value of the AC waveform generator 713 and the output value of the switching device 714 and outputs the multiplication result, and amplitude command adjusters 715f and 716f.

In the AC voltage component application unit 701f, the AC waveform generator 711 outputs the p-axis AC voltage waveform Sp-ac* for generating the pulsation current in the permanent magnet synchronous machine 103 on the basis of the current detection timing setting signal SAH. In the AC voltage component application unit 701f, the AC waveform generator 713 outputs the Sz-ac* for generating the pulsation current in the permanent magnet synchronous machine 103 on the basis of the current detection timing setting signal SAH. Also, the switching device 712 is a switching device which switches the amplitude command value multiplied to the p-axis AC voltage waveform Sp-ac* superimposed on the pz-axis coordinate system. The switching device 714 is a switching device which switches the amplitude command value multiplied to the z-axis AC voltage waveform Sz-ac* superimposed on the pz-axis coordinate system. Further, the amplitude command adjuster 715f adjusts the value of the first p-axis AC voltage amplitude command Vp-ac_amp1 and the value of the second p-axis AC voltage amplitude command Vp-ac_amp2 inputted to the switching device 712 on the basis of the amplitude command determination amount ΔPamp outputted by the magnetic pole polarity determination amount calculator 218f.

The amplitude command adjuster 716f adjusts the value of a first z-axis AC voltage amplitude command Vz-ac_amp1 and the value of a second z-axis AC voltage amplitude command Vz-ac_amp2 inputted to the switching device 714 on the basis of the amplitude command determination amount ΔPamp outputted by the magnetic pole polarity determination amount calculator 218f. And, the multiplier 804 multiplies the p-axis AC voltage waveform Sp-ac* outputted by the AC waveform generator 711 and the p-axis AC voltage component amplitude command Kp-ac_amp* outputted by the switching device 712, and outputs the p-axis superimposition AC voltage command Vp-ac*. The multiplier 805 multiplies the z-axis AC voltage waveform Sz-ac* outputted by the AC waveform generator 713 and the z-axis AC voltage component amplitude command Kz-ac_amp* outputted by the switching device 714, and outputs the z-axis superimposition AC voltage command Vz-ac*.

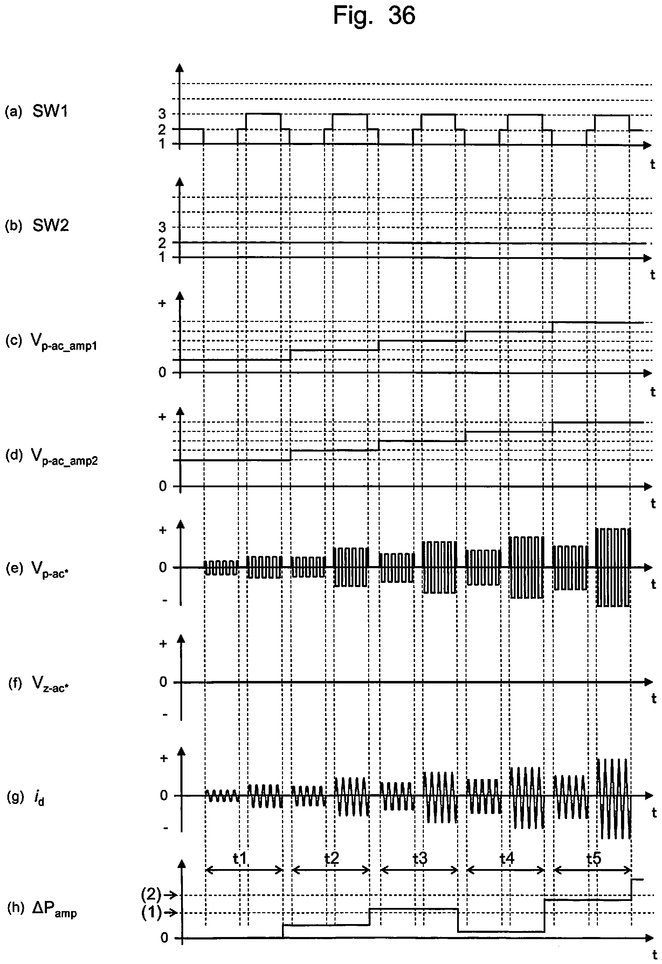

Next, the specific operation of the magnetic pole polarity determination of the sixth embodiment will be described. Figs. 36(a) to 36(h) are graphs illustrating the relationships between the SW operations and the output voltage waveforms of the superimposition voltage calculation unit and the amplitude command determination amount ΔPamp outputted by the magnetic pole polarity determination amount calculator 218f of the sixth embodiment. In Figs. 36(a) to 36(h), Fig. 36(a) illustrates the switching example of the switching command SW1 of the switching device 712 of the AC voltage component application unit 701f. Fig. 36(b) illustrates the switching example of the switching command SW2 of the switching device 714 of the AC voltage component application unit 701f. Fig. 36(c) illustrates the waveform example of the first p-axis AC voltage amplitude command Vp-ac_amp1 outputted by the amplitude command adjuster 715f of the AC voltage component application unit 701f. Fig. 36(d) illustrates the waveform example of the second p-axis AC voltage amplitude command Vp-ac_amp2 outputted by the amplitude command adjuster 715f of the AC voltage component application unit 701f. Fig. 36(e) illustrates the waveform example of the p-axis superimposition AC voltage command Vp-ac* which is the calculation result of the multiplier 804. Fig. 36 (f) illustrates the waveform example of the z-axis superimposition AC voltage command Vz-ac* which is the calculation result of the multiplier 805. Fig. 36(g) illustrates the waveform example of the d-axis current id flowing through the permanent magnet synchronous machine 103 at determining the polarity of the magnetic pole of the sixth embodiment. Fig. 36(h) illustrates the waveform example of the amplitude command determination amount ΔPamp outputted by the switching device 284f of the magnetic pole polarity determination amount calculator 218f. It should be noted that in this embodiment, the p-axis AC voltage waveform Sp-ac* outputted from the AC waveform generator 711 and the z-axis AC voltage waveform Sz-ac* outputted from the AC waveform generator 713 are the rectangular waves, but sine waves may be used.

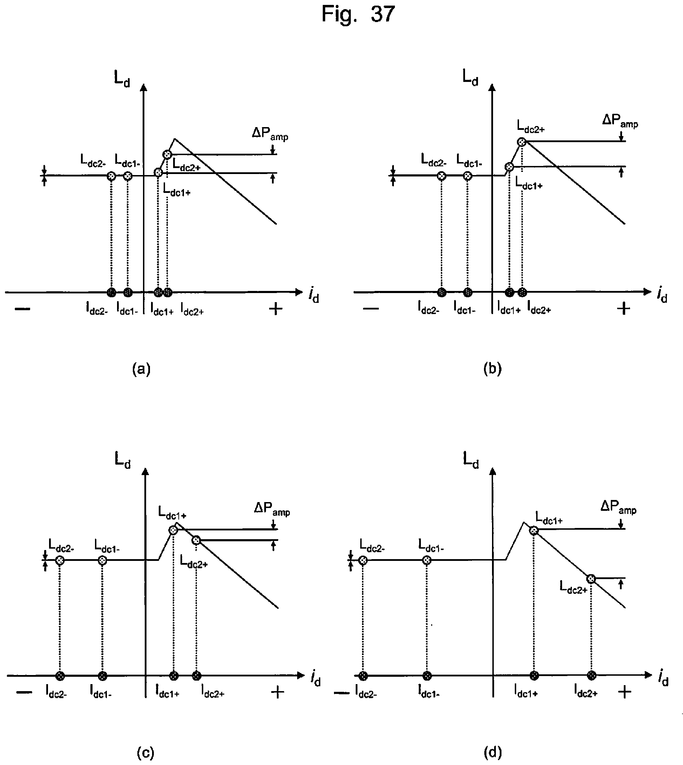

Figs. 37(a) to 37(d) are graphs illustrating the inductance values outputted by the inductance calculation unit of the sixth embodiment in the permanent magnet synchronous machine which has the characteristic such that the inductance in the magnet magnetic flux direction has the maximum point to monotonically decrease, relative to the increase in current in the d-axis direction. As illustrated in Figs. 37(a) to 37(d), the magnitude of the pulsation current of the d-axis generated according to the voltage command superimposed is changed, and as a result, it is found that the magnitudes of the inductance values Ldc1+, Ldc2+, Ldc1-, and Ldc2- and the amplitude command determination amount ΔPamp calculated are changed.

Referring to Figs. 36(a) to 36(h) and Figs. 37(a) to 37(d), the operation of the superimposition voltage command amplitude adjustment in the determination of the polarity of the magnetic pole of the sixth embodiment will be described. In the superimposition voltage calculation unit 117f, the AC waveform generator 711 of the AC voltage component application unit 701f calculates the p-axis AC voltage waveform Sp-ac* on the basis of the current detection timing setting signal SAH outputted by the PWM signal controller 115, and outputs the p-axis AC voltage waveform Sp-ac* to the switching device 712. In the superimposition voltage calculation unit 117f, the AC waveform generator 713 of the AC voltage component application unit 701f calculates the z-axis AC voltage waveform Sz-ac* on the basis of the current detection timing setting signal SAH outputted by the PWM signal controller 115, and outputs the z-axis AC voltage waveform Sz-ac* to the switching device 714. Also, the amplitude command adjuster 715f calculates the first p-axis AC voltage amplitude command Vp-ac_amp1 and the second p-axis AC voltage amplitude command Vp-ac_amp2 on the basis of the amplitude command determination amount $\Delta$Pamp outputted by the switching device 284f of the magnetic pole polarity determination amount calculator 218f, and outputs the first p-axis AC voltage amplitude command Vp-ac_amp1 and the second p-axis AC voltage amplitude command Vp-ac_amp2 to the switching device 712b. The amplitude command adjuster 716f calculates the first z-axis AC voltage amplitude command Vz-ac_amp1 and the second z-axis AC voltage amplitude command Vz-ac_amp2 on the basis of the amplitude command determination amount $\Delta$Pamp outputted by the switching device 284f of the magnetic pole polarity determination amount calculator 218f, and outputs the first z-axis AC voltage amplitude command Vz-ac_amp1 and the second z-axis AC voltage amplitude command Vz-ac_amp2 to the switching device 714b. Further, by operating the switching state of the switching device 712, the p-axis superimposition AC voltage command Vp-ac* is controlled, and by operating the switching state of the switching device 714, the z-axis superimposition AC voltage command Vz-ac* is controlled.

In Figs. 36(a) to 36(h), in the first polarity determination indicated by "t1" in Fig. 36(a), the switching command SW1 of the switching device 712 is switched from the state 2 where 0 is set to the amplitude command, to the state 1 where the first p-axis AC voltage amplitude command Vp-ac_amp1 is set to the amplitude command, so that the rectangular wave voltage command in which the voltage amplitude is the Vp-ac_amp1 is outputted to the p-axis superimposition AC voltage command Vp-ac* in Fig. 36 (e). After the given time has elapsed, the switching command SW1 is switched from the state 1 to the state 2, and the output of the p-axis superimposition AC voltage command Vp-ac* in Fig. 36(e) is brought to 0 once. Further, the switching command SW1 is switched from the state 2 to the state 3 where the second p-axis AC voltage amplitude command Vp-ac_amp2 different from the first p-axis AC voltage amplitude command Vp-ac_amp1 is set to the amplitude command, so that the rectangular wave voltage command in which the voltage amplitude is the Vp-ac_amp2 is outputted to the p-axis superimposition AC voltage command Vp-ac* in Fig. 36 (e). And, after the given time has elapsed, the switching command SW1 is switched from the state 3 to the state 2, and the output of the p-axis superimposition AC voltage command Vp-ac* in Fig. 36(e) is brought 0.

It should be noted that in this embodiment, the switching command SW2 in Fig. 36(b) is always in the state 2 where 0 is set to the amplitude command, so that the output of the z-axis superimposition AC voltage command Vz-ac* in Fig. 36(f) is brought to 0. Also, in this embodiment, the deviation amount $\Delta\theta$pd between the p-axis and dc-axis and the deviation amount $\Delta\theta$c between the d-axis and dc-axis are in the state of 0, and all the p-axis, the dc-axis, and the d-axis match.

In the second polarity determination indicated by "t2" in Fig. 36(h), the determination of the polarity of the magnetic pole is executed by the same procedure as the first polarity determination described above by using the first p-axis AC voltage amplitude command Vp-ac_amp1 and the second p-axis AC voltage amplitude command Vp-ac_amp2 adjusted by the amplitude command adjuster 715f.

Fig. 37(a) illustrates the inductance values Ldc1+, Ldc2+, Ldc1-, and Ldc2- and the amplitude command determination amount $\Delta$Pamp which are the calculation results at the completion of the second polarity determination. When as the result of the second magnetic pole polarity determination calculation, the amplitude command determination amount $\Delta$Pamp has not reached the target value, the amplitude command adjuster 715f adjusts the first p-axis AC voltage amplitude command Vp-ac_amp1 and the second p-axis AC voltage amplitude command Vp-ac_amp2 on the basis of the amplitude command determination amount $\Delta$Pamp. It should be noted that the target value of the amplitude command determination amount $\Delta$Pamp is, for example, the observation value of the inductance deviation amount to the extent that the determination of the polarity of the magnetic pole is precisely performed even when the current sensor and the like are affected by noise, and is set according to the sensitivity of the phase current detection unit 121 including the current sensor, the characteristic of the permanent magnet synchronous machine 103, and the like.

It should be noted that Fig. 37(b) illustrates the inductance values Ldc1+, Ldc2+, Ldc1-, and Ldc2- and the amplitude command determination amount $\Delta$Pamp which are the calculation results at the completion of the third polarity determination. Fig. 37(c) illustrates the calculation results at the completion of the fourth polarity determination, and Fig. 37(d) illustrates the calculation results at the completion of the fifth polarity determination.

In the case of, as illustrated in Figs. 37(a) to 37(d), the permanent magnet synchronous machine in which the d-axis inductance value Ld has the maximum point in the positive direction relative to the d-axis current id, the inductance value of the maximum point is captured, so that the amplitude command determination amount $\Delta$Pamp increases. At this time, when the desired target value of the amplitude command determination amount $\Delta$Pamp is the "first target value" indicated by (1) in Fig. 36(h), the value of the magnetic pole polarity correction phase $\theta$pn according to the result of the polarity determination is outputted to end the polarity determination. Also, the set value of each of the first p-axis AC voltage amplitude command Vp-ac_amp1 and the second p-axis AC voltage amplitude command Vp-ac_amp2 at this time is held, so that the amplitude of the superimposition voltage command is not required to be adjusted in the determination of the polarity of the magnet pole from the next time.

On the other hand, when the desired target value of the amplitude command determination amount ΔPamp is the "second target value" indicated by (2) in Fig. 36(h), the amplitude command adjuster 715f adjusts the first p-axis AC voltage amplitude command Vp-ac_amp1 and the second p-axis AC voltage amplitude command Vp-ac_amp2 on the basis of the amplitude command determination amount ΔPamp. In this way, in the sixth embodiment, this process is repeatedly executed like the third polarity determination indicated by "t3" in Fig. 36(h), the fourth polarity determination indicated by "t4" in Fig. 36(h), ... , so that the superimposition voltage command applied to the permanent magnet synchronous machine at determining the polarity of the magnetic pole can be adjusted to the voltage amplitude according to the desired S/N ratio.

It should be noted that this embodiment has been described by taking, as an example, the permanent magnet synchronous machine in which the d-axis inductance value Ld has the maximum point in the positive direction relative to the d-axis current id, but this embodiment is likewise applicable even to the permanent magnet synchronous machine in which the d-axis inductance value Ld monotonically decreases relative to the d-axis current id.

Therefore, in the sixth embodiment, even in the permanent magnet synchronous machine in which the magnetic saturation characteristic of the inductance is unknown, the target value of the amplitude command determination amount ΔPamp according to the desired S/N ratio is set to adjust the amplitude of the superimposition voltage command, so that the polarity determination can be achieved by the minimum current according to the noise environment of the magnetic saturation characteristic of the d-axis inductance of the permanent magnet synchronization to be targeted, the current sensor, and the like, whereby the higher efficiency and the noise reduction of the driving device for the permanent magnet synchronous machine can be made.

The sixth embodiment has been described above. For description, the sixth embodiment has been described by mainly taking, as an example, the configuration of the first embodiment, but the sixth embodiment is likewise applicable to the second and third embodiments.

Seventh Embodiment

In the fourth and fifth embodiments, for the DC voltage component superimposed at determining the polarity of the magnetic pole, the calculation result of the superimposition DC voltage command current-controlled on the basis of the previously set target current command value is used, whereas in a seventh embodiment, the target current command value of the current control which outputs the superimposition DC voltage command is adjusted such that one of the absolute value of an amount of change in the inductance relative to the change in current of positive value and the absolute value of an amount of change in the inductance relative to the change in current of negative value is a predetermined value or more at determining the polarity of the magnetic pole, so that it is possible to achieve the driving device for the permanent magnet synchronous machine which is less likely to be affected by the non-linear characteristic of the d-axis inductance, noise, and the like due to the magnetic saturation at determining the polarity of the magnetic pole, as compared with the fourth and fifth embodiments.

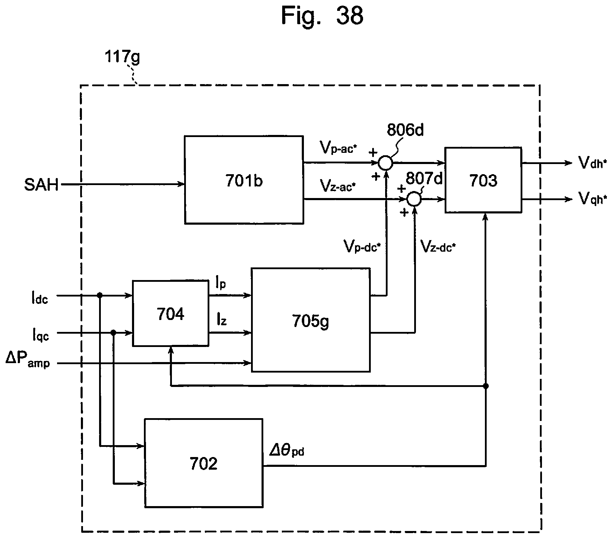

As compared with the sixth embodiment in Fig. 30, only the different portions of the components will be described below. Fig. 38 is a block diagram illustrating the configuration example of the superimposition voltage calculation unit of the seventh embodiment. The seventh embodiment can be achieved by using a superimposition voltage calculation unit 117g in place of the superimposition voltage calculation unit 117f of the sixth embodiment.

In Fig. 38, the superimposition voltage calculation unit 117g is provided with the AC voltage component application unit 701b, the superimposition voltage phase correction table 702, the dq coordinate conversion unit 703, the pz coordinate conversion unit 704d, a DC voltage component application unit 705g, and the adders 806d and 807d.

The DC voltage component application unit 705g calculates the p-axis superimposition DC voltage command Vp-dc* on the basis of the p-axis current detection value Ip outputted by the pz coordinate conversion unit 704d and the amplitude command determination amount ΔPamp outputted by the position and speed estimation calculation unit 112f, and outputs the p-axis superimposition DC voltage command Vp-dc* to the adder 806d. The DC voltage component application unit 705g calculates the z-axis superimposition DC voltage command Vz-dc* on the basis of the z-axis current detection value Iz outputted by the pz coordinate conversion unit 704d and the amplitude command determination amount ΔPamp outputted by the position and speed estimation calculation unit 112f, and outputs the z-axis superimposition DC voltage command Vz-dc* to the adder 807d.

It should be noted that the superimposition voltage calculation unit 117g has the same configuration as the superimposition voltage calculation unit 117d of the fourth embodiment, except for the DC voltage component application unit 705g.

Also, in the seventh embodiment, for the magnetic pole polarity determination unit 201f, the inductance calculation unit 210 is the same as the fourth embodiment, and other configuration is the same as the sixth embodiment.

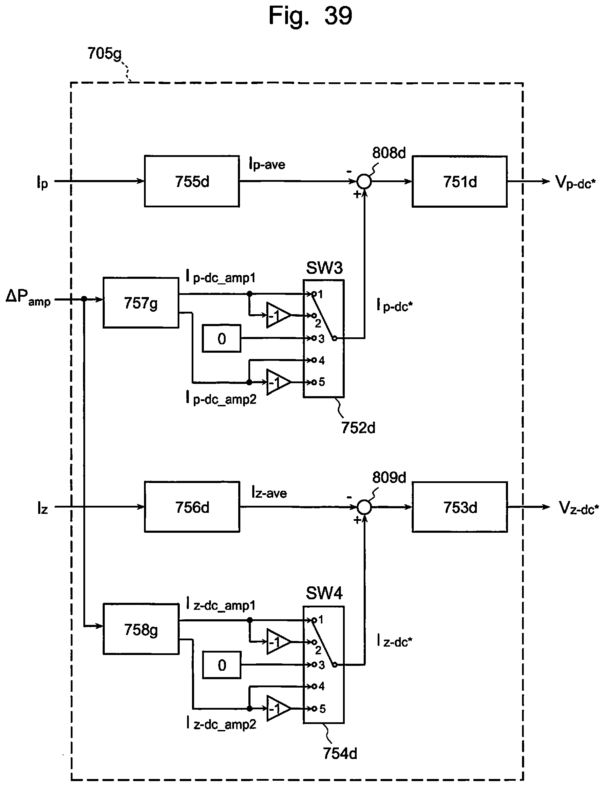

Fig. 39 is a block diagram illustrating the configuration example of the DC voltage component application unit of the seventh embodiment. As illustrated in Fig. 39, the DC voltage component application unit 705g is provided with the current controllers 751d and 753d, the switching device 752d which switches the target current command value of the current control, the switching device 754d which switches the target current command value of the current control, the moving average calculator 755d for removing the high frequency ripple component of the p-axis current detection value Ip, the moving average calculator 756d for removing the high frequency ripple component of the z-axis current detection value Iz, the subtractor 808d which outputs the deviation between the output value of the switching device 752d and the output value of the moving average calculator 755d, the subtractor 809d which outputs the deviation between the output value of the switching device 754d and the output value of the moving average calculator 756d, an amplitude command adjuster 757g which adjusts the target current command value of the current control, and an amplitude command adjuster 758g which adjusts the target current command value of the current control.

In the DC voltage component application unit 705, the amplitude command adjuster 757g adjusts the value of the first p-axis DC current amplitude command Ip-dc_amp1 and the value of the second p-axis DC current amplitude command Ip-dc_amp2 inputted to the switching device 752d on the basis of the amplitude command determination amount ∆Pamp outputted by the magnetic pole polarity determination amount calculator 218f. The amplitude command adjuster 758f adjusts the value of a first z-axis DC current amplitude command Iz-dc_amp1 and the value of a second z-axis DC current amplitude command Iz-dc_amp2 inputted to the switching device 754d on the basis of the amplitude command determination amount ∆Pamp outputted by the magnetic pole polarity determination amount calculator 218f.

The subtractor 808d receives, as an input, the deviation between the p-axis target current command value Ip-dc* of the current control outputted by the switching device 752d and the p-axis current detection moving average value Ip-ave outputted by the moving average calculator 755d, and outputs, as the p-axis superimposition AC voltage command Vp-ac*, the calculation result current-controlled by the current controller 751d. Also, the subtractor 808d receives, as an input, the deviation between the z-axis target current command value Iz-dc* of the current control outputted by the switching device 754d and the z-axis current detection moving average value Iz-ave outputted by the moving average calculator 756d, and outputs, as the z-axis superimposition DC voltage command Vz-dc*, the calculation result current-controlled by the current controller 753d.

It should be noted that in this embodiment, the moving average calculation is performed for removing the high frequency ripple component of each of the p-axis current detection value Ip and the z-axis current detection value Iz, but the calculation process using a first order delay filter, a band pass filter, and the like may be performed.

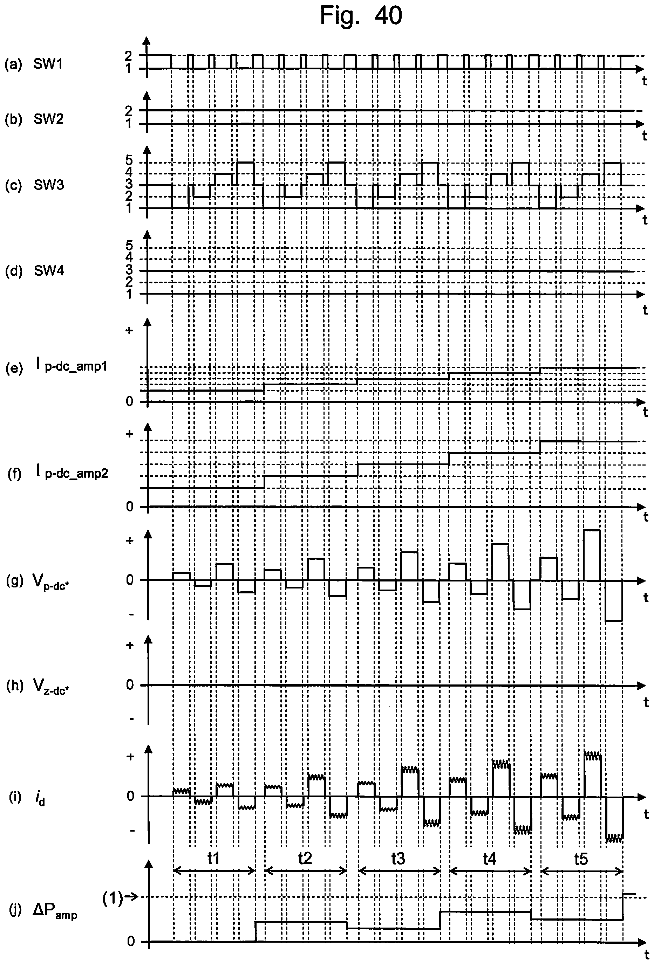

Figs. 40(a) to 40(j) are graphs illustrating the relationships between the SW operations and the output voltage waveforms of the superimposition voltage calculation unit and the amplitude command determination amount ∆Pamp outputted by the magnetic pole polarity determination amount calculator of the seventh embodiment. As the SW operation of the superimposition voltage calculation unit 117g, Fig. 40(a) illustrates the switching example of the switching command SW1 of the switching device 712b of the AC voltage component application unit 701b. Fig. 40(b) illustrates the switching example of the switching command SW2 of the switching device 714b of the AC voltage component application unit 701b. Fig. 40(c) illustrates the switching example of the switching command SW3 of the switching device 752d of the DC voltage component application unit 705g. Fig. 40(d) illustrates the switching example of the switching command SW4 of the switching device 754d of the DC voltage component application unit 705g. Fig. 40(e) illustrates the waveform example of the first p-axis DC current amplitude command Ip-dc_amp1 outputted by the amplitude command adjuster 757g of the DC voltage component application unit 705g. Fig. 40(f) illustrates the waveform example of the second p-axis DC current amplitude command Ip-dc_amp2 outputted by the amplitude command adjuster 757g of the DC voltage component application unit 705g. Fig. 40(g) illustrates the waveform example of the p-axis superimposition DC voltage command Vp-dc* outputted by the current controller 751d of the DC voltage component application unit 705g. Fig. 40 (h) illustrates the waveform example of the z-axis superimposition DC voltage command Vz-dc* outputted by the current controller 753d of the DC voltage component application unit 705g. Fig. 40(i) illustrates the waveform example of the d-axis current id flowing through the permanent magnet synchronous machine 103 at determining the polarity of the magnetic pole of the seventh embodiment. Fig. 40(j) illustrates the waveform example of the amplitude command determination amount ∆Pamp outputted by the switching device 284f of the magnetic pole polarity determination amount calculator 218f.

Referring to Figs. 40(a) to 40(j), the operation of the superimposition voltage command amplitude adjustment of the determination of the polarity of the magnetic pole of the seventh embodiment will be described. In the superimposition voltage calculation unit 117g, the AC waveform generator 711 of the AC voltage component application unit 701b calculates the p-axis AC voltage waveform Sp-ac* on the basis of the current detection timing setting signal SAH outputted by the PWM signal controller 115, and operates the switching state of the switching device 712b, thereby controlling the p-axis superimposition AC voltage command Vp-ac*. In the superimposition voltage calculation unit 117g, the AC waveform generator 713 of the AC voltage component application unit 701b calculates the z-axis Sz-ac* on the basis of the current detection timing setting signal SAH outputted by the PWM signal controller 115, and operates the switching state of the switching device 714b, thereby controlling the z-axis superimposition AC voltage command Vz-ac*.

In Figs. 40(a) to 40(j), the switching command SW1 of the switching device 712b in Fig. 40 (a) is switched from the state 2 where 0 is set to the amplitude command, to the state 1 where the p-axis AC voltage amplitude command Vp-ac_amp is set to the amplitude command, so that the rectangular wave voltage command in which the voltage amplitude is the Vp-ac_amp is outputted to the p-axis superimposition AC voltage command Vp-ac*. After the given time has elapsed, the switching command SW1 is switched from the state 1 to the state 2, and the output of the p-axis superimposition AC voltage command Vp-ac* is brought to 0.

It should be noted that in this embodiment, the switching command SW2 of the switching device 714b in Fig. 40(b) is always in the state 2 where 0 is set to the amplitude command, so that the output of the z-axis superimposition AC voltage command Vz-ac* is brought to 0.

Also, in the DC voltage component application unit 705g, the amplitude command adjuster 757g calculates the first p-axis DC current amplitude command Ip-dc_amp1 and the second p-axis DC current amplitude command Ip-dc_amp2 on the basis of the amplitude command determination amount ΔPamp outputted by the switching device 284f of the magnetic pole polarity determination amount calculator 218f, and outputs the first p-axis DC current amplitude command Ip-dc_amp1 and the second p-axis DC current amplitude command Ip-dc_amp2 to the switching device 712b. In the DC voltage component application unit 705g, the amplitude command adjuster 758g calculates the first z-axis DC current amplitude command Iz-dc_amp1 and the second z-axis DC current amplitude command Iz-dc_amp2 on the basis of the amplitude command determination amount ΔPamp outputted by the switching device 284f of the magnetic pole polarity determination amount calculator 218f, and outputs the first z-axis DC current amplitude command Iz-dc_amp1 and the second z-axis DC current amplitude command Iz-dc_amp2 to the switching device 714b. Further, the DC voltage component application unit 705g operates the switching states of the switching devices 752d and 754d, and changes the output of at least one of the p-axis target current command value Ip-dc* and the z-axis target current command value Iz-dc* of the current control, thereby controlling the p-axis superimposition DC voltage command Vp-dc* outputted from the current controller 751d and the z-axis superimposition DC voltage command Vz-dc* outputted from the current controller 753d.

In Figs. 40(a) to 40(j), in the first polarity determination indicated by "t1" in Fig. 40(j), the switching command SW3 of the switching device 752d in Fig. 40 (c) is switched from the state 3 where 0 is set to the target current command value, to the state 1 where the first p-axis DC current amplitude command Ip-dc_amp1 is set to the target current command, so that the calculation result of the p-axis current control in which the target current command is the Ip-dc_amp1 is outputted to the p-axis superimposition DC voltage command Vp-dc* in Fig. 40 (g). After the given time has elapsed, the switching command SW3 is switched from the state 1 to the state 3, and the calculation result of the p-axis current control in which the target current command is 0 is outputted to the p-axis superimposition DC voltage command Vp-dc* in Fig. 40(g).

Further, the switching command SW3 is switched from the state 3 to the state 2 where the value obtained by inverting the sign of the first p-axis DC current amplitude command Ip-dc_amp1 is set to the target current command, so that the calculation result of the p-axis current control in which the target current command is the -1×Ip-dc_amp1 is outputted to the p-axis superimposition DC voltage command Vp-dc* in Fig. 40(g). After the given time has elapsed, the switching command SW3 is switched from the state 2 to the state 3, and the calculation result of the p-axis current control in which the target current command is 0 is outputted to the p-axis superimposition DC voltage command Vp-dc* in Fig. 40(g).

Further, the switching command SW3 is switched from the state 3 to the state 4 where the second p-axis DC current amplitude command Ip-dc_amp2 is set to the target current command, so that the calculation result of the p-axis current control in which the target current command is the Ip-dc_amp2 is outputted to the p-axis superimposition DC voltage command Vp-dc* in Fig. 40(g). After the given time has elapsed, the switching command SW3 is switched from the state 1 to the state 3, and the calculation result of the p-axis current control in which the target current command is 0 is outputted to the p-axis superimposition DC voltage command Vp-dc* in Fig. 40(g) .

Further, the switching command SW3 is switched from the state 3 to the state 5 where the value obtained by inverting the sign of the second p-axis DC current amplitude command Ip-dc_amp2 is set to the target current command, so that the calculation result of the p-axis current control in which the target current command is the -1×Ip-dc_amp2 is outputted to the p-axis superimposition DC voltage command Vp-dc* in Fig. 40(g). After the given time has elapsed, the switching command SW3 is switched from the state 5 to the state 3, and the calculation result of the p-axis current control in which the target current command is 0 is outputted to the p-axis superimposition DC voltage command Vp-dc* in Fig. 40(g).

It should be noted that in this embodiment, the switching command SW4 of the switching device 754b in Fig. 40(f) is always in the state 3 where 0 is set to the target current command of the current control, so that the calculation result of the z-axis current control in which the target current command is 0 is outputted to the z-axis superimposition DC voltage command Vz-dc* in Fig. 40(h). The dq coordinate conversion unit 703 converts the superimposition voltage command on the pz-axis coordinate system in which the p-axis superimposition DC voltage command Vp-dc* and the p-axis superimposition AC voltage command Vp-ac* are synthesized, to the dc-axis superimposition voltage command value Vdh* on the basis of the deviation amount Δθpd between the p-axis and the dc-axis outputted by the superimposition voltage phase correction table 702, and outputs the dc-axis superimposition voltage command value Vdh*. The dq coordinate conversion unit 703 converts the superimposition voltage command on the pz-axis coordinate system in which the z-axis superimposition DC voltage command Vz-dc* and the z-axis superimposition AC voltage command Vz-ac* are synthesized, to the qc-axis superimposition voltage command value Vqh* on the basis of the deviation amount $\Delta\theta$pd between the p-axis and the dc-axis outputted by the superimposition voltage phase correction table 702, and outputs the qc-axis superimposition voltage command value Vqh*. Also, in this embodiment, the deviation amount $\Delta\theta$pd between the p-axis and the dc-axis and the deviation amount $\Delta\theta$c between the d-axis and the dc-axis are in the state of 0, and all the p-axis, the dc-axis, and the d-axis match.

As the result of the first magnetic pole polarity determination calculation, when as illustrated in Fig. 40(h), the amplitude command determination amount $\Delta$Pamp is less than the "target value" indicated by (1) in Fig. 40(j), the amplitude command adjuster 757g adjusts the first p-axis DC current amplitude command Ip-dc_amp1 and the second p-axis DC current amplitude command Ip-dc_amp2 on the basis of the amplitude command determination amount $\Delta$Pamp. Until the amplitude command determination amount $\Delta$Pamp reaches the "predetermined target value", the second polarity determination indicated by "t2" in Fig. 40(j), the third polarity determination indicated by "t3" in Fig. 40(j), ... are executed. It should be noted that the target value of the amplitude command determination amount $\Delta$Pamp is, for example, the observation value of the inductance deviation amount to the extent that the determination of the polarity of the magnetic pole is precisely performed even when the current sensor and the like are affected by noise.

In this way, in the seventh embodiment, this process is repeatedly executed, so that the d-axis current flowing through the permanent magnet synchronous machine at determining the polarity of the magnetic pole can be adjusted to the current amplitude according to the desired S/N ratio.

It should be noted that this embodiment has been described by taking, as an example, the permanent magnet synchronous machine in which the d-axis inductance value Ld has the maximum point in the positive direction relative to the d-axis current id, but this embodiment is likewise applicable even to the permanent magnet synchronous machine in which the d-axis inductance value Ld monotonically decreases relative to the d-axis current id.

Therefore, in the seventh embodiment, even in the permanent magnet synchronous machine in which the magnetic saturation characteristic of the inductance is unknown, the target value of the amplitude command determination amount $\Delta$Pamp according to the desired S/N ratio is set to control the superimposition voltage command, so that the polarity determination is enabled by the minimum current according to the noise environment of the magnetic saturation characteristic of the d-axis inductance of the permanent magnet synchronization to be targeted, the current sensor, and the like, whereby the higher efficiency and the noise reduction of the driving device for the permanent magnet synchronous machine can be made.

The seventh embodiment has been described above. For description, the seventh embodiment has been described by mainly taking, as an example, the configuration of the sixth embodiment, but the seventh embodiment is likewise applicable to the fourth and fifth embodiments.

Eighth Embodiment

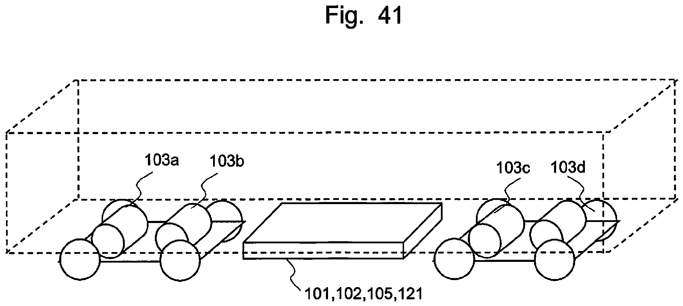

Fig. 41 is a diagram illustrating the configuration example of the outline of part of a railway vehicle of an eighth embodiment on which the driving device for the permanent magnet synchronous machine of any one of the first to seventh embodiments is mounted. For example, the railway vehicle has a truck on which permanent magnet synchronous machines 103a and 103b are mounted, and a truck on which permanent magnet synchronous machines 103c and 103d are mounted. Also, on the railway vehicle, the driving device for the permanent magnet synchronous machine including the controller 101, the power converter 102, the command generator 105, and the phase current detection unit 121 are mounted. The railway vehicle drives the permanent magnet synchronous machine 103 by converting the power supplied from an overhead contact line via a current collector to the AC power by the power converter 102 according to the torque command value Tm* generated by the command generator 105 on the basis of the operation command inputted via a master controller by a driver and by supplying the AC power to the permanent magnet synchronous machine 103. The permanent magnet synchronous machine 103 is coupled to the axel of the railway vehicle, and the running of the railway vehicle is controlled by the permanent magnet synchronous machine 103. In the eighth embodiment, the first to seventh embodiments are applied to the railway vehicle, so that it is possible to achieve the railway vehicle which can execute the determination of the polarity of the magnetic pole of the permanent magnet synchronous machine which is operated by the smaller current and causes less noise at the start of the driving device.

It should be noted that the power converter 102 according to the above embodiments has been described by taking, as an example, the three-phase full bridge voltage type two-level converter, but the method of determining the polarity of the magnetic pole of the permanent magnet synchronous machine is based on the amount of change in the inductance calculated from the change in the current flowing through the permanent magnet synchronous machine, and is not based on the configuration of the power converter for flowing the current through the permanent magnet synchronous machine and the control method, so that such a method is likewise applicable to power converters of various types, such as a three-level converter, a multi-level converter, and a current type power converter.

The above embodiments have described the present invention by taking, as an example, the driving device for the permanent magnet synchronous machine, but the present invention is widely applicable to the synchronous machine including an electric generator. For example, in a wind power generation system, a hydraulic power generation system, and the like, the permanent magnet synchronous electric generator receives mechanical energy, the rotational shaft of the permanent magnet synchronous electric generator is rotated to create electric energy between motor terminals, and the electric generation energy is controlled by the power converter. Considering that the present invention is applied to the electric generator system, such application is simply different, on the basis of the idea of the energy flow, from the control device which uses the power converter described in the above embodiments to give the electric energy supplied from the power supply to the permanent magnet synchronous machine, thereby converting the electric energy to the mechanical energy. Therefore, when the permanent magnet synchronous electric generator is started by using the power converter from the stop state or the extremely low speed operation state, the means for determining the polarity of the magnetic pole of the permanent magnet synchronous electric generator is likewise required. Also, the engine electric generator system sometimes uses the electric generator as a motor for starting the engine (starter motor), and by applying the means for determining the polarity of the magnetic pole of the present invention when the power converter is controlled to start the permanent magnet synchronous electric generator, it is possible to achieve the start of the engine electric generator system which is operated by the smaller current and causes less noise.

It should be noted that the present invention is not limited to the above embodiments, and includes various modification examples. For example, the above embodiments have simply described the present invention, and are not necessarily provided with all the described configurations. Further, part of the configuration of one of the embodiments can be replaced by the configurations of other embodiments, and the configuration of one of the embodiments can be added with the configurations of other embodiments. Also, part of the configuration of each of the embodiments can be added, deleted, and replaced with respect to other configurations. Also, the respective configurations and the respective processes illustrated in the above embodiments and modification examples may be integrated, separated, or replaced in the processing order according to the mounting form and the processing efficiency, as needed. Also, for example, the above embodiments and modification examples may be combined in part or in whole to the extent they are not contradictory.

List of Reference Signs

    101 controller
    102 power converter
    103, 103a, 103b, 103c, 103d permanent magnet synchronous machine
    105 command generator
    111 vector control unit
    112, 112f position and speed estimation calculation unit
    113 three-phase coordinate conversion unit
    114, 703 dq coordinate conversion unit
    115 PWM signal controller
    116 current detection unit
    117, 117d, 117e, 117f, 117g superimposition voltage calculation unit
    121 phase current detection unit
    132 main circuit
    133 gate driver
    201, 201c, 201e, 201f magnetic pole polarity determination unit
    202 axis error estimation calculation unit
    203 speed estimation calculation unit
    204 position estimation calculation unit
    210, 210c, 210e inductance calculation unit
    211 first inductance calculation unit
    212 second inductance calculation unit
    212c inductance calculation unit on current positive side
    213 third inductance calculation unit
    214 fourth inductance calculation unit
    214e inductance calculation unit on current negative side
    215, 215c, 215e polarity determination and inversion processing unit

216c reference inductance output unit

217e reference inductance calculation unit

218f magnetic pole polarity determination amount calculator

281f, 282f absolute value calculation unit

283f comparator

284f, 712, 712b, 714, 714b, 752d, 752e, 754b, 754d, 754e switching device

701, 701b, 701f AC voltage component application unit

702 superimposition voltage phase correction table

703 dq coordinate conversion unit

704d pz coordinate conversion unit

705, 705d, 705e, 705g DC voltage component application unit

711, 713 AC waveform generator

715f, 716f, 757g, 758f amplitude command adjuster

751d, 753d current controller

755d, 756d moving average calculator

801, 802, 803, 806d, 807d adder

804, 804b, 805, 805b multiplier

808d, 809d, 810f, 811f subtractor

**Claims**

1. A permanent magnet synchronous machine control device, comprising: a power converter which controls a permanent magnet synchronous machine; and a controller which controls the power converter,
wherein the controller includes:

   a voltage command generation unit which generates a voltage command for causing a desired current to flow through the permanent magnet synchronous machine;
   a current detection unit which detects a current that flows through the permanent magnet synchronous machine when the voltage command has been applied; and
   a magnetic pole position estimation unit which, on the basis of the current detected by the current detection unit, estimates the magnetic pole position of the permanent magnet synchronous machine, and
   wherein the magnetic pole position estimation unit is provided with a polarity determination unit which determines the polarity of a magnetic pole of the permanent magnet synchronous machine on the basis of the absolute value of an amount of change in the inductance value of the permanent magnet synchronous machine relative to an amount of change in the current detected by the current detection unit.

2. The permanent magnet synchronous machine control device according to claim 1,
wherein, among at least two or more current values of the current in a magnetic pole direction which has flowed through the permanent magnet synchronous machine when the voltage command has been applied so as to change the current in the magnetic pole direction of the permanent magnet synchronous machine, the polarity determination unit calculates a first inductance value of the permanent magnet synchronous machine from a first positive current value, calculates a second inductance value of the permanent magnet synchronous machine from a second positive current value, calculates a third inductance value of the permanent magnet synchronous machine from a first negative current value, and calculates a fourth inductance value of the permanent magnet synchronous machine from a second negative current value, and
wherein the polarity determination unit determines the polarity of the magnetic pole of the permanent magnet synchronous machine by large-and-small comparing the absolute value of the deviation between the first inductance value and the second inductance value and the absolute value of the deviation between the third inductance value and the fourth inductance value.

3. The permanent magnet synchronous machine control device according to claim 1,
wherein, among at least one or more current values of the current in the magnetic pole direction which has flowed through the permanent magnet synchronous machine when the voltage command has been applied so as to change the current in the magnetic pole direction of the permanent magnet synchronous machine, the polarity determination unit calculates a first inductance value of the permanent magnet synchronous machine from a positive current value, and calculates a second inductance value of the permanent magnet synchronous machine from a negative current value, and

wherein the polarity determination unit determines the polarity of the magnetic pole of the permanent magnet synchronous machine by large-and-small comparing the absolute value of the deviation between the first inductance value and a predetermined reference inductance value and the absolute value of the deviation between the second inductance value and the predetermined reference inductance value.

4. The permanent magnet synchronous machine control device according to claim 3,
wherein the predetermined reference inductance value is the design value of the d-axis inductance at no load in the permanent magnet synchronous machine.

5. The permanent magnet synchronous machine control device according to claim 3,
wherein the predetermined reference inductance value is a value previously identifying the d-axis inductance value of the permanent magnet synchronous machine.

6. The permanent magnet synchronous machine control device according to claim 1,
wherein the voltage command generation unit is provided with an AC voltage component application unit which outputs an AC voltage component application command for applying an AC voltage component in the magnetic pole direction of the permanent magnet synchronous machine, and
wherein the polarity of the magnetic pole of the permanent magnet synchronous machine is determined on the basis of the absolute value of an amount of change in the inductance value relative to an amount of change in the current in the magnetic pole direction of the permanent magnet synchronous machine by the application of the AC voltage component.

7. The permanent magnet synchronous machine control device according to claim 6,
wherein the AC voltage component application unit outputs the AC voltage component application command for applying at least two or more AC voltage components having different amplitudes in the magnetic pole direction of the permanent magnet synchronous machine.

8. The permanent magnet synchronous machine control device according to claim 1,
wherein the voltage command generation unit includes:

a DC voltage component application unit which outputs a DC voltage component application command for applying a DC voltage component in the magnetic pole direction of the permanent magnet synchronous machine; and
an AC voltage component application unit which outputs an AC voltage component application command for applying an AC voltage component in the magnetic pole direction of the permanent magnet synchronous machine, and
wherein by changing at least one of the DC voltage component and the AC voltage component, the polarity of the magnetic pole of the permanent magnet synchronous machine is determined on the basis of the absolute value of an amount of change in the inductance value relative to an amount of change in the current in the magnetic pole direction of the permanent magnet synchronous machine by the application of a synthesizing voltage in which an AC is superimposed on a DC.

9. The permanent magnet synchronous machine control device according to claim 8,
wherein the DC voltage component application unit outputs the DC voltage component application command for applying at least two or more DC voltage components having different amplitudes in the magnetic pole direction of the permanent magnet synchronous machine.

10. The permanent magnet synchronous machine control device according to claim 8 or 9,
wherein the voltage command generation unit adjusts the DC voltage component application command or the AC voltage component application command such that the absolute value of an amount of change in the inductance value is a predetermined value or more.

11. The permanent magnet synchronous machine control device according to any one of claims 1 to 10,
wherein the permanent magnet synchronous control device controls the driving of the permanent magnet synchronous machine, and/or controls the electric generation of the permanent magnet synchronous machine.

12. An electric vehicle comprising the permanent magnet synchronous machine control device according to any one of claims 1 to 11.

13. A method of determining the polarity of a magnetic pole of a permanent magnet synchronous machine executed by a permanent magnet synchronous machine control device which has a power converter which controls the permanent magnet synchronous machine, and a controller which controls the power converter,

wherein the controller detects a current which flows through the permanent magnet synchronous machine when a voltage command for causing a desired current to flow through the permanent magnet synchronous machine has been applied,

wherein the controller estimates the magnetic pole position of the permanent magnet synchronous machine on the basis of the detected current, and

wherein the controller determines the polarity of the magnetic pole of the permanent magnet synchronous machine on the basis of the absolute value of an amount of change in the inductance value of the permanent magnet synchronous machine relative to an amount of change in the detected current.

14. The method according to claim 13,

wherein the permanent magnet synchronous control device controls the driving of the permanent magnet synchronous machine, and/or controls the electric generation of the permanent magnet synchronous machine.

# Fig. 1

# Fig. 2

# Fig. 3

# Fig. 4

# Fig. 5

# Fig. 6

## Fig. 7

(a) SAH

(b) $S_{p\text{-}ac^*}$

(c) $S_{z\text{-}ac^*}$

(d) SW1

(e) SW2

(f) $V_{p\text{-}ac^*}$

$V_{p\text{-}ac\_amp1}$

$V_{p\text{-}ac\_amp2}$

(g) $V_{z\text{-}ac^*}$

(h) $i_d$

# Fig. 8

(a) $V_{p\text{-}ac^*}$

(b) $V_{z\text{-}ac^*}$

(c) $\Delta\theta_{pd}$

(d) $V_{dh^*}$

(e) $V_{qh^*}$

(f) $i_d$

Fig. 9

Fig. 10

# Fig. 11

# Fig. 12

# Fig. 13

(a) $V_{p\text{-}ac^*}$    [p.u.]

(b) $I_{dc}$    [p.u.]

(c) $L_{dc\text{-}clc}$    [p.u.]

(d) $\Delta PF2$    [−]

(e) $\theta_d$, $\theta_{dc}$    [deg]

$\theta_d = 105\text{deg}$

$\theta_{dc}$

simulation time [s]

# Fig. 14

# Fig. 15

(a) SAH

(b) $S_{p-ac^*}$

(c) $S_{z-ac^*}$

(d) SW1

(e) SW2

(f) $V_{p-ac^*}$

$V_{p-ac\_amp}$

(g) $V_{z-ac^*}$

(h) $i_d$

# Fig. 16

# Fig. 17

# Fig. 18

(a) $V_{p\text{-}ac^*}$

(b) $V_{z\text{-}ac^*}$

(c) $\Delta\theta_{pd}$

(d) $V_{dh^*}$

(e) $V_{qh^*}$

(f) $i_d$

# Fig. 19

# Fig. 20

# Fig. 21

## Fig. 22

# Fig. 23

# Fig. 24

# Fig. 25

# Fig. 26

# Fig. 27

# Fig. 28

(a) $V_{p\text{-}ac^*}$

(b) $V_{z\text{-}ac^*}$

(c) $V_{p\text{-}dc^*}$

(d) $V_{z\text{-}dc^*}$

(e) $\Delta\theta_{pd}$

(f) $V_{dh^*}$

(g) $V_{qh^*}$

(h) $i_d$

$I_{dc0+}$

$I_{dc0-}$

$I_{dc1+}$

$I_{dc2+}$

$I_{dc2-}$

$I_{dc1-}$

# Fig. 29

(a) SW1

(b) SW2

(c) $V_{p\text{-}ac^*}$

(d) $V_{z\text{-}ac^*}$

(e) SW3

(f) SW4

(g) $V_{p\text{-}dc^*}$

(h) $V_{z\text{-}dc^*}$

(i) $i_d$

$I_{p\text{-}dc\_amp}$

$-I_{p\text{-}dc\_amp}$

# Fig. 30

# Fig. 31

# Fig. 32

## Fig. 33

# Fig. 34

117f

SAH ——————→ | 701f | $V_{p\text{-}ac^*}$ → | 703 | ——→ $V_{dh^*}$

$\Delta P_{amp}$ ——————→ $V_{z\text{-}ac^*}$ → $V_{qh^*}$

$I_{dc}$ ——————→ | 702 | $\Delta\theta_{pd}$

$I_{qc}$ ——————→

# Fig. 35

# Fig. 36

# Fig. 37

(a)

(b)

(c)

(d)

# Fig. 38

# Fig. 39

# Fig. 40

Fig. 41

103a    103b                    103c    103d

101,102,105,121

## INTERNATIONAL SEARCH REPORT

| International application No. |
| --- |
| PCT/JP2019/026739 |

**A. CLASSIFICATION OF SUBJECT MATTER**
Int.Cl. H02P6/185(2016.01)i

According to International Patent Classification (IPC) or to both national classification and IPC

**B. FIELDS SEARCHED**

Minimum documentation searched (classification system followed by classification symbols)
Int.Cl. H02P6/185

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2014-11822 A (TOSHIBA CORP.) 20 January 2014, paragraphs [0005], [0007]-[0015], fig. 1 & US 2014/0009147 A1, paragraphs [0028]-[0043] & EP 2869457 A1 & CN 104145417 A & KR 10-2014-0121863 A | 1, 6-7, 11-14<br>2-5, 8-10 |
| Y<br>A | JP 2010-220416 A (ASMO CO., LTD.) 30 September 2010, paragraphs [0074]-[0118] (Family: none) | 1, 6-7, 11-14<br>2-5, 8-10 |

☒ Further documents are listed in the continuation of Box C.　　☐ See patent family annex.

| | |
| --- | --- |
| *　　Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30 August 2019 (30.08.2019) | 10 September 2019 (10.09.2019) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**INTERNATIONAL SEARCH REPORT**

International application No.

PCT/JP2019/026739

C (Continuation). DOCUMENTS CONSIDERED TO BE RELEVANT

| Category* | Citation of document, with indication, where appropriate, of the relevant passages | Relevant to claim No. |
|---|---|---|
| A | WO 2014/002804 A1 (TOSHIBA CORP.) 03 January 2014, entire text, all drawings & US 2014/0009147 A1, entire text, all drawings & EP 2869457 A1 & CN 104145417 A & KR 10-2014-0121863 A | 1-14 |
| A | JP 2015-15830 A (TOSHIBA ELEVATOR AND BUILDING SYSTEMS CORPORATION) 22 January 2015, entire text, all drawings (Family: none) | 1-14 |
| A | WO 2016/038992 A1 (MITSUBISHI ELECTRIC CORP.) 17 March 2016, entire text, all drawings & US 2017/0201200 A1, entire text, all drawings | 1-14 |

Form PCT/ISA/210 (continuation of second sheet) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008079489 A
- JP 5976421 B
- WO 5351859 A

**Non-patent literature cited in the description**

- *The transactions of the Institute of Electrical Engineers of Japan. D,* vol. 24 (11